# EUROPEAN PATENT APPLICATION

(11) **EP 4 525 387 A1**
(43) Date of publication of application: **19.03.2025**
(21) Application number: 24200227.7
(22) Date of filing: 13.09.2024
(51) Int. Cl.: H04L 41/0654, H04L 41/0894, H04L 41/0897, H04L 43/065, H04L 43/0852, H04L 43/0864, H04L 41/16

(54) **METHODS AND DEVICES FOR OPERATION IN NEXT GENERATION CLOUDS**

(30) Priority: 13.09.2023 US 202363582468 P; 13.09.2023 US 202363582496 P
(71) Applicant: INTEL Corporation, Santa Clara, CA 95054 (US)
(72) Inventor: YAO, Yizhi, Chandler (US)
(74) Representative: Viering, Jentschura & Partner mbB Patent- und Rechtsanwälte

(57) **Abstract**

A computer-readable medium may include instructions to cause an electronic device of a distributed cloud and communication system, upon execution of the instructions by one or more processors of the electronic device, to: monitor a performance of communication and computing aspects of the distributed cloud and communication system; and perform, based on the performance of communication and computing aspects of the distributed cloud and communication system, at least one of a scaling of resources for the communication and computing aspects for a workload instance and/or a healing of the workload instance.

## Description

### TECHNICAL FIELD

Various embodiments generally may relate to the field of wireless communications.

### BACKGROUND

Artificial intelligence and/or machine learning (AI/ML) techniques and relevant applications are being increasingly adopted by the wider industries and have proved to be successful. These are now being applied to the telecommunication industry including mobile networks. Although AI/ML techniques in general are quite mature nowadays, some of the relevant aspects of the technology are still evolving while new complementary techniques are frequently emerging.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an example 6G wide-area cloud, in accordance with one or more example embodiments of the present disclosure.
FIG. 2 shows an example workload deployment in 6G wide area cloud.
FIG. 3 depicts an example network architecture, in accordance with one or more example embodiments of the present disclosure.
FIG. 4 illustrates an example wireless network, in accordance with one or more example embodiments of the present disclosure.
FIG. 5 illustrates components capable of reading instructions from a machine-readable or computer-readable medium.
FIG. 6 illustrates an example cellular network in accordance with some examples.
FIG. 7 shows example network deployments, in accordance with one or more example embodiments of the present disclosure.
FIG. 8 depicts an example of management services (MnS) deployment, in accordance with one or more example embodiments of the present disclosure.
FIG. 9 shows an example framework of provisioning MnS.
FIG. 10 depicts an example functional framework 1000 for ML and/or RAN intelligence.
FIG. 11 depicts an example AI/ML-assisted communication network.
FIG. 12 illustrates an example neural network (NN).
FIG. 13 shows an example reinforcement learning (RL) architecture.
FIG. 14 shows an example process in accordance with one or more examples.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

### 1. WORKLOAD DEPLOYMENT ASPECTS

Some aspects of the present disclosure may generally be related to wireless communication, cellular networks, cloud computing, edge computing, cloud computing, data centers, network topologies, communication system implementations, network convergence, artificial intelligence (AI)/machine learning (ML) technologies, and in particular, to technologies for workload deployments in next-generation clouds.

The evolution of cloud in sixth generation (6G) is expected to be based on distributed computing technologies, and the convergence of communication, computing, and data services. The distributed computing (or distributed cloud) includes deployments that are distributed across devices, on-premises, cell sites, edge sites, regional sites, core sites, and one or more (centralized) data centers. This distributed and ubiquitous computing allows the processing of data closer to the source to achieve ultra-low latency, reduction of the end-to-end data transmission, and utilization of specialized compute resources for specific workloads. Both the network functions (NFs) and the applications can be running on the cloud, and they can be orchestrated and controlled jointly to offer the unique capability of meeting the requirements for both communication and computing perspectives jointly, without neglecting or sacrificing one another.

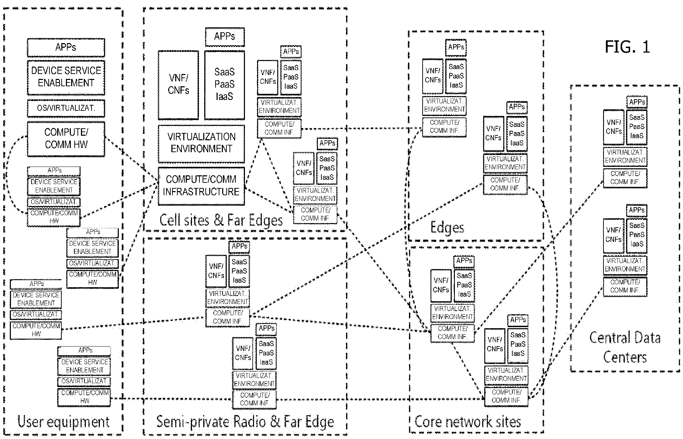

6G is expect to include a further evolution of distributed cloud and communications systems, where 6G systems will provide a wide-area cloud with ubiquitous computing across and among devices, network nodes and data centers. An example of such a wide-area cloud is shown by FIG. 1.

The evolution of cloud in sixth generation (6G) wireless networks may include one or more of the following aspects:
1) distributed - across devices, on-premises, cell sites, edge sites, core sites, and central data centers. This distributed and ubiquitous computing allows the processing of data closer to the source to achieve ultra-low latency, reduction of the end-to-end data transmission, and utilization of specialized compute resources for specific workloads.
2) convergence of communication, computing, and data services [8]. Both the network functions and the applications can be running on the cloud, and they can be orchestrated and controlled jointly to offer the unique capability of meeting the requirements for both communication and computing perspectives jointly, without neglecting or sacrificing one another.

FIG. 1 shows an example 6G wide-area cloud (also referred to as a "distributed cloud and communications system" or simply a "distributed cloud"), which includes UEs with a unique cloud and communications stack, cell sites with far-edge capabilities and a facility cloud and communications stack, semi-private radio sites (e.g., homes, offices, factories, other enterprises) with far-edge capabilities on a facility stack that may home to core sites (possibly more than one), and can potentially operate without connection to the core sites as needed, edge sites (also referred to as "edge clouds") with facility stacks, core sites (also referred to as "core clouds") with facility stacks, and central data centers with facility stacks extending communication services to the data center end points, thus permitting end-to-end QoS and service feature guarantees.

Mechanisms for workload distribution and deployment among the various resources in the 6G wide-area cloud will enable a continuum of services and satisfy related Quality of Service (QoS) needs. As discussed in more detail infra, a cloud management and orchestration system may be included in the 6G distributed cloud to manage and allocate resources to workloads, taking into account both resource and communication requirements.

The 6G distributed cloud is expected to provide communication, computing, and data services. This contrasts with prior generations, which primarily provide communication services. The communication, computing, and data services can be provided in forms of infrastructure service (e.g., containerized communication-computing-data infrastructure), platform service (e.g., platform services for scaling out computing across mobile devices and network compute), and software services (e.g., data analytics services). The 6G system needs to be designed with the capability of providing those various forms of services (e.g., Everything as a Service (XaaS)). A computing service plane and a data service plane are expected to be introduced in 6G systems in addition to the communication service plane. The 6G distributed cloud may also cause the development of new service subscription models. Subscribers to 6G XaaS are anticipated to include mobile users, mobile device vendors, application providers, cloud-service providers, and/or the like.

The UEs may be the same or similar as the UEs 302, 402, 702, 602. The cell sites and/or semi-private radio sites are locations where RF and/or antenna elements are physically deployed. For example, a cell site includes one or multiple RUs 730, NANs 314, NAN 404, and/or the like, which may allow individual cell sites to support and/or cover multiple sectors. In some examples, the semi-private radio sites may include APs 306, microcell NANs, picocell NANs, femtocell NANs, gateways, hubs, switches, and/or other network elements.

The edge sites (also referred to as "edge clouds") include various computing infrastructure (e.g., one or more edge compute nodes and/or the like) that is/are deployed closer to the location where data is being generated, processed, and/or consumed (e.g., at the "edge" of a network). These edge compute nodes may implement any suitable edge computing technology (ECT) and/or edge computing framework, such as any of those discussed herein. Additionally or alternatively, an edge cloud is a location and/or a collection of compute infrastructure (e.g., cloud resource pools and/or the like) that supports virtualized RAN (vRAN) functions for one or multiple cell sites, and provides centralization of RAN functions for those sites and associated economies of scale. An edge cloud might serve a large physical area or a relatively small area that is relatively close to its cell sites, depending on implementation and/or use case.

Although not shown by FIG. 1, the 6G distributed cloud can also include one or more regional sites (also referred to as "regional clouds"), which is/are locations and/or a collection of compute infrastructure (e.g., cloud resource pools and/or the like) that supports one or more edge sites (or edge clouds). In some examples, a regional site (or regional cloud) supports vRAN functions for multiple cell sites in or part of multiple edge clouds, and provides high centralization of functionality.

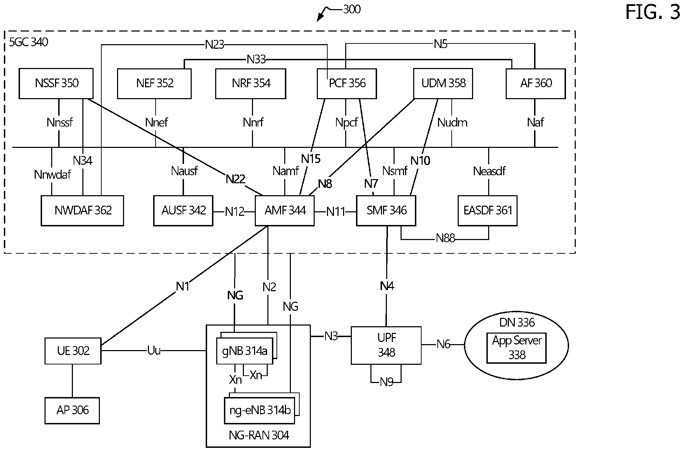

The core network sites (also referred to as "core clouds") are locations and/or a collection of compute infrastructure (e.g., cloud resource pools and/or the like) that supports NFs for multiple UEs, cell sites, and edge clouds (and potentially regional clouds). In some implementations, the core network sites implement the various NFs of the 5GC 340 discussed infra w.r.t FIG. 3. In some examples, the core cloud may represent a data center or other cloud service provider infrastructure.

Each of the cell sites, edge sites, regional sites, core network cites, and central data center(s) (collectively referred to as the "clouds" or "cloud sites") include functionality to support both user plane (also referred to as the "deployment plane") and control plane (also referred to as the "management plane") services. Each cloud includes a collection of resources, resource pools, and cloud services (e.g., deployment plane services, management plane services, infrastructure management services, deployment management services, and/or the like) at one or more cloud sites including software elements to manage resource provisioning, nodes, clusters, and deployments hosted on them.

The 6G distributed cloud and communications system of FIG. 1 provides a high level of integration between the mobile system and cloud computing, and may provide a balance between localized computation and distributed computation to optimize resource usage and power consumption while meeting tasks' KPI and/or SLA requirements (e.g., in terms of latency, data rates, and/or the like). In addition to providing computing and data services to subscribers, the 6G distributed cloud and communications system can also provide various applications and/or services such as, for example, distributed AI/ML services (e.g., including collaborative learning/inference tasks throughout all network nodes and devices), ultra-reliable low-latency communication (URLLC) service and/or high-bandwidth communication services for extended reality (XR) applications (e.g., including augmented reality (AR), virtual reality (VR), and mixed reality or mediated reality (MR) technologies), immersive applications, holographic communications, cloud gaming (CG) applications, industrial IoT (IIoT) applications/services, industrial and/or medical robotics, vision/control systems, autonomous or semi-autonomous vehicle applications, low-bandwidth massive IoT (mIoT) applications (e.g., wireless sensor networks and/or the like), and public sector applications (e.g., smart cities and/or the like), among many other types of services and/or applications. Sustainability and/or improved energy efficiency can be achieved based in part on energy savings realized by bringing resources closer to data sources. Furthermore, specialized cloud computing resources for complex computing such as AI/ML functions and signal processing workloads can provide both flexibility and energy efficiency.

Distributed cloud and communications systems are expected to enable more cost-efficient solutions through common reusable infrastructure, cloud-native function deployment, and DevOps software practice and automation that all reduce capital expenditure (CAPEX) and operational expenditure (OPEX). Moreover, cloud-based functions and services will enhance experiences using mobile devices, enabling lower device cost despite advanced capabilities due to computing workload offloading. Additionally, distributed computing and communications may facilitate trust, security, and resiliency services, as well as securing the infrastructure and providing protection from new threat vectors.

The workloads for 6G cloud includes NFs and applications/services. One capability for cloud orchestration is workload deployment. In 6G, the workload deployment needs to jointly consider the communication and computing requirements. The present disclosure provides a framework of the management system to enable intelligence and autonomy for the next-generation system. The framework discussed herein can be used to realize the benefits of network transformation (e.g., including intelligence, autonomy, resilience, and the like), and improve the performance of next-generation cloud empowered by this transformation.

The following discussion provides various examples names/labels for various systems, sub-systems, devices, planes, layers, components, operations, parameters, attributes, information elements (IEs), information object classes (IOCs), managed object classes (MOCs), and other elements/data structures. However, the specific names used regarding the various systems, sub-systems, devices, planes, layers, components, operations, parameters, attributes, IEs, IOCs, MOCs, and other elements/data structures, are provided for the purpose of discussion and illustration, rather than limitation. It should be noted that the various systems, sub-systems, devices, planes, layers, components, operations, parameters, attributes, IEs, IOCs, MOCs, and other elements/data structures can have alternative names to those provided infra. Furthermore, additional or alternative embodiments, implementations, and/or iterations of 3GPP specifications and/or other relevant standards/specifications may name certain elements/entities different to those discussed herein, but still fall within the context of the present description.

### 1.1. RESOURCE MANAGEMENT ASPECTS

Various types of compute resources are available today, and new types of compute resources are emerging, to tackle more and more complex or dedicated computing tasks. Each type of resource has advantages for processing certain types of workloads. Examples resources types are shown by table 1.1-1.

**Table 1.1-1: example Resource Types**

| **Resource Type** | **Type of computing** |
|---|---|
| CPU | Sequential processing for a variety of tasks |
| Accelerator | Intensive parallel processing for repetitive tasks |
| GPU | parallel processing for very large numbers of arithmetic operations |
| ASIC | Custom-designed for specific applications |
| FPGA | Intensive applications; can be reprogrammed with short development time |
| IPU | Hardened accelerators and connectivity (e.g., Ethernet or the like) that accelerates and manages infrastructure functions using programmable cores |
| DPU | System on a chip that combines Industry-standard, high-performance, software-programmable multi-core CPU, High-performance network interface and Flexible and programmable acceleration engines |
| Switch fabric | connects resources (or resource pools) to other resources (or resource pools) within a cloud site or between cloud sites |
| Sensor | Detects, captures, collects, or otherwise obtains data associated with a phenomena, an event, and/or changes in an environment |
| Actuators | Capable of causing object(s) (e.g., compute nodes, platforms, machines, devices, mechanisms, systems, and/or the like) to move, change its state, position, and/or orientation; and/or control the object to perform one or more actions or tasks. |

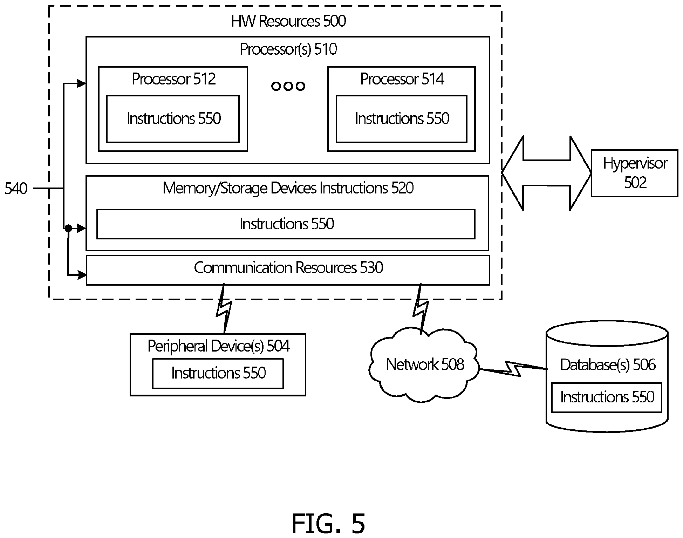

The compute resource(s) may be virtualized resource or physical resource (e.g., bare-metal hardware). In some examples, the resource(s) may be the same or similar as the resources 500 of FIG. 5. For allowing the cloud management and orchestration system (which contains one or more functions) to allocate appropriate compute resources for the workloads (e.g., to enable the cloud management and orchestration system to deploy the workloads onto the appropriate compute resources), the variety of compute resources need to be registered to and monitored by the cloud management and orchestration system. The compute resource type, capabilities, capability, location, and energy efficiency level/indicators are required for registration and discovery.

To facilitate the resource allocation for the workload, the cloud management and orchestration system needs to be able to measure and verify the actual computing capability (e.g., FLOPS and/or the like) of each kind of the heterogeneous resources when processing a specific type of workload.

### 1.2. WORKLOAD DEPLOYMENT ASPECTS

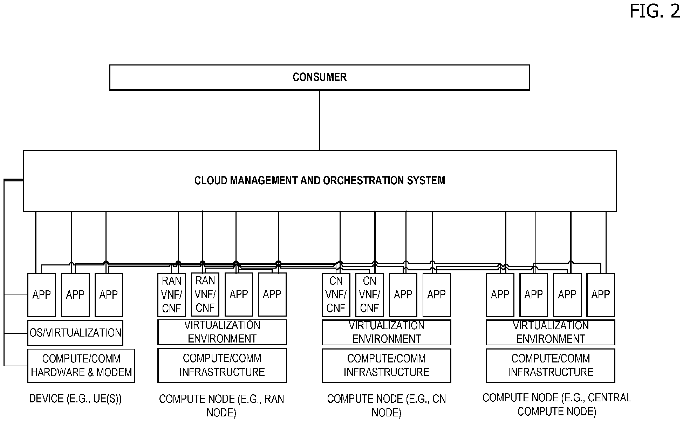

FIG. 2 shows an example workload deployment in 6G wide area cloud, which includes a cloud management and orchestration system. The workloads for the 6G cloud includes NFs and/or applications. As examples, the NFs can include, for example, core network functions, application functions (AFs), RAN functions (RANFs), edge compute functions, software defined networking (SDN) functions, and/or the like. As examples, the applications can include edge applications, cloud applications, and/or any other type of application(s), such as any of those discussed herein.

The cloud management and orchestration system is capable of deploying and/or provisioning the workloads onto the appropriate compute resources. In this regard, the cloud management and orchestration system can recognize the type of workload to be deployed, the communication and computing requirements associated with the workload, and then select the most appropriate resource to achieve the best performance given available resources and/or other constraints, requirements, conditions, and/or parameters. For 6G, the deployment needs to take the requirements of both communication and computing into consideration, and allocate the compute resources that can meet both of these requirements the best. In some cases, if it happens that one or both of the communication and computing requirements are able to be met, a policy, configuration, SLAs, and/or instructions can be used to indicate which requirements prevail over other requirements, and/or other ways to address such issues.

For the NFs, the cloud management and orchestration system supports to deploy a network or subnetwork which includes multiple NFs (e.g., core network functions, AFs, RANFs, edge functions, and/or the like) or network nodes (e.g., CUs 732, DUs 731, RUs 731, RAN intelligent controllers (RICs), and/or the like) with the connectivity and topology requirements at one time.

For the applications, the cloud management and orchestration system supports deployment of multiple instances of individual applications (e.g., on different compute nodes and/or using other resources) and establishes required communication between them at one time, based on the communication and/or computing requirements. To support this, the cloud management and orchestration system serving as the producing server is capable of:
- receiving the request from a consumer to deploy the instances for an application for which the image has been already onboarded;
- analyzing the communication and computing requirements for the request. These requirements may be provided in the request, or generated based on the SLA (Service Level Agreement) or subscription data;
- obtaining (getting) the available capability of the communication and compute resources, by querying the current capability or by monitoring regularly;
- obtaining (getting) the performance of the communication and compute resources, by monitoring the performance regularly;
- selecting the compute resources for deploying the application instance(s); and
- deploying the application instances to the selected compute resources, including creating the application instances and establishing the connectivity between them.

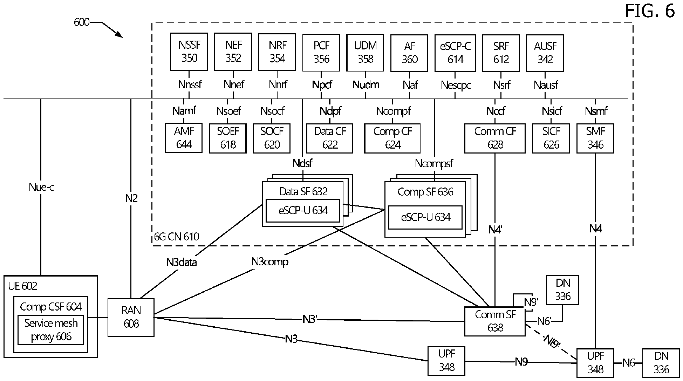

After the successful deployment or update of application(s), the cloud management and orchestration system makes the application instances available to the control plane of the 6G system (see e.g., network 600 in FIG. 6) where the service chaining between those workload instances happens for each service instance.

### 2. MONITORING, SCALING AND HEALING DEPLOYMENT ASPECTS

The workload for 6G cloud includes network functions and the applications. The end users' experience of using the application is impacted by the combined performance of both communication and computing. Therefore the next-generation cloud system needs to be able to monitor the performance of communication and computing aspects, as well as the end-to-end performance. The cloud system needs to support scaling and healing for achieving the expected performance.

Embodiments herein may relate to or describe aspects of monitoring, scaling, and/or healing for the next-generation cloud to achieve the expected end-to-end performance.

Note that the names of the system, sub-systems, planes, components and operations as described herein may be viewed as examples of such names. In other embodiments, various of the elements may have different names, may be combined or split across multiple elements, etc.

### 2.1. MONITORING AND ANALYTICS ASPECTS

The communication system has very rigorous requirements for reliability and performance. With the convergence of communication and computing in the 6G cloud, the performance and the healthiness of the 6G cloud system need to be constantly monitored.

The cloud management and orchestration system may collect the measurements and/or healthiness data (e.g., alarms) from the following layers/aspects:
- infrastructure layer/aspect,
- virtualization layer/aspect,
- network function layer/aspect, and/or
- application layer/aspect.

The network function layer measurements and application layer measurements may be integrated, or defined in a way, to reflect the end-to-end performance for one or more end users. The application layer measurement may reflect the communication performance (i.e., latency), or computing performance (e.g., response time).

The cloud management and orchestration system may choose to collect the performance measurements in real-time or near-real-time.

The cloud management and orchestration system may also conduct analytics for the monitored data, and provides the analytics report to the consumer, where the analytics could be statistics of end-to-end performance, root cause analysis, or prediction of the traffic or load.

### 2.2. SCALING ASPECTS

As the result of monitoring and/or analytics, the cloud management and orchestration system may decide to perform scaling to ensure that the workload is allocated with the appropriate amount of compute resources, with consideration of meeting the combined communication and computing requirements. The scaling is to assure adequate resources for the workload, and in the meantime to avoid excessive resource allocation to improve the resource utilization efficiency. The scaling could be allocating more resources for the workload via scale-out (creating more instance(s) for the component of the workload) or scale-up (adding more resources to the existing instance(s)), or reducing the resources via scale-in (deleting some instance(s)) or scale-down (decreasing the resources for the existing instance(s)).

The scaling may occur within a compute node, or across the compute nodes. For cross-node cases, the cloud management and orchestration system selects the target nodes that can meet the combined communication and computing requirements for scaling.

The scaling may be triggered automatically (aka., auto-scaling) by the cloud management and orchestration system or by a consumer on demand. For auto-scaling, the consumer may provide a policy (e.g., load thresholds, energy efficiency goals) for the scaling.

### 2.3. SCALING ASPECTS

When the cloud management and orchestration system detects that a workload instance is not running in a healthy status, the cloud management and orchestration system may decide to conduct healing for the workload instance.

With the integration of communication and computing in the 6G cloud, the healing needs to take the capabilities and performance of both aspects into account. Especially when the healing is done across compute nodes, the cloud management and orchestration system selects the target compute resource that can meet the combined communication and computing requirements for healing.

### 3. CELLULAR NETWORK ASPECTS

FIG. 3 depicts an example network architecture 300. The network 300 may operate in a manner consistent with 3GPP technical specifications for LTE or 5G/NR systems. However, the example embodiments are not limited in this regard and the described examples may apply to other networks that benefit from the principles described herein, such as future 3GPP systems, or the like.

The network 300 includes a UE 302, which is any mobile or non-mobile computing device designed to communicate with a RAN 304 via an over-the-air connection. The UE 302 is communicatively coupled with the RAN 304 by a Uu interface, which may be applicable to both LTE and NR systems. Examples of the UE 302 include, but are not limited to, a smartphone, tablet computer, wearable device (e.g., smart watch, fitness tracker, smart glasses, smart clothing/fabrics, head-mounted displays, smart shows, and/or the like), desktop computer, workstation, laptop computer, in-vehicle infotainment system, in-car entertainment system, instrument cluster, head-up display (HUD) device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M), device-to-device (D2D), machine-type communication (MTC) device, IoT device, smart appliance, flying drone or unmanned aerial vehicle (UAV), terrestrial drone or autonomous vehicle, robot, electronic signage, single-board computer (SBC) (e.g., Raspberry Pi, Arduino, Intel Edison, and the like), plug computers, and/or any type of computing device such as any of those discussed herein.

The network 300 may include a set of UEs 302 coupled directly with one another via a D2D, ProSe, PC5, and/or sidelink (SL) interface, and/or any other suitable interface such as any of those discussed herein. In 3GPP systems, SL communication involves communication between two or more UEs 302 using 3GPP technology without traversing a network node. These UEs 302 may be M2M/D2D/MTC/IoT devices and/or vehicular systems that communicate using an SL interface, which includes, for example, one or more SL logical channels (e.g., Sidelink Broadcast Control Channel (SBCCH), Sidelink Control Channel (SCCH), and Sidelink Traffic Channel (STCH)); one or more SL transport channels (e.g., Sidelink Shared Channel (SL-SCH) and Sidelink Broadcast Channel (SL-BCH)); and one or more SL physical channels (e.g., Physical Sidelink Shared Channel (PSSCH), Physical Sidelink Control Channel (PSCCH), Physical Sidelink Feedback Channel (PSFCH), Physical Sidelink Broadcast Channel (PSBCH), and/or the like). The UE 302 may perform blind decoding attempts of SL channels/links according to the various examples herein. In some embodiments, the network 300 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some examples, the UE 302 may additionally communicate with an AP 306 via an over-the-air (OTA) connection. The AP 306 manages a WLAN connection, which may serve to offload some/all network traffic from the RAN 304. The connection between the UE 302 and the AP 306 may be consistent with any IEEE 802.11 protocol. Additionally, the UE 302, RAN 304, and AP 306 may utilize cellular-WLAN aggregation/integration (e.g., LWA/LWIP). Cellular-WLAN aggregation may involve the UE 302 being configured by the RAN 304 to utilize both cellular radio resources and WLAN resources.

The RAN 304 includes one or more network access nodes (NANs) 314. The NANs 314 terminate air-interface(s) for the UE 302 by providing access stratum protocols including RRC, PDCP, RLC, MAC, and PHY/L1 protocols. In this manner, the NANs 314 enable data/voice connectivity between CN 340 and the UE 302. In some embodiments, the NAN 314 may be implemented in a discrete device or as one or more software entities running on server computers as part of, for example, a virtual network, which may be referred to as a CRAN or virtual baseband unit pool. The NANs 314 may be referred to as a BS, gNB, RAN node, eNB, ng-eNB, NodeB, RSU, TRxP, TRP, etc. The NANs 314 may be a macrocell base station or a low power base station for providing femtocells, picocells or other like cells having smaller coverage areas, smaller user capacity, or higher bandwidth compared to macrocells; or some combination thereof. In these implementations, the NANs 314 be referred to as a BS, gNB, RAN node, eNB, ng-eNB, NodeB, RSU, TRP, and the like.

One example implementation is a "CU/DU split" architecture where the NANs 314 are embodied as a gNB-Central Unit (CU) that is communicatively coupled with one or more gNB-Distributed Units (DUs), where each DU may be communicatively coupled with one or more Radio Units (RUs) (also referred to as RRHs, RRUs, or the like). In some implementations, the one or more RUs may be individual RSUs. In some implementations, the CU/DU split may include an ng-eNB-CU and one or more ng-eNB-DUs instead of, or in addition to, the gNB-CU and gNB-DUs, respectively. The NANs 314 employed as the CU may be implemented in a discrete device or as one or more software entities running on server computers as part of, for example, a virtual network including a virtual Base Band Unit (BBU) or BBU pool, cloud RAN (CRAN), Radio Equipment Controller (REC), Radio Cloud Center (RCC), centralized RAN (C-RAN), virtualized RAN (vRAN), and/or the like (although these terms may refer to different implementation concepts). Any other type of architectures, arrangements, and/or configurations can be used.

The set of NANs 314 are coupled with one another via respective X2 interfaces if the RAN 304 is an LTE RAN or Evolved Universal Terrestrial Radio Access Network (E-UTRAN) 310, or respective Xn interfaces if the RAN 304 is a NG-RAN 314. The X2/Xn interfaces, which may be separated into control/user plane interfaces in some examples, may allow the ANs to communicate information related to handovers, data/context transfers, mobility, load management, interference coordination, and the like.

The NANs 314 of the RAN 304 may each manage one or more cells, cell groups, component carriers, and the like to provide the UE 302 with an air interface for network access. The UE 302 may be simultaneously connected with a set of cells provided by the same or different NANs 314 of the RAN 304. For example, the UE 302 and RAN 304 may use carrier aggregation to allow the UE 302 to connect with a set of component carriers, each corresponding to a PCell or SCell. In dual connectivity scenarios, a first NAN 314 may be a master node that provides an MCG and a second NAN 314 may be secondary node that provides an SCG. The first/second NANs 314 may be any combination of eNB, gNB, ng-eNB, and the like.

The RAN 304 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

Additionally or alternatively, individual UEs 302 provide radio information to one or more NANs 314 and/or one or more edge compute nodes (e.g., edge servers/hosts, and the like). The radio information may be in the form of one or more measurement reports, and/or may include, for example, signal strength measurements, signal quality measurements, and/or the like. Each measurement report is tagged with a timestamp and the location of the measurement (e.g., the UEs 302 current location). As examples, the measurements collected by the UEs 302 and/or included in the measurement reports may include one or more of the following: bandwidth (BW), network or cell load, latency, jitter, round trip time (RTT), number of interrupts, out-of-order delivery of data packets, transmission power, bit error rate, bit error ratio (BER), Block Error Rate (BLER), packet error ratio (PER), packet loss rate, packet reception rate (PRR), data rate, peak data rate, end-to-end (e2e) delay, signal-to-noise ratio (SNR), signal-to-noise and interference ratio (SINR), signal-plus-noise-plus-distortion to noise-plus-distortion (SINAD) ratio, carrier-to-interference plus noise ratio (CINR), Additive White Gaussian Noise (AWGN), energy per bit to noise power density ratio (Eb/N0), energy per chip to interference power density ratio (Ec/I0), energy per chip to noise power density ratio (Ec/N0), peak-to-average power ratio (PAPR), reference signal received power (RSRP), reference signal received quality (RSRQ), received signal strength indicator (RSSI), received channel power indicator (RCPI), received signal to noise indicator (RSNI), Received Signal Code Power (RSCP), average noise plus interference (ANPI), GNSS timing of cell frames for UE positioning for E-UTRAN or 5G/NR (e.g., a timing between an AP 306 or RAN node 308 reference time and a GNSS-specific reference time for a given GNSS), GNSS code measurements (e.g., the GNSS code phase (integer and fractional parts) of the spreading code of the ith GNSS satellite signal), GNSS carrier phase measurements (e.g., the number of carrier-phase cycles (integer and fractional parts) of the ith GNSS satellite signal, measured since locking onto the signal; also called Accumulated Delta Range (ADR)), channel interference measurements, thermal noise power measurements, received interference power measurements, power histogram measurements, channel load measurements, STA statistics, and/or other like measurements. The RSRP, RSSI, and/or RSRQ measurements may include RSRP, RSSI, and/or RSRQ measurements of cell-specific reference signals, channel state information reference signals (CSI-RS), and/or synchronization signals (SS) or SS blocks for 3GPP networks (e.g., LTE or 5G/NR), and RSRP, RSSI, RSRQ, RCPI, RSNI, and/or ANPI measurements of various beacon, Fast Initial Link Setup (FILS) discovery frames, or probe response frames for WLAN/WiFi (e.g., [IEEE80211]) networks. Other measurements may be additionally or alternatively used, such as those discussed in 3GPP TS 36.214 v17.0.0 (2022-03-31) ("[TS36214]"), 3GPP TS 38.215 v17.3.0 (2023-03-30) ("[TS38215]"), 3GPP TS 38.314 v17.3.0 (2023-06-30) ("[TS38314]"), [IEEE80211], and/or the like. Additionally or alternatively, any of the aforementioned measurements (or combination of measurements) may be collected by one or more NANs 314 and provided to the edge compute node(s).

Additionally or alternatively, the measurements can include one or more of the following measurements: measurements related to Data Radio Bearer (DRB) (e.g., number of DRBs attempted to setup, number of DRBs successfully setup, number of released active DRBs, in-session activity time for DRB, number of DRBs attempted to be resumed, number of DRBs successfully resumed, and the like); measurements related to Radio Resource Control (RRC) (e.g., mean number of RRC connections, maximum number of RRC connections, mean number of stored inactive RRC connections, maximum number of stored inactive RRC connections, number of attempted, successful, and/or failed RRC connection establishments, and the like); measurements related to UE Context (UECNTX); measurements related to Radio Resource Utilization (RRU) (e.g., DL total PRB usage, UL total PRB usage, distribution of DL total PRB usage, distribution of UL total PRB usage, DL PRB used for data traffic, UL PRB used for data traffic, DL total available PRBs, UL total available PRBs, and the like); measurements related to Registration Management (RM); measurements related to Session Management (SM) (e.g., number of PDU sessions requested to setup, number of PDU sessions successfully setup; number of PDU sessions failed to setup, and the like); measurements related to GTP Management (GTP); measurements related to IP Management (IP); measurements related to Policy Association (PA); measurements related to Mobility Management (MM) (e.g., for inter-RAT, intra-RAT, and/or Intra/Inter-frequency handovers and/or conditional handovers: number of requested, successful, and/or failed handover preparations; number of requested, successful, and/or failed handover resource allocations; number of requested, successful, and/or failed handover executions; mean and/or maximum time of requested handover executions; number of successful and/or failed handover executions per beam pair, and the like); measurements related to Virtualized Resource(s) (VR); measurements related to Carrier (CARR); measurements related to QoS Flows (QF) (e.g., number of released active QoS flows, number of QoS flows attempted to release, in-session activity time for QoS flow, in-session activity time for a UE 302, number of QoS flows attempted to setup, number of QoS flows successfully established, number of QoS flows failed to setup, number of initial QoS flows attempted to setup, number of initial QoS flows successfully established, number of initial QoS flows failed to setup, number of QoS flows attempted to modify, number of QoS flows successfully modified, number of QoS flows failed to modify, and the like); measurements related to Application Triggering (AT); measurements related to Short Message Service (SMS); measurements related to Power, Energy and Environment (PEE); measurements related to NF service (NFS); measurements related to Packet Flow Description (PFD); measurements related to Random Access Channel (RACH); measurements related to Measurement Report (MR); measurements related to Layer 1 Measurement (L1M); measurements related to Network Slice Selection (NSS); measurements related to Paging (PAG); measurements related to Non-IP Data Delivery (NIDD); measurements related to external parameter provisioning (EPP); measurements related to traffic influence (TI); measurements related to Connection Establishment (CE); measurements related to Service Parameter Provisioning (SPP); measurements related to Background Data Transfer Policy (BDTP); measurements related to Data Management (DM); and/or any other performance measurements such as those discussed in 3GPP TS 28.552 v18.3.0 (2023-06-27) ("[TS28552]"), 3GPP TS 32.425 v17.1.0 (2021-06-24) ("[TS32425]"), and/or the like.

The radio information may be reported in response to a trigger event and/or on a periodic basis. Additionally or alternatively, individual UEs 302 report radio information either at a low periodicity or a high periodicity depending on a data transfer that is to take place, and/or other information about the data transfer. Additionally or alternatively, the edge compute node(s) may request the measurements from the NANs 314 at low or high periodicity, or the NANs 314 may provide the measurements to the edge compute node(s) at low or high periodicity. Additionally or alternatively, the edge compute node(s) may obtain other relevant data from other edge compute node(s), core network functions (NFs), application functions (AFs), and/or other UEs 302 such as Key Performance Indicators (KPIs), with the measurement reports or separately from the measurement reports.

Additionally or alternatively, in cases where is discrepancy in the observation data from one or more UEs, one or more RAN nodes, and/or core network NFs (e.g., missing reports, erroneous data, and the like) simple imputations may be performed to supplement the obtained observation data such as, for example, substituting values from previous reports and/or historical data, apply an extrapolation filter, and/or the like. Additionally or alternatively, acceptable bounds for the observation data may be predetermined or configured. For example, CQI and MCS measurements may be configured to only be within ranges defined by suitable 3GPP standards. In cases where a reported data value does not make sense (e.g., the value exceeds an acceptable range/bounds, or the like), such values may be dropped for the current learning/training episode or epoch. For example, on packet delivery delay bounds may be defined or configured, and packets determined to have been received after the packet delivery delay bound may be dropped.

The UE 302 can also perform determine reference signal (RS) measurement and reporting procedures to provide the network with information about the quality of one or more wireless channels and/or the communication media in general, and this information can be used to optimize various aspects of the communication system. As examples, the measurement and reporting procedures performed by the UE 302 can include those discussed in 3GPP TS 38.211 v17.5.0 (2023-06-26) ("[TS38211]"), 3GPP TS 38.212 v17.5.0 (2023-03-30) ("[TS38212]"), 3GPP TS 38.213 v17.6.0 (2023-06-26) ("[TS38213]"), 3GPP TS 38.214 v17.6.0 (2023-06-26) ("[TS38214]"), [TS38215], 3GPP TS 38.101-1 v18.2.0 (2023-06-30) ("[TS38101-1]"), 3GPP TS 38.104 v18.2.0 (2023-06-30) ("[TS38104]"), 3GPP TS 38.133 v18.2.0 (2023-06-30) ("[TS38133]"), [TS38331], and/or other the like. The physical signals and/or reference signals can include demodulation reference signals (DM-RS), phase-tracking reference signals (PT-RS), positioning reference signal (PRS), channel-state information reference signal (CSI-RS), synchronization signal block (SSB), primary synchronization signal (PSS), secondary synchronization signal (SSS), sounding reference signal (SRS), and/or the like.

In any of the examples discussed herein, any suitable data collection and/or measurement mechanism(s) may be used to collect the observation data. For example, data marking (e.g., sequence numbering, and the like), packet tracing, signal measurement, data sampling, and/or timestamping techniques may be used to determine any of the aforementioned metrics/observations. The collection of data may be based on occurrence of events that trigger collection of the data. Additionally or alternatively, data collection may take place at the initiation or termination of an event. The data collection can be continuous, discontinuous, and/or have start and stop times. The data collection techniques/mechanisms may be specific to a HW configuration/implementation or non-HW-specific, or may be based on various software parameters (e.g., OS type and version, and the like). Various configurations may be used to define any of the aforementioned data collection parameters. Such configurations may be defined by suitable specifications/standards, such as 3GPP (e.g., [5GEdge]), ETSI (e.g., [MEC]), O-RAN (e.g., [O-RAN]), Intel^{®} Smart Edge Open (formerly OpenNESS) (e.g., [ISEO]), IETF (e.g., MAMS [RFC8743]), IEEE/WiFi (e.g., [IEEE80211], [WiMAX], [IEEE16090], and the like), and/or any other like standards such as those discussed herein.

In V2X scenarios the UE 302 or NAN 314 may be or act as a roadside unit (RSU), which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network. Furthermore, one or more V2X RATs may be employed, which allow V2X nodes to communicate directly with one another, with infrastructure equipment (e.g., NAN 314), and/or other devices/nodes. In some implementations, at least two distinct V2X RATs may be used including WLAN V2X (W-V2X) RATs based on IEEE V2X technologies (e.g., DSRC for the U.S. and ITS-G5 for Europe) and cellular V2X (C-V2X) RATs based on 3GPP V2X technologies (e.g., LTE V2X, 5G/NR V2X, and beyond). In one example, the C-V2X RAT may utilize a C-V2X air interface and the WLAN V2X RAT may utilize an W-V2X air interface.

The W-V2X RATs include, for example, IEEE Guide for Wireless Access in Vehicular Environments (WAVE) Architecture, IEEE STANDARDS ASSOCIATION, IEEE 1609.0-2019 (10 Apr. 2019) ("[IEEE16090]"), V2X Communications Message Set Dictionary, SAE INT'L (23 Jul. 2020) ("[J2735_202007]"), Intelligent Transport Systems in the 5 GHz frequency band (ITS-G5), the [IEEE80211p] (which is the layer 1 (L1) and layer 2 (L2) part of WAVE, DSRC, and ITS-G5), and/or IEEE Standard for Air Interface for Broadband Wireless Access Systems, IEEE Std 802.16-2017, pp.1-2726 (02 Mar. 2018) ("[WiMAX]"). The term "DSRC" refers to vehicular communications in the 5.9 GHz frequency band that is generally used in the United States, while "ITS-G5" refers to vehicular communications in the 5.9 GHz frequency band in Europe. Since any number of different RATs are applicable (including [IEEE8021 1p] RATs) that may be used in any geographic or political region, the terms "DSRC" (used, among other regions, in the U.S) and "ITS-G5" (used, among other regions, in Europe) may be used interchangeably throughout this disclosure. The access layer for the ITS-G5 interface is outlined in ETSI EN 302 663 V1.3.1 (2020-01) (hereinafter "[EN302663]") and describes the access layer of the ITS-S reference architecture. The ITS-G5 access layer comprises [IEEE80211] (which now incorporates [IEEE80211p]), as well as features for Decentralized Congestion Control (DCC) methods discussed in ETSI TS 102 687 V1.2.1 (2018-04) ("[TS102687]"). The access layer for 3GPP LTE-V2X based interface(s) is outlined in, inter alia, ETSI EN 303 613 V1.1.1 (2020-01), 3GPP TS 23.285 v16.2.0 (2019-12); and 3GPP 5G/NR-V2X is outlined in, inter alia, 3GPP TR 23.786 v16.1.0 (2019-06) and 3GPP TS 23.287 v18.0.0 (2023-03-31) ("[TS23287]").

In examples where the RAN 304 is an E-UTRAN 310 with one or more eNBs 312, the E-UTRAN 310 provides an LTE air interface (Uu) with the parameters and characteristics at least as discussed in 3GPP TS 36.300 v17.2.0 (2022-09-30) ("[TS36300]"). In examples where the RAN 304 is an next generation (NG)-RAN 314 with a set of gNBs 316. Each gNB 316 connects with 5G-enabled UEs 302 using a 5G-NR air interface (which may also be referred to as a Uu interface) with parameters and characteristics as discussed in [TS38300], among many other 3GPP standards. Where the NG-RAN 314 includes a set of ng-eNBs 318, the one or more ng-eNBs 318 connect with a UE 302 via the 5G Uu and/or LTE Uu interface. The gNBs 316 and the ng-eNBs 318 connect with the 5GC 340 through respective NG interfaces, which include an N2 interface, an N3 interface, and/or other interfaces. The gNB 316 and the ng-eNB 318 are connected with each other over an Xn interface. Additionally, individual gNBs 316 are connected to one another via respective Xn interfaces, and individual ng-eNBs 318 are connected to one another via respective Xn interfaces. In some examples, the NG interface may be split into two parts, an NG user plane (NG-U) interface, which carries traffic data between the nodes of the NG-RAN 314 and a UPF 348 (e.g., N3 interface), and an NG control plane (NG-C) interface, which is a signaling interface between the nodes of the NG-RAN 314 and an AMF 344 (e.g., N2 interface).

The NG-RAN 314 may provide a 5G-NR air interface (which may also be referred to as a Uu interface) with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

The 5G-NR air interface may utilize BWPs for various purposes. For example, BWP can be used for dynamic adaptation of the SCS. For example, the UE 302 can be configured with multiple BWPs where each BWP configuration has a different SCS. When a BWP change is indicated to the UE 302, the SCS of the transmission is changed as well. Another use case example of BWP is related to power saving. In particular, multiple BWPs can be configured for the UE 302 with different amount of frequency resources (e.g., PRBs) to support data transmission under different traffic loading scenarios. A BWP containing a smaller number of PRBs can be used for data transmission with small traffic load while allowing power saving at the UE 302 and in some cases at the gNB 316. A BWP containing a larger number of PRBs can be used for scenarios with higher traffic load.

In some implementations, individual gNBs 316 can include a gNB-CU and a set of gNB-DUs. Additionally or alternatively, gNBs 316 can include one or more RUs. In these implementations, the gNB-CU may be connected to each gNB-DU via respective F1 interfaces. In case of network sharing with multiple cell ID broadcast(s), each cell identity associated with a subset of PLMNs corresponds to a gNB-DU and the gNB-CU it is connected to, share the same physical layer cell resources. For resiliency, a gNB-DU may be connected to multiple gNB-CUs by appropriate implementation. Additionally, a gNB-CU can be separated into gNB-CU control plane (gNB-CU-CP) and gNB-CU user plane (gNB-CU-UP) functions. The gNB-CU-CP is connected to a gNB-DU through an F1 control plane interface (F1-C), the gNB-CU-UP is connected to the gNB-DU through an F1 user plane interface (F1-U), and the gNB-CU-UP is connected to the gNB-CU-CP through an E1 interface. In some implementations, one gNB-DU is connected to only one gNB-CU-CP, and one gNB-CU-UP is connected to only one gNB-CU-CP. For resiliency, a gNB-DU and/or a gNB-CU-UP may be connected to multiple gNB-CU-CPs by appropriate implementation. One gNB-DU can be connected to multiple gNB-CU-UPs under the control of the same gNB-CU-CP, and one gNB-CU-UP can be connected to multiple DUs under the control of the same gNB-CU-CP. Data forwarding between gNB-CU-UPs during intra-gNB-CU-CP handover within a gNB may be supported by Xn-U.

Similarly, individual ng-eNBs 318 can include an ng-eNB-CU and a set of ng-eNB-DUs. In these implementations, the ng-eNB-CU and each ng-eNB-DU are connected to one another via respective W1 interface. An ng-eNB can include an ng-eNB-CU-CP, one or more ng-eNB-CU-UP(s), and one or more ng-eNB-DU(s). An ng-eNB-CU-CP and an ng-eNB-CU-UP is connected via the E1 interface. An ng-eNB-DU is connected to an ng-eNB-CU-CP via the W1-C interface, and to an ng-eNB-CU-UP via the W1-U interface. The general principle described herein w.r.t gNB aspects also applies to ng-eNB aspects and corresponding E1 and W1 interfaces, if not explicitly specified otherwise.

The node hosting user plane part of the PDCP protocol layer (e.g., gNB-CU, gNB-CU-UP, and for EN-DC, MeNB or SgNB depending on the bearer split) performs user inactivity monitoring and further informs its inactivity or (re)activation to the node having control plane connection towards the core network (e.g., over E1, X2, or the like). The node hosting the RLC protocol layer (e.g., gNB-DU) may perform user inactivity monitoring and further inform its inactivity or (re)activation to the node hosting the control plane (e.g., gNB-CU or gNB-CU-CP).

In these implementations, the NG-RAN 314, is layered into a Radio Network Layer (RNL) and a Transport Network Layer (TNL). The NG-RAN 314 architecture (e.g., the NG-RAN logical nodes and interfaces between them) is part of the RNL. For each NG-RAN interface (e.g., NG, Xn, F1, and the like) the related TNL protocol and the functionality are specified. The TNL provides services for user plane transport and/or signaling transport. In NG-Flex configurations, each NG-RAN node is connected to all AMFs 344 of AMF sets within an AMF region supporting at least one slice also supported by the NG-RAN node. The AMF Set and the AMF Region are defined in [TS23501].

The RAN 304 is communicatively coupled to CN 340 that includes network elements and/or network functions (NFs) to provide various functions to support data and telecommunications services to customers/subscribers (e.g., UE 302). The components of the CN 340 may be implemented in one physical node or separate physical nodes. In some examples, NFV may be utilized to virtualize any or all of the functions provided by the network elements of the CN 340 onto physical compute/storage resources in servers, switches, and the like. A logical instantiation of the CN 340 may be referred to as a network slice, and a logical instantiation of a portion of the CN 340 may be referred to as a network sub-slice.

In some examples, the CN 340 may be an LTE CN, which may also be referred to as an EPC. The LTE CN may include MME, SGW, SGSN, HSS, PGW, and PCRF coupled with one another over interfaces (or "reference points") (not shown). Functions of the elements of the LTE CN may be briefly introduced as follows.

The MME may implement mobility management functions to track a current location of the UE to facilitate paging, bearer activation/deactivation, handovers, gateway selection, authentication, etc.

The SGW may terminate an S1 interface toward the RAN and route data packets between the RAN and the LTE CN. The SGW may be a local mobility anchor point for inter-RAN node handovers and also may provide an anchor for inter-3GPP mobility. Other responsibilities may include lawful intercept, charging, and some policy enforcement.

The SGSN may track a location of the UE and perform security functions and access control. In addition, the SGSN may perform inter-EPC node signaling for mobility between different RAT networks; PDN and S-GW selection as specified by MME; MME selection for handovers; etc. The S3 reference point between the MME and the SGSN may enable user and bearer information exchange for inter-3GPP access network mobility in idle/active states.

The HSS may include a database for network users, including subscription-related information to support the network entities' handling of communication sessions. The HSS can provide support for routing/roaming, authentication, authorization, naming/addressing resolution, location dependencies, etc. An S6a reference point between the HSS and the MME may enable transfer of subscription and authentication data for authenticating/authorizing user access to the LTE CN.

The PGW may terminate an SGi interface toward a data network (DN) that may include an application/content server. The PGW may route data packets between the LTE CN and the data network. The PGW may be coupled with the SGW by an S5 reference point to facilitate user plane tunneling and tunnel management. The PGW may further include a node for policy enforcement and charging data collection (for example, PCEF). Additionally, the SGi reference point between the PGW and the data network YX 36 may be an operator external public, a private PDN, or an intra-operator packet data network, for example, for provision of IMS services. The PGW may be coupled with a PCRF via a Gx reference point.

The PCRF is the policy and charging control element of the LTE CN. The PCRF may be communicatively coupled to the app/content server to determine appropriate QoS and charging parameters for service flows. The PCRF may provision associated rules into a PCEF (via Gx reference point) with appropriate TFT and QCI.

In the example of FIG. 3, the CN 340 is a 5GC 340 including an Authentication Server Function (AUSF) 342, Access and Mobility Management Function (AMF) 344, Session Management Function (SMF) 346, User Plane Function (UPF) 348, Network Slice Selection Function (NSSF) 350, Network Exposure Function (NEF) 352, Network Repository Function (NRF) 354, Policy Control Function (PCF) 356, Unified Data Management (UDM) 358, Unified Data Repository (UDR), Application Function (AF) 360, and Network Data Analytics Function (NWDAF) 362 coupled with one another over various interfaces as shown. The NFs in the 5GC 340 are briefly introduced as follows.

The NWDAF 362 includes one or more of the following functionalities: support data collection from NFs and AFs 360; support data collection from OAM; NWDAF service registration and metadata exposure to NFs and AFs 360; support analytics information provisioning to NFs and AFs 360; support machine learning (ML) model training and provisioning to NWDAF(s) 362 (e.g., those containing analytics logical function). Some or all of the NWDAF functionalities can be supported in a single instance of an NWDAF 362. The NWDAF 362 also includes an analytics reporting capability, which comprises means that allow discovery of the type of analytics that can be consumed by an external party and/or the request for consumption of analytics information generated by the NWDAF 362.

The NWDAF 362 interacts with different entities for different purposes, such as one or more of the following: data collection based on subscription to events provided by AMF 344, SMF 346, PCF 356, UDM 358, NSACF, AF 360 (directly or via NEF 352) and OAM (not shown); analytics and data collection using the Data Collection Coordination Function (DCCF); retrieval of information from data repositories (e.g. UDR via UDM 358 for subscriber-related information); data collection of location information from LCS system; storage and retrieval of information from an Analytics Data Repository Function (ADRF); analytics and data collection from a Messaging Framework Adaptor Function (MFAF); retrieval of information about NFs (e.g. from NRF 354 for NF-related information); on-demand provision of analytics to consumers, as specified in clause 6 of [TS23288]; and/or provision of bulked data related to analytics ID(s). NWDAF discovery and selection procedures are discussed in clause 6.3.13 in [TS23501] and clause 5.2 of [TS23288].

A single instance or multiple instances of NWDAF 362 may be deployed in a PLMN. If multiple NWDAF 362 instances are deployed, the architecture supports deploying the NWDAF 362 as a central NF, as a collection of distributed NFs, or as a combination of both. If multiple NWDAF 362 instances are deployed, an NWDAF 362 can act as an aggregate point (e.g., aggregator NWDAF 362) and collect analytics information from other NWDAFs 362, which may have different serving areas, to produce the aggregated analytics (e.g., per analytics ID), possibly with analytics generated by itself. When multiple NWDAFs 362 exist, not all of them need to be able to provide the same type of analytics results. For example, some of the NWDAFs 362 can be specialized in providing certain types of analytics. An analytics ID information element is used to identify the type of supported analytics that NWDAF 362 can generate. In some implementations, NWDAF 362 instance(s) can be collocated with a 5GS NF. Additional aspects of NWDAF 362 functionality are defined in 3GPP TS 23.288 v18.2.0 (2023-06-21) ("[TS23288]").

Different NWDAF 362 instances may be present in the 5GC 340, with possible specializations per type of analytics. The capabilities of an NWDAF 362 instance are described in the NWDAF profile stored in the NRF 354. The NWDAF architecture allows for arranging multiple NWDAF 362 instances in a hierarchy/tree with a flexible number of layers/branches. The number and organization of the hierarchy layers, as well as the capabilities of each NWDAF 362 instance remain deployment choices and may vary depending on implementation and/or use case. In a hierarchical deployment, NWDAFs 362 may provide data collection exposure capability for generating analytics based on the data collected by other NWDAFs 362, when DCCFs 363 and/or MFAFs 365 are not present in the network.

The AUSF 342 stores data for authentication of UE 302 and handle authentication-related functionality. The AUSF 342 may facilitate a common authentication framework for various access types.

The AMF 344 allows other functions of the 5GC 340 to communicate with the UE 302 and the RAN 304 and to subscribe to notifications about mobility events w.r.t the UE 302. The AMF 344 is also responsible for registration management (e.g., for registering UE 302), connection management, reachability management, mobility management, lawful interception of AMF-related events, and access authentication and authorization. The AMF 344 provides transport for SM messages between the UE 302 and the SMF 346, and acts as a transparent proxy for routing SM messages. AMF 344 also provides transport for SMS messages between UE 302 and an SMSF. AMF 344 interacts with the AUSF 342 and the UE 302 to perform various security anchor and context management functions. Furthermore, AMF 344 is a termination point of a RAN-CP interface, which includes the N2 reference point between the RAN 304 and the AMF 344. The AMF 344 is also a termination point of NAS (N1) signaling, and performs NAS ciphering and integrity protection.

The AMF 344 also supports NAS signaling with the UE 302 over an N3IWF interface. The N3IWF provides access to untrusted entities. N3IWF may be a termination point for the N2 interface between the (R)AN 304 and the AMF 344 for the control plane, and may be a termination point for the N3 reference point between the (R)AN 304 and the 348 for the user plane. As such, the AMF 344 handles N2 signaling from the SMF 346 and the AMF 344 for PDU sessions and QoS, encapsulate/de-encapsulate packets for IPSec and N3 tunneling, marks N3 user-plane packets in the UL, and enforces QoS corresponding to N3 packet marking taking into account QoS requirements associated with such marking received over N2. N3IWF may also relay UL and DL control-plane NAS signaling between the UE 302 and AMF 344 via an N1 reference point between the UE 302and the AMF 344, and relay UL and DL user-plane packets between the UE 302 and UPF 348. The N3IWF also provides mechanisms for IPsec tunnel establishment with the UE 302. The AMF 344 may exhibit an Namf service-based interface, and may be a termination point for an N14 reference point between two AMFs 344 and an N17 reference point between the AMF 344 and a 5G-EIR (not shown by FIG. 3). In addition to the functionality of the AMF 344 described herein, the AMF 344 may provide support for Network Slice restriction and Network Slice instance restriction based on NWDAF analytics.

The SMF 346 is responsible for SM (e.g., session establishment, tunnel management between UPF 348 and NAN 314); UE IP address allocation and management (including optional authorization); selection and control of UP function; configuring traffic steering at UPF 348 to route traffic to proper destination; termination of interfaces toward policy control functions; controlling part of policy enforcement, charging, and QoS; lawful intercept (for SM events and interface to LI system); termination of SM parts of NAS messages; DL data notification; initiating AN specific SM information, sent via AMF 344 over N2 to NAN 314; and determining SSC mode of a session. SM refers to management of a PDU session, and a PDU session or "session" refers to a PDU connectivity service that provides or enables the exchange of PDUs between the UE 302 and the DN 336. The SMF 346 may also include the following functionalities to support edge computing enhancements (see e.g., [TS23548]): selection of EASDF 361 and provision of its address to the UE as the DNS server for the PDU session; usage of EASDF 361 services as defined in [TS23548]; and for supporting the application layer architecture defined in [TS23558], provision and updates of ECS address configuration information to the UE. Discovery and selection procedures for EASDFs 361 is discussed in [TS23501] § 6.3.23.

The UPF 348 acts as an anchor point for intra-RAT and inter-RAT mobility, an external PDU session point of interconnect to data network 336, and a branching point to support multi-homed PDU session. The UPF 348 also performs packet routing and forwarding, packet inspection, enforces user plane part of policy rules, lawfully intercept packets (UP collection), performs traffic usage reporting, perform QoS handling for a user plane (e.g., packet filtering, gating, UL/DL rate enforcement), performs UL traffic verification (e.g., SDF-to-QoS flow mapping), transport level packet marking in the UL and DL, and performs DL packet buffering and DL data notification triggering. UPF 348 may include an UL classifier to support routing traffic flows to a data network.

The NSSF 350 selects a set of network slice instances serving the UE 302. The NSSF 350 also determines allowed NSSAI and the mapping to the subscribed S-NSSAIs, if needed. The NSSF 350 also determines an AMF set to be used to serve the UE 302, or a list of candidate AMFs 344 based on a suitable configuration and possibly by querying the NRF 354. The selection of a set of network slice instances for the UE 302 may be triggered by the AMF 344 with which the UE 302 is registered by interacting with the NSSF 350; this may lead to a change of AMF 344. The NSSF 350 interacts with the AMF 344 via an N22 reference point; and may communicate with another NSSF in a visited network via an N31 reference point (not shown).

The NEF 352 securely exposes services and capabilities provided by 3GPP NFs for third party, internal exposure/re-exposure, AFs 360, edge computing networks/frameworks, and the like. In such examples, the NEF 352 may authenticate, authorize, or throttle the AFs 360. The NEF 352 stores/retrieves information as structured data using the Nudr interface to a Unified Data Repository (UDR). The NEF 352 also translates information exchanged with the AF 360 and information exchanged with internal NFs. For example, the NEF 352 may translate between an AF-Service-Identifier and an internal 5GC information, such as DNN, S-NSSAI, as described in clause 5.6.7 of [TS23501]. In particular, the NEF 352 handles masking of network and user sensitive information to external AF's 360 according to the network policy. The NEF 352 also receives information from other NFs based on exposed capabilities of other NFs. This information may be stored at the NEF 352 as structured data, or at a data storage NF using standardized interfaces. The stored information can then be re-exposed by the NEF 352 to other NFs and AFs, or used for other purposes such as analytics. For example, NWDAF analytics may be securely exposed by the NEF 352 for external party, as specified in [TS23288]. Furthermore, data provided by an external party may be collected by the NWDAF 362 via the NEF 352 for analytics generation purpose. The NEF 352 handles and forwards requests and notifications between the NWDAF 362 and AF(s) 360, as specified in [TS23288]. In some examples, the NEF 352 can provide interface(s) to one or more edge compute nodes 338, which can be used to process wireless connections with the RAN 314 and/or to offload tasks to the edge compute nodes 338.

The NRF 354 supports service discovery functions, receives NF discovery requests from NF instances, and provides information of the discovered NF instances to the requesting NF instances. The NRF 354 also maintains NF profiles of available NF instances and their supported services. The NF profile of NF instance maintained in the NRF 354 includes the following information: NF instance ID; NF type; PLMN ID in the case of PLMN, PLMN ID + NID in the case of SNPN; Network Slice related Identifier(s) (e.g., S-NSSAI, NSI ID); an NF's network address(es) (e.g., FQDN, IP address, and/or the like), NF capacity information, NF priority information (e.g., for AMF selection), NF set ID, NF service set ID of the NF service instance; NF specific service authorization information; names of supported services, if applicable; endpoint address(es) of instance(s) of each supported service; identification of stored data/information (e.g., for UDR profile and/or other NF profiles); other service parameter(s) (e.g., DNN or DNN list, LADN DNN or LADN DNN list, notification endpoint for each type of notification that the NF service is interested in receiving, and/or the like); location information for the NF instance (e.g., geographical location, data center, and/or the like); TAI(s); NF load information; Routing Indicator, Home Network Public Key identifier, for UDM 358 and AUSF 342; for UDM 358, AUSF 342, and NSSAAF in the case of access to an SNPN using credentials owned by a Credentials Holder with AAA Server, identification of Credentials Holder (e.g., the realm of the Network Specific Identifier based SUPI); for UDM 358 and AUSF 342, and if UDM 358/AUSF 342 is used for access to an SNPN using credentials owned by a Credentials Holder, identification of Credentials Holder (e.g., the realm if network specific identifier based SUPI is used or the MCC and MNC if IMSI based SUPI is used); for AUSF 342 and NSSAAF in the case of SNPN Onboarding using a DCS with AAA server, identification of DCS (e.g., the realm of the Network Specific Identifier based SUPI); for UDM 358 and AUSF 342, and if UDM 358/AUSF 342is used as DCS in the case of SNPN Onboarding, identification of DCS ((e.g., the realm if Network Specific Identifier based SUPI, or the MCC and MNC if IMSI based SUPI); one or more GUAMI(s), in the case of AMF 344; for the UPF 348, see clause 5.2.7.2.2 of [TS23502]; UDM Group ID, range(s) of SUPIs, range(s) of GPSIs, range(s) of internal group identifiers, range(s) of external group identifiers for UDM 358; UDR Group ID, range(s) of SUPIs, range(s) of GPSIs, range(s) of external group identifiers for UDR; AUSF Group ID, range(s) of SUPIs for AUSF 342; PCF Group ID, range(s) of SUPIs for PCF 356; HSS Group ID, set(s) of IMPIs, set(s) of IMPU, set(s) of IMSIs, set(s) of PSIs, set(s) of MSISDN for HSS; event ID(s) supported by AFs 360, in the case of NEF 352; event Exposure service supported event ID(s) by UPF 348; application identifier(s) supported by AFs 360, in the case of NEF 352; range(s) of external identifiers, or range(s) of external group identifiers, or the domain names served by the NEF, in the case of NEF 352 (e.g., used when the NEF 352 exposes AF information for analytics purpose as detailed in [TS23288]; additionally the NRF 354 may store a mapping between UDM Group ID and SUPI(s), UDR Group ID and SUPI(s), AUSF Group ID and SUPI(s) and PCF Group ID and SUPI(s), to enable discovery of UDM 358, UDR, AUSF 342 and PCF 356 using SUPI, SUPI ranges as specified in clause 6.3 of [TS23501], and/or interact with UDR to resolve the UDM Group ID/UDR Group ID/AUSF Group ID/PCF Group ID based on UE identity (e.g., SUPI)); IP domain list as described in clause 6.1.6.2.21 of 3GPP TS 29.510 v18.2.0 (2023-03-29) ("[TS29510]"), Range(s) of (UE) IPv4 addresses or Range(s) of (UE) IPv6 prefixes, Range(s) of SUPIs or Range(s) of GPSIs or a BSF Group ID, in the case of BSF; SCP Domain the NF belongs to; DCCF Serving Area information, NF types of the data sources, NF Set IDs of the data sources, if available, in the case of DCCF 363; supported DNAI list, in the case of SMF 346; for SNPN, capability to support SNPN Onboarding in the case of AMF and capability to support User Plane Remote Provisioning in the case of SMF 346; IP address range, DNAI for UPF 348; additional V2X related NF profile parameters are defined in 3GPP TS 23.287; additional ProSe related NF profile parameters are defined in 3GPP TS 23.304; additional MBS related NF profile parameters are defined in 3GPP TS 23.247; additional UAS related NF profile parameters are defined in TS 23.256; among many others discussed in [TS23501]. In some examples, service authorization information provided by an OAM system is also included in the NF profile in the case that, for example, an NF instance has an exceptional service authorization information.

For NWDAF 362, the NF profile includes: supported analytics ID(s), possibly per service, NWDAF serving area information (e.g., a list of TAIs for which the NWDAF can provide services and/or data), Supported Analytics Delay per Analytics ID (if available), NF types of the NF data sources, NF Set IDs of the NF data sources, if available, analytics aggregation capability (if available), analytics metadata provisioning capability (if available), ML model filter information parameters S-NSSAI(s) and area(s) of interest for the trained ML model(s) per analytics ID(s) (if available), federated learning (FL) capability type (e.g., FL server or FL client, if available), Time interval supporting FL (if available). The NWDAF's 362 Serving Area information is common to all its supported analytics IDs. The analytics IDs supported by the NWDAF 362 may be associated with a supported analytics delay, for example, the analytics report can be generated with a time (including data collection delay and inference delay) in less than or equal to the supported analytics delay. The determination of supported analytics delay, and how the NWDAF 362 avoid updating its Supported Analytics Delay in NRF frequently may be NWDAF-implementation specific.

The PCF 356 provides policy rules to control plane functions to enforce them, and may also support unified policy framework to govern network behavior. The PCF 356 may also implement a front end to access subscription information relevant for policy decisions in a UDR 359 of the UDM 358. In addition to communicating with functions over reference points as shown, the PCF 356 exhibit an Npcf service-based interface.

The UDM 358 handles subscription-related information to support the network entities' handling of communication sessions, and stores subscription data of UE 302. For example, subscription data may be communicated via an N8 reference point between the UDM 358 and the AMF 344. The UDM 358 may include two parts, an application front end and a UDR. The UDR may store subscription data and policy data for the UDM 358 and the PCF 356, and/or structured data for exposure and application data (including PFDs for application detection, application request information for multiple UEs 302) for the NEF 352. The Nudr service-based interface may be exhibited by the UDR to allow the UDM 358, PCF 356, and NEF 352 to access a particular set of the stored data, as well as to read, update (e.g., add, modify), delete, and subscribe to notification of relevant data changes in the UDR. The UDM 358 may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 358 may exhibit the Nudm service-based interface.

Edge Application Server Discovery Function (EASDF) 361 exhibits an Neasdf service-based interface, and is connected to the SMF 346 via an N88 interface. One or multiple EASDF instances may be deployed within a PLMN, and interactions between 5GC NF(s) and the EASDF 361 take place within a PLMN. The EASDF 361 includes one or more of the following functionalities: registering to NRF 354 for EASDF 361 discovery and selection; handling the DNS messages according to the instruction from the SMF 346; and/or terminating DNS security, if used. Handling the DNS messages according to the instruction from the SMF 346 includes one or more of the following functionalities: receiving DNS message handling rules and/or BaselineDNSPattern from the SMF 346; exchanging DNS messages from/with the UE 302; forwarding DNS messages to C-DNS or L-DNS for DNS query; adding EDNS client subnet (ECS) option into DNS query for an FQDN; reporting to the SMF 346 the information related to the received DNS messages; and/or buffering/discarding DNS messages from the UE 302 or DNS Server. The EASDF has direct user plane connectivity (e.g., without any NAT) with the PSA UPF over N6 for the transmission of DNS signaling exchanged with the UE. The deployment of a NAT between EASDF 361 and PSA UPF 348 may or may not be supported. Additional aspects of the EASDF 361 are discussed in [TS23548].

AF 360 provides application influence on traffic routing, provide access to NEF 352, and interact with the policy framework for policy control. The AF 360 may influence UPF 348 (re)selection and traffic routing. Based on operator deployment, when AF 360 is considered to be a trusted entity, the network operator may permit AF 360 to interact directly with relevant NFs. In some implementations, the AF 360 is used for edge computing implementations.

An NF that needs to collect data from an AF 360 may subscribe/unsubscribe to notifications regarding data collected from an AF 360, either directly from the AF 360 or via NEF 352. The data collected from an AF 360 is used as input for analytics by the NWDAF 362. The details for the data collected from an AF 360 as well as interactions between NEF 352, AF 360 and NWDAF 362 are described in [TS23288].

The 5GC 340 may enable edge computing by selecting operator/3rd party services to be geographically close to a point that the UE 302 is attached to the network. This may reduce latency and load on the network. In edge computing implementations, the 5GC 340 may select a UPF 348 close to the UE 302 and execute traffic steering from the UPF 348 to DN 336 via the N6 interface. This may be based on the UE subscription data, UE location, and information provided by the AF 360, which allows the AF 360 to influence UPF (re)selection and traffic routing.

The data network (DN) 336 may represent various network operator services, Internet access, or third party services that may be provided by one or more servers including, for example, application (app)/content server 338. The DN 336 may be an operator external public, a private PDN, or an intra-operator packet data network, for example, for provision of IMS services. In this example, the app server 338 can be coupled to an IMS via an S-CSCF or the I-CSCF. In some implementations, the DN 336 may represent one or more local area DNs (LADNs), which are DNs 336 (or DN names (DNNs)) that is/are accessible by a UE 302 in one or more specific areas. Outside of these specific areas, the UE 302 is not able to access the LADN/DN 336.

Additionally or alternatively, the DN 336 may be an edge DN 336, which is a (local) DN that supports the architecture for enabling edge applications. In these examples, the app server 338 may represent the physical hardware systems/devices providing app server functionality and/or the application software resident in the cloud or at an edge compute node that performs server function(s). In some examples, the app/content server 338 provides an edge hosting environment that provides support required for Edge Application Server's execution.

In some examples, the 5GS can use one or more edge compute nodes to provide an interface and offload processing of wireless communication traffic. In these examples, the edge compute nodes may be included in, or co-located with one or more RANs 304 or RAN nodes 314. For example, the edge compute nodes can provide a connection between the RAN 304 and UPF 348 in the 5GC 340. The edge compute nodes can use one or more NFV instances instantiated on virtualization infrastructure within the edge compute nodes to process wireless connections to and from the RAN 314 and UPF 348.

In some implementations, the edge compute nodes provide a distributed computing environment for application and service hosting, and also provide storage and processing resources so that data and/or content can be processed in close proximity to subscribers (e.g., users of UEs 302) for faster response times. The edge compute nodes also support multitenancy run-time and hosting environment(s) for applications, including virtual appliance applications that may be delivered as packaged virtual machine (VM) images, middleware application and infrastructure services, content delivery services including content caching, mobile big data analytics, and computational offloading, among others. Computational offloading involves offloading computational tasks, workloads, applications, and/or services to the edge compute nodes from the UEs 302, CN 340, DN 336, and/or server(s) 338, or vice versa. For example, a device application or client application operating in a UE 302 may offload application tasks or workloads to one or more edge compute nodes. In another example, an edge compute node may offload application tasks or workloads to a set of UEs 302 (e.g., for distributed machine learning computation and/or the like).

The edge compute nodes may include or be part of an edge system that employs one or more edge computing technologies (ECTs) (also referred to as an "edge computing framework" or the like). The edge compute nodes may also be referred to as "edge hosts" or "edge servers." The edge system includes a collection of edge servers and edge management systems (not shown) necessary to run edge computing applications within an operator network or a subset of an operator network. The edge servers are physical computer systems that may include an edge platform and/or virtualization infrastructure, and provide compute, storage, and network resources to edge computing applications. Each of the edge servers are disposed at an edge of a corresponding access network, and are arranged to provide computing resources and/or various services (e.g., computational task and/or workload offloading, cloud-computing capabilities, IT services, and other like resources and/or services as discussed herein) in relatively close proximity to UEs 302. The VI of the edge compute nodes provide virtualized environments and virtualized resources for the edge hosts, and the edge computing applications may run as VMs and/or application containers on top of the VI.

In one example implementation, the ECT is and/or operates according to the MEC framework, as discussed in ETSI GRMEC 001 v3.1.1 (2022-01), ETSI GS MEC 003 v3.1.1 (2022-03), ETSI GS MEC 009 v3.1.1 (2021-06), ETSI GS MEC 010-1 v1.1.1 (2017-10), ETSI GS MEC 010-2 v2.2.1 (2022-02), ETSI GS MEC 011 v2.2.1 (2020-12), ETSI GS MEC 012 V2.2.1 (2022-02), ETSI GS MEC 013 V2.2.1 (2022-01), ETSI GS MEC 014 v2.1.1 (2021-03), ETSI GS MEC 015 v2.1.1 (2020-06), ETSI GS MEC 016 v2.2.1 (2020-04), ETSI GS MEC 021 v2.2.1 (2022-02), ETSI GR MEC 024 v2.1.1 (2019-11), ETSI GS MEC 028 V2.2.1 (2021-07), ETSI GS MEC 029 v2.2.1 (2022-01), ETSI MEC GS 030 v2.1.1 (2020-04), and ETSI GR MEC 031 v2.1.1 (2020-10) (collectively referred to herein as "[MEC]"), the contents of each of which are hereby incorporated by reference in their entireties. This example implementation (and/or in any other example implementation discussed herein) may also include NFV and/or other like virtualization technologies such as those discussed in ETSI GR NFV 001 V1.3.1 (2021-03), ETSI GS NFV 002 V1.2.1 (2014-12), ETSI GR NFV 003 V1.6.1 (2021-03), ETSI GS NFV 006 V2.1.1 (2021-01), ETSI GS NFV-INF 001 V1.1.1 (2015-01), ETSI GS NFV-INF 003 V1.1.1 (2014-12), ETSI GS NFV-INF 004 V1.1.1 (2015-01), ETSI GS NFV-MAN 001 v 1.1.1 (2014-12), and/or Israel et al., OSM Release FIVE Technical Overview, ETSI OPEN SOURCE MANO, OSM White Paper, 1st ed. (Jan. 2019), https://osm.etsi.org/images/OSM-Whitepaper-TechContent-ReleaseFIVE-FINAL.pdf (collectively referred to as "[ETSINFV]"), the contents of each of which are hereby incorporated by reference in their entireties. Other virtualization technologies and/or service orchestration and automation platforms may be used such as, for example, those discussed in E2E Network Slicing Architecture, GSMA, Official Doc. NG.127, v1.0 (03 Jun. 2021), https://www.gsma.com/newsroom/wp-content/uploads//NG.127-v1.0-2.pdf, Open Network Automation Platform (ONAP) documentation, Release Istanbul, v9.0.1 (17 Feb. 2022), https://docs.onap.org/en/latest/index.html ("[ONAP]"), 3GPP Service Based Management Architecture (SBMA) as discussed in 3GPP TS 28.533 v17.1.0 (2021-12-23) ("[TS28533]"), the contents of each of which are hereby incorporated by reference in their entireties.

In another example implementation, the ECT is and/or operates according to the O-RAN framework.. Various aspects of the O-RAN architecture are described in O-RAN Working Group 1 (Use Cases and Overall Architecture): O-RAN Architecture Description, O-RAN ALLIANCE WG1, O-RAN Architecture Description v09.00, Release R003 (Jun. 2023) ("[ORAN.OAD]"); O-RAN Working Group 1 Slicing Architecture, O-RAN ALLIANCE WG1, Slicing Architecture Technical Specification v10.00, Release R003 (Jun. 2023); O-RAN Working Group 1 Use Cases Detailed Specification Architecture, v11.00, Release R003 (Jun. 2023) ("[ORAN.UseCases]"); O-RAN Working Group 2 (Non-RT RIC and A1 interface WG) A1 interface: Application Protocol, v04.00, R003 (Mar. 2023) ("[ORAN.A1AP]"); O-RAN Working Group 2 (Non-RT RIC and A1 interface WG) A1 interface: General Aspects and Principles, v03.01, Release R003 (Mar. 2023) ("[ORAN.A1GAP]"); O-RAN Working Group 2 (Non-RT RIC and A1 interface WG) A1 interface: Type Definitions, v05.01, R003 (Jun. 2023) ("[ORAN.A1TD]"); O-RAN Working Group 2 (Non-RT RIC and A1 interface WG) A1 interface: Transport Protocol, v02.01, R003 (Mar. 2023); O-RAN Working Group 2 AI/ML workflow description and requirements v01.03 O-RAN ALLIANCE WG2 (Oct. 2021) ("[ORAN.AIML]"); O-RAN Working Group 2 (Non-RT RIC and A1 interface WG): R1 interface: General Aspects and Principles 5.0, v05.00, R003 (Jun. 2023); O-RAN Working Group 2 (Non-RT RIC and A1 interface WG) Non-RT RIC Architecture, v03.00, Release R003 (Jun. 2023) ("[O-RAN.Non-RT-RIC-ARCH]"); O-RAN Working Group 2 (Non-RT RIC and A1 interface WG): Use Cases and Requirements, v07.00, Release R003 (Jun. 2023) ("[O-RAN.Use-Case-Requirements]"); O-RAN Working Group 3 Near-Real-time RAN Intelligent Controller Architecture & E2 General Aspects and Principles, v03.01, Release R003 (Jun. 2023) ("[ORAN.E2GAP]"); O-RAN Working Group 3, Near-Real-time Intelligent Controller, E2 Application Protocol (E2AP), v03.01, Release R003 (Jun. 2023) ("[ORAN.E2AP]"); O-RAN Working Group 3 Near-Real-time Intelligent Controller E2 Service Model (E2SM), v03.01, Release R003 (Jun. 2023) ("[ORAN.E2SM]"); O-RAN Working Group 3 Near-Real-time Intelligent Controller E2 Service Model (E2SM) KPM, v03.00, Release R003 (Mar. 2023) ("[ORAN.E2SM-KPM]"); O-RAN Working Group 3 Near-Real-time Intelligent Controller E2 Service Model (E2SM), Cell Configuration and Control, v01.01, Release R003 (Mar. 2023) ("[ORAN.E2SM-CCC]"); O-RAN Working Group 3 Near-Real-time Intelligent Controller E2 Service Model (E2SM) RAN Function Network Interface (NI) v01.00 (Feb. 2020) ("[ORAN.E2SM-NI]"); O-RAN Working Group 3 Near-Real-time Intelligent Controller E2 Service Model (E2SM) RAN Control v03.00, Release R003 (Jun. 2023) ("[ORAN.E2SM-RC]"); O-RAN Working Group 3 (Near-Real-time RAN Intelligent Controller and E2 Interface Working Group): Near-RT RIC Architecture, v04.00, Release R003 (Mar. 2023) ("[ORAN.RICARCH]"); O-RAN Working Group 4 (Open Fronthaul Interfaces WG) Control, User and Synchronization Plane Specification, v12.00, Release R003 (Jun. 2023) ("[ORAN.CUS]"); O-RAN Fronthaul Working Group 4 Cooperative Transport Interface Transport Control Plane Specification, v04.00, Release R003 (Jun. 2023); O-RAN Fronthaul Working Group 4 Cooperative Transport Interface Transport Management Plane Specification, v12.00, Release R003 (Jun. 2023) ("[ORAN.MP]"); O-RAN Alliance Working Group 5 O1 Interface specification for O-CU-UP and O-CU-CP v05.00, Release R003 (Jun. 2023); O-RAN Alliance Working Group 5 O1 Interface specification for O-DU, v07.00, Release R003 (Jun. 2023); O-RAN Working Group 6, O2 Interface General Aspects and Principles 4.0, v04.00, Release R003 (Jun. 2023); O-RAN Working Group 6 (Cloudification and Orchestration) Cloud Architecture and Deployment Scenarios for O-RAN Virtualized RAN v04.00 (Oct. 2022) ("[ORAN.CADS]"); O-RAN Working Group 6 (Cloudification and Orchestration Work Group): O-RAN Acceleration Abstraction Layer General Aspects and Principles, v06.00, Release R003 (Jun. 2023); O-RAN Working Group 6: O-Cloud Notification API Specification for Event Consumers, v03.00 (Oct. 2022) ("[ORAN.O-CloudNotificationAPI]"); O-RAN White Box Hardware Working Group Hardware Reference Design Specification for Indoor Pico Cell with Fronthaul Split Option 6 v02.00, O-RAN ALLIANCE WG7 (Oct. 2021) ("[ORAN.IPC-HRD-Opt6]"); O-RAN WG7 Hardware Reference Design Specification for Indoor Picocell (FR1) with Split Architecture Option 7-2 v03.00, O-RAN ALLIANCE WG7 (Oct. 2021) ("[ORAN.IPC-HRD-Opt7-2]"); O-RAN WG7 Hardware Reference Design Specification for Indoor Picocell (FR1) with Split Architecture Option 8 v03.00 (Oct. 2021) ("[ORAN.IPC-HRD-Opt8]"); O-RAN White Box Hardware Working Group Hardware Reference Design Specification for Outdoor Micro Cell with Split Architecture Option 7.2 v03.00, O-RAN ALLIANCE WG7 (Oct. 2022) ("[ORAN.OMC-HRD-Opt7-2]"); O-RAN White Box Hardware Working Group Hardware Reference Design Specification for Outdoor Macrocell with Split Architecture Option 7.2, v03.00, Release R003 (Jun. 2023) ("[ORAN.OMAC-HRD]"); O-RAN Open X-haul Transport Working Group Management interfaces for Transport Network Elements, v06.00, Release R003 (Jun. 2023); O-RAN Open Transport Working Group 9 Xhaul Packet Switched Architectures and Solutions, v05.00, Release R003 (Jun. 2023) ("[ORAN.XPSAAS]"); O-RAN Open X-haul Transport Working Group Synchronization Architecture and Solution Specification, v03.00 (Oct. 2022); O-RAN Open Xhaul Transport WG9 WDM-based Fronthaul Transport, v03.00, Release R003 (Mar. 2023); O-RAN Operations and Maintenance Architecture, v09.00, Release R003 (Jun. 2023) ("[ORAN.OAM-Arch]"); O-RAN Operations and Maintenance Interface Specification, v10.00, O-RAN ALLIANCE WG10, Release R003 (Jun. 2023) ("[ORAN.O1-Interface]"); O-RAN Information Model and Data Models Specification v05.00, O-RAN ALLIANCE WG10, Release R003 (Jun. 2023); and O-RAN: Towards an Open and Smart RAN, O-RAN ALLIANCE, White Paper (Oct. 2018) (collectively referred to as "[O-RAN]"), the contents of each of which are hereby incorporated by reference in their entireties.

In another example implementation, the ECT is and/or operates according to the 3rd Generation Partnership Project (3GPP) System Aspects Working Group 6 (SA6) Architecture for enabling Edge Applications (referred to as "3GPP edge computing") as discussed in 3GPP TS 23.222 v18.2.0 (2023-06-21) ("[TS23222]"), 3GPP TS 23.401 v18.2.0 (2023-06-21), 3GPP TS 23.434 v18.5.0 (2023-06-21) ("[TS23434]"), 3GPP TS 23.501 v18.2.1 (2023-06-29) ("[TS23501]"), 3GPP TS 23.502 v18.2.0 (2023-06-29) ("[TS23502]"), 3GPP TS 23.548 v18.2.0 (2023-06-22) ("[TS23548]"), 3GPP TS 23.558 v18.3.0 (2023-06-21)("[TS23558]"), 3GPP TS 23.682 v18.0.0 (2023-03-31) ("[TS23682]"), 3GPP TR23.700-98 v18.1.0 (2023-03-31)("[TR23700-98]"), 3GPP TS 28.104 v18.0.1 (2023-06-22) ("[TS28104]"), 3GPP TS 28.105 v18.0.0 (2023-06-22) ("[TS28105]"), 3GPP TS 28.532 v17.5.2 (2023-07-05) ("[TS28532]"), 3GPP TS 28.533 v17.3.0 (2023-03-30) ("[TS28533]"), 3GPP TS 28.535 v17.7.0 (2023-06-22) ("[TS28535]"), 3GPP TS 28.536 v17.5.0 (2023-03-30) ("[TS28536]"), 3GPP TS 28.538 v18.3.0 (2023-06-22) ("[TS28538]"), 3GPP TS 28.541 v18.4.1 (2023-06-30) ("[TS28541]"), 3GPP TS 28.545 v17.0.0 (2021-06-24) ("[TS28545]"), 3GPP TS 28.550 v18.1.0 (2023-03-30) ("[TS28550]"), 3GPP TS 28.554 v18.2.0 (2023-06-22) ("[TS28554]"), 3GPP TS 28.622 v18.3.0 (2023-06-22) ("[TS28622]"), 3GPP TS 29.122 v18.2.0 (2023-06-26) ("[TS29122]"), 3GPP TS 29.222 v18.2.0 (2023-06-26) ("[TS29222]"), 3GPP TS 29.522 v18.2.0 (2023-06-27) ("[TS29522]"), 3GPP TR 28.908 v1.2.0 (2023-05-04) ("[TR28908]"), 3GPP TS 33.122 v18.0.0 (2023-06-22) ("[TS33122]") (collectively referred to as "[5GEdge]"), the contents of each of which are hereby incorporated by reference in their entireties.

In another example implementation, the ECT is and/or operates according to the Intel^{®} Smart Edge Open framework (formerly known as OpenNESS) as discussed in Intel^{®} Smart Edge Open Developer Guide, version 21.09 (30 Sep. 2021), available at: https://smart-edge-open.github.io/ ("[ISEO]"), the contents of which is hereby incorporated by reference in its entirety.

In another example implementation, the ECT operates according to the Multi-Access Management Services (MAMS) framework as discussed in Kanugovi et al., MultiAccess Management Services (MAMS), INTERNET ENGINEERING TASK FORCE (IETF), Request for Comments (RFC) 8743 (Mar. 2020) ("[RFC8743]"), Ford et al., TCP Extensions for Multipath Operation with Multiple Addresses, IETF RFC 8684, (Mar. 2020), De Coninck et al., Multipath Extensions for QUIC (MP-QUIC), IETF DRAFT-DECONINCK-QUIC-MULTIPATH-07, IETA, QUIC Working Group (03-May-2021), Zhu et al., User-Plane Protocols for Multiple Access Management Service, IETF DRAFT-ZHU-INTAREA-MAMS-USER-PROTOCOL-09, IETA, INTAREA (04-Mar-2020), and Zhu et al., Generic Multi-Access (GMA) Convergence Encapsulation Protocols, IETF RFC 9188 (Feb. 2022) (collectively referred to as "[MAMS]"), the contents of each of which are hereby incorporated by reference in their entireties.

It should be understood that the aforementioned edge computing frameworks/ECTs and services deployment examples are only illustrative examples of ECTs, and that the present disclosure may be applicable to many other or additional edge computing/networking technologies in various combinations and layouts of devices located at the edge of a network including the various edge computing networks/systems described herein. Further, the techniques disclosed herein may relate to other IoT edge network systems and configurations, and other intermediate processing entities and architectures may also be applicable to the present disclosure. Examples of such edge computing/networking technologies Examples of such edge computing/networking technologies include [MEC]; [O-RAN]; [ISEO]; [5GEdge]; Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other IoT edge network systems and configurations, and other intermediate processing entities and architectures may also be used for purposes of the present disclosure.

The interfaces of the 5GC 340 include reference points and service-based interfaces. A reference point, at least in some examples, is a point at the conjunction of two non-overlapping functional groups, elements, or entities. The reference points include: N1 (between the UE 302 and the AMF 344), N2 (between RAN 314 and AMF 344), N3 (between RAN 314 and UPF 348), N4 (between the SMF 346 and UPF 348), N5 (between PCF 356 and AF 360), N6 (between UPF 348 and DN 336), N7 (between SMF 346 and PCF 356), N8 (between UDM 358 and AMF 344), N9 (between two UPFs 348), N10 (between the UDM 358 and the SMF 346), N11 (between the AMF 344 and the SMF 346), N12 (between AUSF 342 and AMF 344), N13 (between AUSF 342 and UDM 358), N14 (between two AMFs 344; not shown), N15 (between PCF 356 and AMF 344 in case of a non-roaming scenario, or between the PCF 356 in a visited network and AMF 344 in case of a roaming scenario), N16 (between two SMFs 346; not shown), and N22 (between AMF 344 and NSSF 350). Other reference point representations not shown in FIG. 3 can also be used, such as any of those discussed in [TS23501].

The service-based representation of FIG. 3 represents NFs within the control plane that enable other authorized NFs to access their services. A service-based interface (SBI), at least in some examples, is an interface over which an NF can access the services of one or more other NFs. In some implementations, the service-based interfaces are API-based interfaces (e.g., northbound APIs, southbound APIs, HTTP/2, RESTful, SOAP, A1AP, E2AP, and/or any other API, web service, application layer and/or other communication protocol, such as any of those discussed herein) that can be used by an NF to call or invoke a particular service or service operation. The SBIs include: Namf (SBI exhibited by AMF 344), Nsmf (SBI exhibited by SMF 346), Nnef (SBI exhibited by NEF 352), Npcf (SBI exhibited by PCF 356), Nudm (SBI exhibited by the UDM 358), Naf (SBI exhibited by AF 360), Nnrf (SBI exhibited by NRF 354), Nnssf (SBI exhibited by NSSF 350), Nausf (SBI exhibited by AUSF 342). Other service-based interfaces (e.g., Nudr, N5g-eir, and Nudsf) not shown in FIG. 3 can also be used, such as any of those discussed in [TS23501].

Although not shown by FIG. 3, the system 300 may also include NFs that are not shown such as, for example, UDR, Unstructured Data Storage Function (UDSF), Network Slice Admission Control Function (NSACF), Network Slice-specific and Stand-alone Non-Public Network (SNPN) Authentication and Authorization Function (NSSAAF), UE radio Capability Management Function (UCMF), 5G-Equipment Identity Register (5G-EIR), CHarging Function (CHF), Time Sensitive Networking (TSN) AF 360, Time Sensitive Communication and Time Synchronization Function (TSCTSF), Data Collection Coordination Function (DCCF), Analytics Data Repository Function (ADRF), Messaging Framework Adaptor Function (MFAF), Binding Support Function (BSF), Non-Seamless WLAN Offload Function (NSWOF), Service Communication Proxy (SCP), Security Edge Protection Proxy (SEPP), Non-3GPP InterWorking Function (N3IWF), Trusted Non-3GPP Gateway Function (TNGF), Wireline Access Gateway Function (W-AGF), and/or Trusted WLAN Interworking Function (TWIF) as discussed in [TS23501].

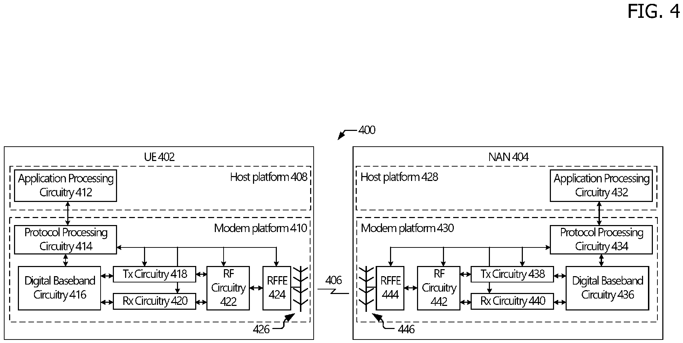

FIG. 4 illustrates an example wireless network 400 that includes a UE 402 communicatively coupled with a NAN 404 via connection 406. The UE 402 and NAN 404 may be the same or similar as the UE 302 and NAN 314, respectively. The connection 406 is an air interface to enable communicative coupling, which is consistent with cellular communications protocols, such as LTE, a 5G/NR operating at mmWave or sub-6GHz frequencies, and/or according to any other RAT discussed herein.

The UE 402 includes a host platform 408 coupled with a modem platform 410. The host platform 408 includes application processing circuitry 412, which is coupled with protocol processing circuitry 414 of the modem platform 410. The application processing circuitry 412 runs various applications for the UE 402 that source/sink application data. The application processing circuitry 412 implements one or more layer operations to transmit/receive application data to/from a data network. These layer operations include transport (e.g., UDP, TCP, QUIC, and/or the like), network (e.g., IP, and/or the like), and/or operations of other layers. The protocol processing circuitry 414 implements one or more of layer operations to facilitate transmission or reception of data over the connection 406. The layer operations implemented by the protocol processing circuitry 414 includes, for example, MAC, RLC, PDCP, RRC and NAS operations.

The modem platform 410 includes digital baseband circuitry 416 that implements one or more layer operations that are "below" layer operations performed by the protocol processing circuitry 414 in a network protocol stack. These operations includes, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which includes one or more of space-time, space-frequency or spatial coding, reference signal generation/detection, preamble sequence generation and/or decoding, synchronization sequence generation/detection, control channel signal blind decoding, and other related functions.

The modem platform 410 includes transmit (Tx) circuitry 418, receive (Rx) circuitry 420, radiofrequency (RF) circuitry 422, and an RF front end (RFFE) 424, which includes or connects to one or more antenna panels 426. The Tx circuitry 418 includes a digital-to-analog converter, mixer, intermediate frequency (IF) components, and/or the like; the Rx circuitry 420 includes an analog-to-digital converter, mixer, IF components, and/or the like; the RF circuitry 422 includes a low-noise amplifier, a power amplifier, power tracking components, and/or the like; the RFFE 424 includes filters (e.g., surface/bulk acoustic wave filters), switches, antenna tuners, beamforming components (e.g., phase-array antenna components), and/or the like; and the antenna panels 426 (also referred to as "Tx/Rx components") include one or more antenna elements, such as planar inverted-F antennas (PIFAs), monopole antennas, dipole antennas, loop antennas, patch antennas, Yagi antennas, parabolic dish antennas, omnidirectional antennas, and/or the like. The selection and arrangement of the components of the Tx circuitry 418, Rx circuitry 420, RF circuitry 422, RFFE 424, and antenna panels 426 may be specific to details of a specific implementation such as, for example, whether communication is TDM or FDM, in mmWave or sub-6 GHz frequencies, and/or the like. The Tx/Rx components may be arranged in multiple parallel Tx/Rx chains, may be disposed in the same or different chips/modules, and/or the like. The protocol processing circuitry 414 includes one or more instances of control circuitry (not shown) to provide control functions for the Tx/Rx components.

A UE reception is established by and via the antenna panels 426, RFFE 424, RF circuitry 422, Rx circuitry 420, digital baseband circuitry 416, and protocol processing circuitry 414. The antenna panels 426 may receive a transmission from the NAN 404 by receive-beamforming signals received by a set of antennas/antenna elements of the antenna panels 426. A UE transmission is established by and via the protocol processing circuitry 414, digital baseband circuitry 416, Tx circuitry 418, RF circuitry 422, RFFE 424, and antenna panels 426. The Tx components of the UE 404 may apply a spatial filter to the data to be transmitted to form a Tx beam emitted by the antenna elements of the antenna panels 426.

Similar to the UE 402, the NAN 404 includes a host platform 428 coupled with a modem platform 430. The host platform 428 includes application processing circuitry 432 coupled with protocol processing circuitry 434 of the modem platform 430. The modem platform may further include digital baseband circuitry 436, Tx circuitry 438, Rx circuitry 440, RF circuitry 442, RFFE circuitry 444, and antenna panels 446. The components of the NAN 404 may be similar to and substantially interchangeable with like-named components of the UE 402. In addition to performing data transmission/reception as described previously, the components of the NAN 408 may perform various logical functions that include, for example, RNC functions such as radio bearer management, uplink and downlink dynamic radio resource management, data packet scheduling, and/or various other functions, such as any of those discussed herein.

FIG. 5 illustrates components capable of reading instructions from a machine-readable or computer-readable medium (e.g., a non-transitory machine-readable storage medium) and perform any one or more of the methodologies discussed herein. Specifically, FIG. 5 shows hardware resources 500 including one or more processors (or processor cores) 510, one or more memory/storage devices 520, and one or more communication resources 530, each of which may be communicatively coupled via a bus 540 or other interface circuitry. For examples where node virtualization (e.g., NFV) is utilized, a hypervisor 502 may be executed to provide an execution environment for one or more network slices/sub-slices to utilize the hardware resources 500. In some examples, the hardware resources 500 may be implemented in or by an individual compute node, which may be housed in an enclosure of various form factors. In other examples, the hardware resources 500 may be implemented by multiple compute nodes that may be deployed in one or more data centers and/or distributed across one or more geographic regions.

The processors 510 may include, for example, a processor 512 and a processor 514. The processors 510 may be or include, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), a microprocessor or controller, a multi-core processor, a multithreaded processor, an ultra-low voltage processor, an embedded processor, an xPU, a data processing unit (DPU), an Infrastructure Processing Unit (IPU), a network processing unit (NPU), another processor (including any of those discussed herein), and/or any suitable combination thereof.

The memory/storage devices 520 may include main memory, disk storage, or any suitable combination thereof. The memory/storage devices 520 may include, but are not limited to, any type of volatile, non-volatile, semi-volatile memory, and/or any combination thereof. As examples, the memory/storage devices 520 can be or include random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, dual inline memory modules (DIMMs), microDIMMs, MiniDIMMs, block addressable memory device(s) (e.g., those based on NAND or NOR technologies (e.g., single-level cell (SLC), Multi-Level Cell (MLC), Quad-Level Cell (QLC), Tri-Level Cell (TLC), or some other NAND), read-only memory (ROM), programmable ROM (PROM), erasable PROM (EPROM), electrically EPROM (EEPROM), flash memory, non-volatile RAM (NVRAM), solid-state storage, magnetic disk storage mediums, optical storage mediums, memory devices that use chalcogenide glass, multi-threshold level NAND flash memory, NOR flash memory, single or multi-level Phase Change Memory (PCM) and/or phase change memory with a switch (PCMS), NVM devices that use chalcogenide phase change material (e.g., chalcogenide glass), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, and/or a combination of any of the aforementioned memory devices, and/or other memory.

The communication resources 530 may include interconnection or network interface controllers, components, or other suitable devices to communicate with one or more peripheral devices 504 or one or more databases 506 or other network elements via a network 508. For example, the communication resources 530 may include wired communication components (e.g., for coupling via USB, Ethernet, and/or the like), cellular communication components, NFC components, Bluetooth^{®} (or Bluetooth^{®} Low Energy) components, Wi-Fi^{®} components, and other communication components.

Instructions 550 comprise software, program code, application(s), applet(s), an app(s), firmware, microcode, machine code, and/or other executable code for causing at least any of the processors 510 to perform any one or more of the methodologies and/or techniques discussed herein. The instructions 550 may reside, completely or partially, within at least one of the processors 510 (e.g., within the processor's cache memory), the memory/storage devices 520, or any suitable combination thereof. Furthermore, any portion of the instructions 550 may be transferred to the hardware resources 500 from any combination of the peripheral devices 504 or the databases 506. Accordingly, the memory of processors 510, the memory/storage devices 520, the peripheral devices 504, and the databases 506 are examples of computer-readable and machine-readable media.

In some examples, the peripheral devices 504 may represent one or more sensors (also referred to as "sensor circuitry"). The sensor circuitry includes devices, modules, or subsystems whose purpose is to detect events or changes in its environment and send the information (sensor data) about the detected events to some other a device, module, subsystem, and/or the like. Individual sensors may be exteroceptive sensors (e.g., sensors that capture and/or measure environmental phenomena and/ external states), proprioceptive sensors (e.g., sensors that capture and/or measure internal states of a compute node or platform and/or individual components of a compute node or platform), and/or exproprioceptive sensors (e.g., sensors that capture, measure, or correlate internal states and external states). Examples of such sensors include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors, including sensors for measuring the temperature of internal components and sensors for measuring temperature external to the compute node or platform); pressure sensors; barometric pressure sensors; gravimeters; altimeters; image capture devices (e.g., cameras); light detection and ranging (LiDAR) sensors; proximity sensors (e.g., infrared radiation detector and the like); depth sensors, ambient light sensors; optical light sensors; ultrasonic transceivers; microphones; and the like.

Additionally or alternatively, the peripheral devices 504 may represent one or more actuators, which allow a compute node, platform, machine, device, mechanism, system, or other object to change its state, position, and/or orientation, or move or control a compute node, platform, machine, device, mechanism, system, or other object. The actuators comprise electrical and/or mechanical devices for moving or controlling a mechanism or system, and converts energy (e.g., electric current or moving air and/or liquid) into some kind of motion. As examples, the actuators can be or include any number and combination of the following: soft actuators (e.g., actuators that changes its shape in response to a stimuli such as, for example, mechanical, thermal, magnetic, and/or electrical stimuli), hydraulic actuators, pneumatic actuators, mechanical actuators, electromechanical actuators (EMAs), microelectromechanical actuators, electrohydraulic actuators, linear actuators, linear motors, rotary motors, DC motors, stepper motors, servomechanisms, electromechanical switches, electromechanical relays (EMRs), power switches, valve actuators, piezoelectric actuators and/or biomorphs, thermal biomorphs, solid state actuators, solid state relays (SSRs), shape-memory alloy-based actuators, electroactive polymer-based actuators, relay driver integrated circuits (ICs), solenoids, impactive actuators/mechanisms (e.g., jaws, claws, tweezers, clamps, hooks, mechanical fingers, humaniform dexterous robotic hands, and/or other gripper mechanisms that physically grasp by direct impact upon an object), propulsion actuators/mechanisms (e.g., wheels, axles, thrusters, propellers, engines, motors (e.g., those discussed previously), clutches, and the like), projectile actuators/mechanisms (e.g., mechanisms that shoot or propel objects or elements), and/or audible sound generators, visual warning devices, and/or other like electromechanical components. Additionally or alternatively, the actuators can include virtual instrumentation and/or virtualized actuator devices. Additionally or alternatively, the actuators can include various controller and/or components of the compute node or platform (or components thereof) such as, for example, host controllers, cooling element controllers, baseboard management controller (BMC), platform controller hub (PCH), uncore components (e.g., shared last level cache (LLC) cache, caching agent (Cbo), integrated memory controller (IMC), home agent (HA), power control unit (PCU), configuration agent (Ubox), integrated I/O controller (IIO), and interconnect (IX) link interfaces and/or controllers), and/or any other components such as any of those discussed herein. The compute node or platform may be configured to operate one or more actuators based on one or more captured events, instructions, control signals, and/or configurations received from a service provider, client device, and/or other components of a compute node or platform. Additionally or alternatively, the actuators are used to change the operational state (e.g., on/off, zoom or focus, and/or the like), position, and/or orientation of the sensors.

FIG. 6 illustrates an example cellular network 600. The network 600 may operate in a matter consistent with 3GPP technical specifications or technical reports for 6G systems. In some examples, the network 600 may operate concurrently with network 300. For example, in some examples, the network 600 may share one or more frequency or bandwidth resources with network 300. As one specific example, a UE (e.g., UE 602) may be configured to operate in both network 600 and network 300. Such configuration may be based on a UE including circuitry configured for communication with frequency and bandwidth resources of both networks 300 and 600. In general, several elements of network 600 may share one or more characteristics with elements of network 300. For the sake of brevity and clarity, such elements may not be repeated in the description of network 600.

The network 600 may include a UE 602, which may include any mobile or non-mobile computing device designed to communicate with a RAN 608 via an over-the-air connection. The UE 602 may be similar to, for example, UE 302. The UE 602 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, and/or the like.

Although not specifically shown in FIG. 6, in some examples the network 600 may include a set of UEs coupled directly with one another via a sidelink interface. The UEs may be M2M/D2D devices that communicate using physical sidelink channels such as, but not limited to, PSBCH, PSDCH, PSSCH, PSCCH, PSFCH, and/or the like. Similarly, although not specifically shown in FIG. 6, the UE 602 may be communicatively coupled with an AP such as AP 306 as described with respect to FIG. 3. Additionally, although not specifically shown in FIG. 6, in some examples the RAN 608 may include one or more ANs such as NAN 314 as described with respect to FIG. 3. The RAN 608 and/or the AN of the RAN 608 may be referred to as a base station (BS), a RAN node, or using some other term or name.

The UE 602 and the RAN 608 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 608 may allow for communication between the UE 602 and a 6G core network (CN) 610. Specifically, the RAN 608 may facilitate the transmission and reception of data between the UE 602 and the 6G CN 610. The 6G CN 610 may include various functions such as NSSF 350, NEF 352, NRF 354, PCF 356, UDM 358, AF 360, SMF 346, and AUSF 342. The 6G CN 610 may additional include UPF 348 and DN 336 as shown in FIG. 6.

Additionally, the RAN 608 may include various additional functions that are in addition to, or alternative to, functions of a legacy cellular network such as a 4G or 5G network. Two such functions may include a Compute Control Function (Comp CF) 624 and a Compute Service Function (Comp SF) 636. The Comp CF 624 and the Comp SF 636 may be parts or functions of the Computing Service Plane. Comp CF 624 may be a control plane function that provides functionalities such as management of the Comp SF 636, computing task context generation and management (e.g., create, read, modify, delete), interaction with the underlaying computing infrastructure for computing resource management, and/or the like.. Comp SF 636 may be a user plane function that serves as the gateway to interface computing service users (such as UE 602) and computing nodes behind a Comp SF instance. Some functionalities of the Comp SF 636 may include: parse computing service data received from users to compute tasks executable by computing nodes; hold service mesh ingress gateway or service API gateway; service and charging policies enforcement; performance monitoring and telemetry collection, and/or the like. In some examples, a Comp SF 636 instance may serve as the user plane gateway for a cluster of computing nodes. A Comp CF 624 instance may control one or more Comp SF 636 instances.

Two other such functions may include a Communication Control Function (Comm CF) 628 and a Communication Service Function (Comm SF) 638, which may be parts of the Communication Service Plane. The Comm CF 628 may be the control plane function for managing the Comm SF 638, communication sessions creation/configuration/releasing, and managing communication session context. The Comm SF 638 may be a user plane function for data transport. Comm CF 628 and Comm SF 638 may be considered as upgrades of SMF 346 and UPF 348, which were described with respect to a 5G system in FIG. 3. The upgrades provided by the Comm CF 628 and the Comm SF 638 may enable service-aware transport. For legacy (e.g., 4G or 5G) data transport, SMF 346 and UPF 348 may still be used.

Two other such functions may include a Data Control Function (Data CF) 622 and Data Service Function (Data SF) 632 may be parts of the Data Service Plane. Data CF 622 may be a control plane function and provides functionalities such as Data SF 632 management, Data service creation/configuration/releasing, Data service context management, and/or the like. Data SF 632 may be a user plane function and serve as the gateway between data service users (such as UE 602 and the various functions of the 6G CN 610) and data service endpoints behind the gateway. Specific functionalities may include: parse data service user data and forward to corresponding data service endpoints, generate charging data, report data service status.

Another such function may be the Service Orchestration and Chaining Function (SOCF) 620, which may discover, orchestrate and chain up communication/computing/data services provided by functions in the network. Upon receiving service requests from users, SOCF 620 may interact with one or more of Comp CF 624, Comm CF 628, and Data CF 622 to identify Comp SF 636, Comm SF 638, and Data SF 632 instances, configure service resources, and generate the service chain, which could contain multiple Comp SF 636, Comm SF 638, and Data SF 632 instances and their associated computing endpoints. Workload processing and data movement may then be conducted within the generated service chain. The SOCF 620 may also responsible for maintaining, updating, and releasing a created service chain.

Another such function may be the service registration function (SRF) 612, which may act as a registry for system services provided in the user plane such as services provided by service endpoints behind Comp SF 636 and Data SF 632 gateways and services provided by the UE 602. The SRF 612 may be considered a counterpart of NRF 354, which may act as the registry for network functions.

Other such functions may include an evolved service communication proxy (eSCP) and service infrastructure control function (SICF) 626, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 612 and eSCP-U 634, for control plane service communication proxy and user plane service communication proxy, respectively. The SICF 626 may control and configure eCSP instances in terms of service traffic routing policies, access rules, load balancing configurations, performance monitoring, and/or the like.

Another such function is the AMF 644. The AMF 644 may be similar to 344, but with additional functionality. Specifically, the AMF 644 may include potential functional repartition, such as move the message forwarding functionality from the AMF 644 to the RAN 608.

Another such function is the service orchestration exposure function (SOEF) 618. The SOEF may be configured to expose service orchestration and chaining services to external users such as applications.

The UE 602 may include an additional function that is referred to as a computing client service function (comp CSF) 604. The comp CSF 604 may have both the control plane functionalities and user plane functionalities, and may interact with corresponding network side functions such as SOCF 620, Comp CF 624, Comp SF 636, Data CF 622, and/or Data SF 632 for service discovery, request/response, compute task workload exchange, and/or the like. The Comp CSF 604 may also work with network side functions to decide on whether a computing task should be run on the UE 602, the RAN 608, and/or an element of the 6G CN 610.

The UE 602 and/or the Comp CSF 604 may include a service mesh proxy 606. The service mesh proxy 606 may act as a proxy for service-to-service communication in the user plane. Capabilities of the service mesh proxy 606 may include one or more of addressing, security, load balancing, and/or the like.

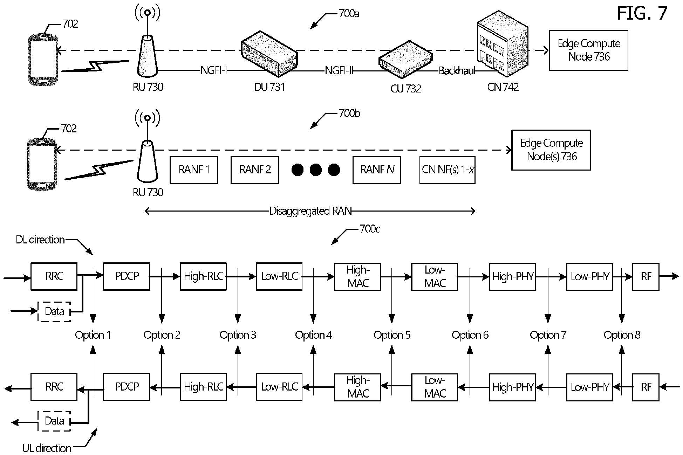

FIG. 7 shows example network deployments including an example next generation fronthaul (NGF) deployment 700a where a user equipment (UE) 702 is connected to an RU 730 (also referred to as a "remote radio unit 730", "a remote radio head 730", or " RRH 730") via an air interface, the RU 730 is connected to a Digital Unit (DU) 731 via a NGF interface (NGFI)-I, the DU 731 is connected to a Central Unit (CU) 732 via an NGFI-II, and the CU 732 is connected to a core network (CN) 742 via a backhaul interface. In 3GPP NG-RAN implementations (see e.g., [TS38401]), the DU 731 may be a distributed unit (for purposes of the present disclosure, the term "DU" may refer to a digital unit and/or a distributed unit unless the context dictates otherwise). The UEs 702 may be the same or similar to, and/or share one or more features with UE 302, UE 402, hardware resources 500, UE 602, UE 1105, and/or any other UE described herein.

In some implementations, the NGF deployment 700a may be arranged in a distributed RAN (D-RAN) architecture where the CU 732, DU 731, and RU 730 reside at a cell site and the CN 742 is located at a centralized site. Alternatively, the NGF deployment 700a may be arranged in a centralized RAN (C-RAN) architecture with centralized processing of one or more baseband units (BBUs) at the centralized site. In C-RAN architectures, the radio components are split into discrete components, which can be located in different locations. In one example C-RAN implementation, only the RU 730 is disposed at the cell site, and the DU 731, the CU 732, and the CN 742 are centralized or disposed at a central location. In another example C-RAN implementation, the RU 730 and the DU 731 are located at the cell site and the CU 732 and the CN 742 are at the centralized site. In another example C-RAN implementation, only the RU 730 is disposed at the cell site, the DU 731 and the CU 732 are located a RAN hub site, and the CN 742 is at the centralized site.

The CU 732 is a central controller that can serve or otherwise connect to one or multiple DUs 731 and/or multiple RUs 730. The CU 732 is network (logical) nodes hosting higher/upper layers of a network protocol functional split. For example, in the 3GPP NG-RAN and/or O-RAN architectures, a CU 732 hosts the radio resource control (RRC), Service Data Adaptation Protocol (SDAP), and/or Packet Data Convergence Protocol (PDCP) layers of a next generation NodeB (gNB), or hosts the RRC and PDCP protocol layers when included in or operating as an E-UTRA-NR gNB (en-gNB). The SDAP sublayer performs mapping between QoS flows and a data radio bearers (DRBs) and marking QoS flow IDs (QFI) in both DL and UL packets. The PDCP sublayer performs transfers user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery. In various implementations, a CU 732 terminates respective F1 interfaces connected with corresponding DUs 731 (see e.g., [TS38401]).

A CU 732 may include a CU-control plane (CP) entity (referred to herein as "CU-CP 732") and a CU-user plane (UP) entity (referred to herein as "CU-UP 732"). The CU-CP 732 is a logical node hosting the RRC layer and the control plane part of the PDCP protocol layer of the CU 732 (e.g., a gNB-CU for an en-gNB or a gNB). The CU-CP terminates an E1 interface connected with the CU-UP and the F1-C interface connected with a DU 731. The CU-UP 732 is a logical node hosting the user plane part of the PDCP protocol layer (e.g., for a gNB-CU 732 of an en-gNB), and the user plane part of the PDCP protocol layer and the SDAP protocol layer (e.g., for the gNB-CU 732 of a gNB). The CU-UP 732 terminates the E1 interface connected with the CU-CP 732 and the F1-U interface connected with a DU 731.

The DU 731 controls radio resources, such as time and frequency bands, locally in real time, and allocates resources to one or more UEs. The DUs 731 are network (logical) nodes hosting middle and/or lower layers of the network protocol functional split. For example, in the 3GPP NG-RAN and/or O-RAN architectures, a DU 731 hosts the radio link control (RLC), medium access control (MAC), and high-phy sical (PHY) layers of the gNB or en-gNB, and its operation is at least partly controlled by the CU 732. The RLC sublayer operates in one or more of a Transparent Mode (TM), Unacknowledged Mode (UM), and Acknowledged Mode (AM). The RLC sublayer performs transfer of upper layer PDUs; sequence numbering independent of the one in PDCP (UM and AM); error Correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; and/or protocol error detection (AM only). The MAC sublayer performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding. In some implementations, a DU 731 can host a Backhaul Adaptation Protocol (BAP) layer (see e.g., 3GPP TS 38.340 v17.5.0 (2023-06-30)) and/or a F1 application protocol (FlAP) (see e.g., 3GPP TS 38.470 v17.5.0 (2023-06-29)), such as when the DU 731 is operating as an Integrated Access and Backhaul (IAB) node. One DU 731 supports one or multiple cells, and one cell is supported by only one DU 731. A DU 731 terminates the F1 interface connected with a CU 732. Additionally or alternatively, the DU 731 may be connected to one or more RRHs/RUs 730.

The RU 730 is a transmission/reception point (TRP) or other physical node that handles radiofrequency (RF) processing functions. The RU 730 is a network (logical) node hosting lower layers based on a lower layer functional split. For example, in 3GPP NG-RAN and/or O-RAN architectures, the RU 730 hosts low-PHY layer functions and RF processing of the radio interface based on a lower layer functional split. The RU 730 may be similar to 3GPP's transmission/reception point (TRP) or RRH, but specifically includes the Low-PHY layer. Examples of the low-PHY functions include fast Fourier transform (FFT), inverse FFT (iFFT), physical random access channel (PRACH) extraction, and the like.

Each of the CUs 732, DUs 731, and RUs 730 are connected through respective links, which may be any suitable wireless and/or wired (e.g., fiber, copper, and the like) links. In some implementations, various combinations of the CU 732, DU 731, and RU 730 may correspond to one or more of the RAN 304, NAN 314, AP 306, and/or any other NAN, such as any of those discussed herein. Additional aspects of CUs 732, DUs 731, and RUs 730 are discussed in [O-RAN], [TS38401], [TS38410], and [TS38300], the contents of each of which are hereby incorporated by reference in their entireties.

In some implementations, a fronthaul gateway function (FHGW) may be disposed between the DU 731 and the RU/RRU 730 (not shown by FIG. 7), where the interface between the DU 731 and the FHGW is an Open Fronthaul (e.g., Option 7-2x) interface, the interface between FHGW function and the RU/RRU 730 is an Open Fronthaul (e.g., Option 7-2x) interface or any other suitable interface (e.g., option 7, option 8, or the like) including those that do not support Open Fronthaul (e.g., Option 7-2x). The FHGW may be packaged with one or more other functions (e.g., Ethernet switching and/or the like) in a physical device or appliance. In some implementations, a RAN controller may be communicatively coupled with the CU 732 and/or the DU 731.

The NGFI (also referred to as "xHaul" or the like) is a two-level fronthaul architecture that separates the traditional RRU 730 to BBU connectivity in the C-RAN architecture into two levels, namely levels I and II. Level I connects the RU 730 via the NGFI-I to the DU 731, and level II connects the DU 731 via the NGFI-II to the CU 732 as shown by deployment 700a in FIG. 7. The NGFI-I and NGFI-II connections may be wired connections or wireless connections, which may utilize any suitable RAT such as any of those discussed herein. The purpose of the two-level architecture is to distribute (split) the RAN node protocol functions between CU 732 and DU 731 such that latencies are relaxed, giving more deployment flexibilities. In general, the NGFI-I interfaces with the lower layers of the function split which have stringent delay and data rate requirements, whereas NGFI-II interfaces with higher layers of the function split relative to the layers of the NGFI-I, relaxing the requirements for the fronthaul link. Examples of the NGFI fronthaul interfaces and functional split architectures include O-RAN 7.2x fronthaul (see e.g., [ORAN.XPSAAS] and [ORAN.CUS]), Enhanced Common Radio Interface (CPRI) based C-RAN fronthaul (see e.g., Common Public Radio Interface: eCPRI Interface Specification, eCPRI Specification v2.0 (2019-05-10), Common Public Radio Interface: Requirements for the eCPRI Transport Network, eCPRI Transport Network v1.2 (2018-06-25), and [ORAN.CUS]), Radio over Ethernet (RoE) based C-RAN fronthaul (see e.g., IEEE Standard for Radio over Ethernet Encapsulations and Mappings, IEEE Standards Association, IEEE 1914.3-2018 (05 Oct. 2018) ("[IEEE1914.3]")), and/or the like. Additional aspects ofNGFI are also discussed in [ORAN.XPSAAS], [ORAN.CUS], IEEE Standard for Packet-based Fronthaul Transport Networks, IEEE Standards Association, IEEE 1914.1-2019 (21 Apr. 2020) ("[IEEE1914.1]"), [IEEE1914.3], and Nasrallah et al., Ultra-Low Latency (ULL) Networks: A Comprehensive Survey Covering the IEEE TSN Standard and Related ULL Research, arXiv:1803.07673v1 [cs.NI] (20 Mar. 2018) ("[Nasrallah]"), the contents of each of which are hereby incorporated by reference in their entireties.

In one example, the deployment 700a may implement a low level split (LLS) (also referred to as a "Lower Layer Functional Split 7-2x" or "Split Option 7-2x") that runs between the RU 730 (e.g., an O-RU in O-RAN architectures) and the DU 731 (e.g., an O-DU in O-RAN architectures) (see e.g., [ORAN.IPC-HRD-Opt7-2], [ORAN.OMAC-HRD], [ORAN.OMC-HRD-Opt7-2], [ORAN.OMC-HRD-Opt7-2]). In this example implementation, the NGFI-I is the Open Fronthaul interface described in the O-RAN Open Fronthaul Specification (see e.g., [ORAN.CUS]). Other LLS options may be used such as the relevant interfaces described in other standards or specifications such as, for example, the 3GPP NG-RAN functional split (see e.g., [TS38401] and 3GPP TR 38.801 v14.0.0 (2017-04-03)), the Small Cell Forum for Split Option 6 (see e.g., 5G small cell architecture and product definitions: Configurations and Specifications for companies deploying small cells 2020-2025, Small Cell Forum, document 238.10.01 (05 Jul. 2020) ("[SCF238]"), 5G NR FR1 Reference Design: The case for a common, modular architecture for 5G NR FR1 small cell distributed radio units, Small Cell Forum, document 251.10.01 (15 Dec. 2021) ("[SCF251]"), and [ORAN.IPC-HRD-Opt6], the contents of each of which are hereby incorporated by reference in their entireties), and/or in O-RAN white-box hardware Split Option 8 (e.g., [ORAN.IPC-HRD-Opt8]).

Additionally or alternatively, the CUs 732, DUs 731, and/or RUs 730 may be IAB nodes. IAB enables wireless relaying in an NG-RAN where a relaying node (referred to as an "IAB-node") supports access and backhauling via 3GPP 5G/new radio (NR) links/interfaces. The terminating node of NR backhauling on the network side is referred to as an "IAB-donor", which represents a RAN node (e.g., a gNB) with additional functionality to support IAB. Backhauling can occur via a single or via multiple hops. All IAB-nodes that are connected to an IAB-donor via one or multiple hops form a directed acyclic graph (DAG) topology with the IAB-donor as its root. The IAB-donor performs centralized resource, topology and route management for the IAB topology. The IAB architecture is shown and described in [TS38300].

Although the NGF deployment 700a shows the CU 732, DU 731, RRH 730, and CN 742 as separate entities, in other implementations some or all of these network nodes can be bundled, combined, or otherwise integrated with one another into a single device or element, including collapsing some internal interfaces (e.g., F1-C, F1-U, E1, E2, and the like). At least the following implementations are possible: (i) integrating the CU 732 and the DU 731 (e.g., a CU-DU), which is connected to the RRH 730 via the NGFI-I; (ii) integrating the DU 731 and the RRH 730 integrated (e.g., CU-DU), which is connected to the CU 732 via NGFI-II; (iii) integrating a RAN controller and the CU 732, which is connected to the DU 731 via NGFI-II; (iv) integrating the CU 732, the DU 731, and the RU 730, which is connected to the CN 742 via backhaul interface; and (v) integrating the network controller (or intelligent controller), the CU 732, the DU 731, and the RU 730. Any of the aforementioned example implementations involving the CU 732 may also include integrating the CU-CP 732 and CP-UP 732.

FIG. 7 also shows an example RAN disaggregation deployment 700b (also referred to as "disaggregated RAN 700b") where the UE 702 is connected to the RRH 730, and the RRH 730 is communicatively coupled with one or more of the RAN functions (RANFs) 1-*N* (where N is a number). The RANFs 1-*N* are disaggregated and distributed geographically across several component segments and network nodes. In some implementations, each RANF 1-*N* is a software (SW) element operated by a physical compute node and the RRH 730 includes radiofrequency (RF) circuitry (e.g., an RF propagation module for a particular RAT and/or the like). In this example, the RANF 1 is operated on a physical compute node that is co-located with the RRH 730 and the other RANFs are disposed at locations further away from the RRH 730. Additionally in this example, the CN 742 is also disaggregated into CN NFs 1-x (where x is a number) in a same or similar manner as the RANFs 1-*N*, although in other implementations the CN 742 is not disaggregated.

Network disaggregation (or disaggregated networking) involves the separation of networking equipment into functional components and allowing each component to be individually deployed. This may encompass separation of SW elements (e.g., NFs) from specific HW elements and/or using APIs to enable software defined network (SDN) and/or and NF virtualization (NFV). RAN disaggregation involves network disaggregation and virtualization of various RANFs (e.g., RANFs 1-N in FIG. 7). The RANFs 1-N can be placed in different physical sites in various topologies in a RAN deployment based on the use case. This enables RANF distribution and deployment over different geographic areas and allows a breakout of RANFs to support various use cases (e.g., low latency use cases and the like) as well as flexible RAN implementations. Disaggregation offers a common or uniform RAN platform capable of assuming a distinct profile depending on where it is deployed. This allows fewer fixed-function devices, and a lower total cost of ownership, in comparison with existing RAN architectures. Example RAN disaggregation frameworks are provided by Telecom Infra Project (TIP) OpenRAN^{™}, Cisco^{®} Open vRAN^{™}, [O-RAN], Open Optical & Packet Transport (OOPT), Reconfigurable Optical Add Drop Multiplexer (ROADM), and/or the like.

In a first example implementation, the RANFs 1-N disaggregate RAN HW and SW with commercial off-the-shelf (COTS) HW and open interfaces (e.g., NGFI-I and NGFI-II, and the like). In this example implementation, each RANF 1-N may be a virtual BBU or vRAN controller operating on COTS compute infrastructure with HW acceleration for BBU/vRANFs.

In a second example implementation, the RANFs 1-N disaggregate layers of one or more RAT protocol stacks. As an example of this implementation, RANF 1 is a DU 731 operating on first COTS compute infrastructure with HW acceleration for BBU/vRANFs, and RANF 2 is a virtual CU 732 operating on second COTS compute infrastructure.

In a third example implementation, the RANFs 1-N disaggregate control plane and user plane functions. As an example of this implementation, the RANF 1 is a DU 731 operating on COTS compute infrastructure with HW acceleration for BBU/vRANFs, RANF 2 is a virtual CU-CP 732 operating on COTS compute infrastructure, and a third RANF (e.g., RANF 3 (not shown by FIG. 7)) is a virtual CU-UP 732 operating on the same or different COTS compute infrastructure as the virtual CU-CP 732. Additionally or alternatively, in this implementation, one or more CN NFs 1-x may be CN-UP functions and one or more other CN NFs 1-x may be CN-CP functions.

In a fourth example implementation, the RANFs 1-N disaggregate layers of an [IEEE802] RAT. As an example of this implementation, the RRH 730 implements a WiFi PHY layer, RANF 1 implements a WiFi MAC sublayer, RANF 1 implements a WiFi logical link control (LLC) sublayer, RANF 2 implements one or more WiFi upper layer protocols (e.g., network layer, transport layer, session layer, presentation layer, and/or application layer), and so forth.

In a fifth example implementation, the RANFs 1-N disaggregate different O-RAN RANFs including E2SMs. As an example of this implementation, RANF 1 implements the near-RT RIC, RANF 2 implements the E2SM-KPM, RANF 3 implements the E2SM-CCC, RANF 4 implements the E2SM RAN control, RANF 5 implements the E2SM-NI, RANF 6 implements functions for providing A1 services, and so forth.

In any of the implementations discussed herein, the lower layers of the RAN protocol stack can be characterized by real-time (RT) functions and relatively complex signal processing algorithms, and the higher layers of the RAN protocol stack can be characterized by non-RT functions. In these implementations, the RT functions and signal processing algorithms can be implemented in DUs 731 and/or RRHs 730 either using purpose-built network elements or in COTS hardware augmented with purpose-built HW accelerators.

FIG. 7 also shows various functional split options 700c, for both DL and UL directions. The traditional RAN is an integrated network architecture based on a distributed RAN (D-RAN) model, where D-RAN integrates all RANFs into a few network elements. As alluded to previously, the disaggregated RAN architecture provides flexible function split options to overcome various drawbacks of the D-RAN model. The disaggregated RAN breaks up the integrated network system into several function components that can then be individually re-located as needed without hindering their ability to work together to provide a holistic network services. The split options 700c are mostly split between the CU 732 and the DU 731, but can include a split between the CU 732, DU 731, and RU 730. For each option 700c, protocol entities on the left side of the figure are included in the RANF implementing the CU 732 and the protocol entities on the right side of the figure are included in the RANF implementing the DU 731. For example, the Option 2 function split includes splitting non-RT processing (e.g., RRC and PDCP layers) from RT processing (e.g., RLC, MAC, and PHY layers), where the RANF implementing the CU 732 performs network functions of the RRC and PDCP layers, and the RANF implementing the DU 731 performs the baseband processing functions of the RLC (including high-RLC and low-RLC), MAC (including high-MAC and low-MAC), and PHY layers. In some implementations, the PHY layer is further split between the DU 731 and the RU 730, where the RANF implementing the DU 731 performs the high-PHY layer functions and the RU 730 handles the low-PHY layer functions. In some implementations, the Low-PHY entity may be operated by the RU 730 regardless of the selected functional split option. Under the Option 2 split, the RANF implementing the CU 732 can connect to multiple DU 731 (e.g., the CU 732 is centralized), which allows RRC and PDCP anchor change to be eliminated during a handover across DUs 731 and allows the centralized CU 732 to pool resources across several DUs 731. In these ways, the option 2 function split can improve resource efficiencies. The particular function split option used may vary depending on the service requirements and network deployment scenarios, and may be implementation specific. It should also be noted that in some implementations, all of the function split options can be selected where each protocol stack entity is operated by a respective RANF (e.g., a first RANF operates the RRC layer, a second RANF operates the PDCP layer, a third RANF operates the high-RLC layer, and so forth until an eighth RANF operates the low-PHY layer). Other split options are possiple such as those discussed in [ORAN.IPC-HRD-Opt6], [ORAN.IPC-HRD-Opt7-2], [ORAN.IPC-HRD-Opt8], [ORAN.OMAC-HRD], and [ORAN.OMC-HRD-Opt7-2].

### 3.1. MANAGEMENT SERVICES (MnS) ASPECTS

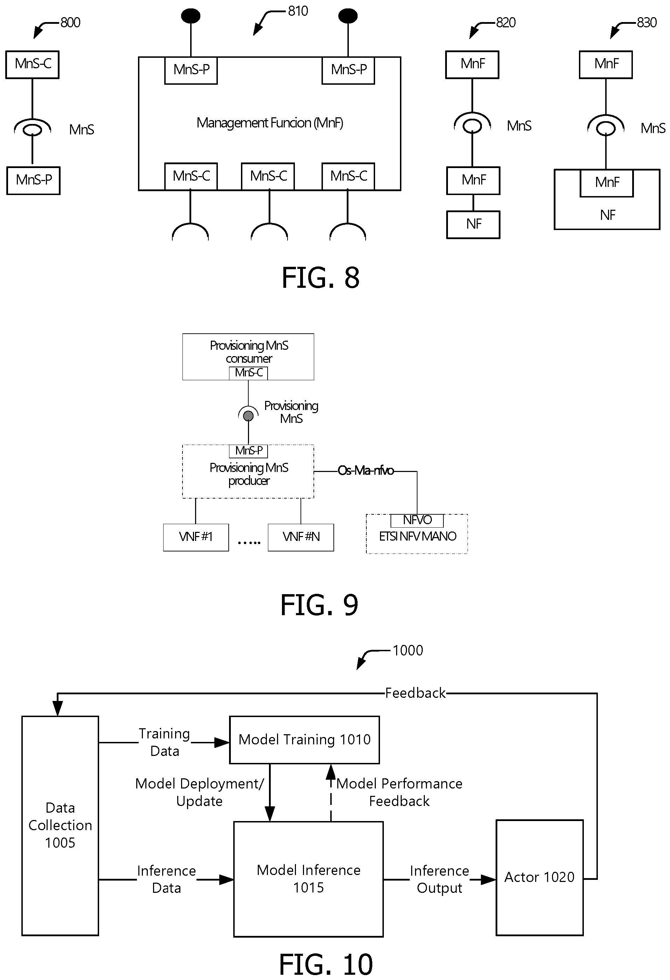

FIG. 8 depicts an example of management services (MnS) deployment 800. MnS is a Service Based Management Architecture (SBMA). An MnS is a set of offered management capabilities (e.g., capabilities for management and orchestration (MANO) of network and services). The entity producing an MnS is referred to as an MnS producer (MnS-P) and the entity consuming an MnS is referred to as an MnS-C. An MnS provided by an MnS-P can be consumed by any entity with appropriate authorization and authentication. As shown by FIG. 1, the MnS-P offers its services via a standardized service interface composed of individually specified MnS components (e.g., MnS-C).

A MnS is specified using different independent components. A concrete MnS includes at least two of these components. Three different component types are defined, including MnS component type A, MnS component type B, and MnS component type C. An MnS component type A is a group of management operations and/or notifications that is agnostic with regard to the entities managed. The operations and notifications as such are hence not involving any information related to the managed network. These operations and notifications are called generic or network agnostic. For example, operations for creating, reading, updating and deleting managed object instances, where the managed object instance to be manipulated is specified only in the signature of the operation, are generic. An MnS component type B refers to management information represented by information models representing the managed entities. An MnS component type B is also called Network Resource Model (NRM) (see e.g., [TS28622], [TS28541]). MnS component type C is performance information of the managed entity and fault information of the managed entity. Examples of management service component type C include alarm information (see e.g., [TS28532] and [TS28545]) and performance data (see e.g., [TS28552], [TS28554], and [TS32425]).

An MnS-P is described by a set of metadata called MnS-P profile. The profile holds information about the supported MnS components and their version numbers. This may include also information about support of optional features. For example, a read operation on a complete subtree of managed object instances may support applying filters on the scoped set of objects as optional feature. In this case, the MnS profile should include the information if filtering is supported.

FIG. 8 also depicts an example management function (MnF) deployment 810. The MnF is a logical entity playing the roles of MnS-C and/or MnS-P. An MnF with the role of management service exposure governance is referred to as an "Exposure governance management function" or "exposure governance MnF". An MnS produced by an MnF 810 may have multiple consumers. The MnF 810 may consume multiple MnS from one or multiple MnS-Ps. In the MnF deployment 810, the MnF plays both roles (e.g., MnS-P and MnS-C). An MnF can be deployed as a separate entity or embedded in a network function (NF) to provide MnS(s). For example, MnF deployment scenario 820 shows an example where the MnF is deployed as a separate entity to provide MnS(s) and MnF deployment scenario 830 in which an MnF is embedded in an NF to provide MnS(s). In these examples, the MnFs may interact by consuming MnS produced by other MnFs

The 3GPP management system is also capable to consume NFV MANO interface (e.g., Os-Ma-nfvo, Ve-Vnfm-em, and Ve-Vnfm-vnf reference points). An MnS-P can consume management interfaces provided by NFV MANO for at least the following purposes: network service LCM; and VNF LCM, PM, FM, CM on resources supporting VNF. FIG. 9 shows an example framework of provisioning MnS where an MnS-P interfaces to an ETSI NFV MANO to support lifecycle management of VNFs.

### 4. AI/ML ASPECTS

AI/ML is widely used in fifth generation (5G) systems (5GS), including 5G core (5GC) (e.g., Network Data Analytics Function (NWDAF) 362 in FIG. 3), next generation radio access networks (NG-RANs) 304 (e.g., RAN intelligence functions; see e.g., [TS38300] and [TS38401]), and management system (e.g., management data analytics service (MDAS); see e.g., [TS28104], [TS28105], [TR28908], [TS28533], [TS28535], [TS28536], and [TS28550]). Aspects of AI/ML being used in the 5GS are discussed infra.

FIG. 10 depicts an example functional framework 1000 for ML and/or RAN intelligence. The functional framework 1000 includes a data collection function 1005, which is a function that provides input data to the model training function 1010 and model inference function 1015. AI/ML algorithm-specific data preparation (e.g., data pre-processing and cleaning, formatting, and transformation) may or may not be carried out in the data collection function 1005. Examples of input data may include measurements from UEs 302, RAN nodes 314, and/or additional or alternative network entities; feedback from actor 1020; and/or output(s) from AI/ML model(s). The input data fed to the model training function 1010 is training data, and the input data fed to the model inference function 1015 is inference data.

The model training function 1010 is a function that performs the AI/ML model training, validation, and testing. The model training function 1010 may generate model performance metrics as part of the model testing procedure and/or as part of the model validation procedure. Examples of the model performance metrics are discussed infra. The model training function 1010 may also be responsible for data preparation (e.g., data pre-processing and cleaning, formatting, and transformation) based on training data delivered by the data collection function 1005, if required.

The model training function 1010 performs model deployment/updates, wherein the model training function 1010 initially deploys a trained, validated, and tested AI/ML model to the model inference function 1015, and/or delivers updated model(s) to the model inference function 1015. Examples of the model deployments and updates are discussed infra.

The model inference function 1015 is a function that provides AI/ML model inference output (e.g., statistical inferences, predictions, decisions, probabilities and/or probability distributions, actions, configurations, policies, data analytics, outcomes, optimizations, and/or the like). The model inference function 1015 may provide model performance feedback to the model training function 1010 when applicable. The model performance feedback may include various performance metrics (e.g., any of those discussed herein) related to producing inferences. The model performance feedback may be used for monitoring the performance of the AI/ML model, when available. The model inference function 1015 may also be responsible for data preparation (e.g., data pre-processing and cleaning, formatting, and transformation) based on inference data delivered by the data collection function 1005, if required.

The model inference function 1015 produces an inference output, which is the inferences generated or otherwise produced when the model inference function 1015 operates the AI/ML model using the inference data. The model inference function 1015 provides the inference output to the actor 1020. Details of inference output are use case specific and may be based on the specific type of AI/ML model being used (see e.g., Figures 18-19).

The actor 1020 is a function that receives the inference output from the model inference function 1015, and triggers or otherwise performs corresponding actions based on the inference output. The actor 1020 may trigger actions directed to other entities and/or to itself. In some examples, the actor 1020 is an NES function, a mobility optimization function, and/or a load balancing function. Additionally or alternatively, the inference output is related to NES, mobility optimization, and/or load balancing, and the actor 1020 is one or more RAN nodes 1314 that perform various NES operations, mobility optimization operations, and/or load balancing operations based on the inferences.

The actor 1020 may also provide feedback to the data collection function 1005 for storage. The feedback includes information related to the actions performed by the actor 1020. The feedback may include any information that may be needed to derive training data (and/or testing data and/or validation data), inference data, and/or data to monitor the performance of the AI/ML model and its impact to the network through updating of KPIs, performance counters, and the like.

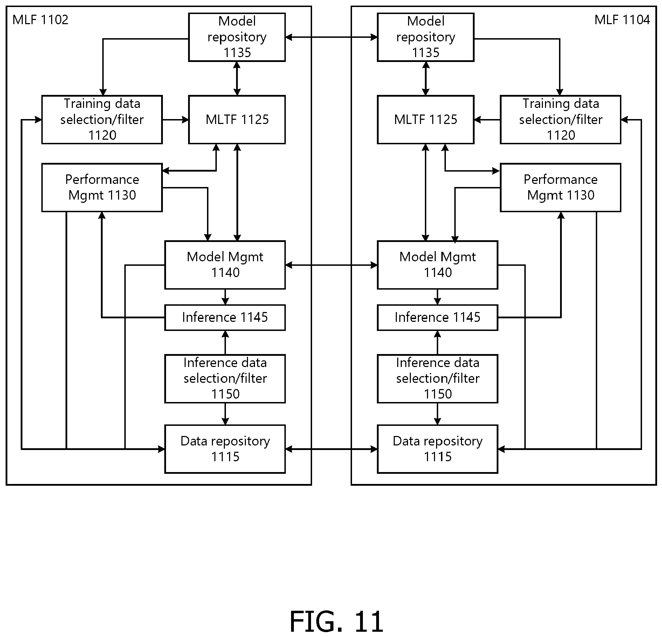

FIG. 11 depicts an example AI/ML-assisted communication network, which includes communication between an ML function (MLF) 1102 and an MLF 1104. In some implementations, AI/ML models/entities may be used or leveraged to facilitate wired and/or over-the-air communication between the MLF 1102 and the MLF 1104. In this example, the MLF 1102 and the MLF 1104 operate in a matter consistent with 3GPP technical specifications and/or technical reports for 5G and/or 6G systems, such as any of those discussed herein. In some examples, the communication mechanisms between the MLF 1102 and the MLF 1104 include any suitable access technologies and/or RATs, such as any of those discussed herein. Additionally, the communication mechanisms in FIG. 11 may be part of, or operate concurrently with the components, devices, systems, networks, and/or deployments of Figures 1, 2, 3, 4, 6, 7, 8-9, and/or some other components, devices, systems, networks, and/or deployments described herein.

The MLFs 1102, 1104 may correspond to any of the entities/elements discussed herein. In one example, the MLF 1102 corresponds to an MnF and/or MnS-P and the MLF 1104 corresponds to a consumer 310, an MnS-C, or vice versa. Additionally or alternatively, the MLF 1102 corresponds to a set of the MLFs of Figures 8-9 and the MLF 1104 corresponds to a different set of the MLFs of Figures 8-9. In this example, the sets of MLFs may be mutually exclusive, or some or all of the MLFs in each of the sets of MLFs may overlap or be shared. In another example, the MLF 1102 and/or the MLF 1104 is/are implemented by respective UEs (e.g., UE 302, UE 402). Additionally or alternatively, the MLF 1102 and/or the MLF 1104 is/are implemented by a same UE or different UEs. In another example, the MLF 1102 and/or the MLF 1104 is/are implemented by respective RANs (e.g., RAN 304) or respective NANs (e.g., AP 306, NAN 314, NAN 404). Additionally or alternatively, some or all of the elements/entities in individual MLFs 1102, 1104 can be implemented or operated by separate entities/elements.

As shown by FIG. 11, the MLF 1102 and the MLF 1104 include various AI/ML-related components, functions, elements, or entities, which may be implemented as hardware, software, firmware, and/or some combination thereof. In some examples, one or more of the AI/ML-related elements are implemented as part of the same hardware (e.g., IC, chip, or multiprocessor chip), software (e.g., program, process, engine, and/or the like), or firmware as at least one other component, function, element, or entity. The AI/ML-related elements of MLF 1102 may be the same or similar to the AI/ML-related elements of MLF 1104. For the sake of brevity, description of the various elements is provided from the point of view of the MLF 1102, however it will be understood that such description applies to like named/numbered elements of MLF 1104, unless explicitly stated otherwise.

The data repository 1115 is responsible for data collection and storage. As examples, the data repository 1115 may collect and store RAN configuration parameters, NF configuration parameters, measurement data, RLM data, key performance indicators (KPIs), SLAs, model performance metrics, knowledge base data, ground truth data, ML model parameters, hyperparameters, and/or other data for model training, update, and inference. In some examples, a data collection function (not shown) is part or connected to the data repository 1115. The data collection function is a function that provides input data to the MLTF 1125 and model inference function 1145. AI/ML algorithm-specific data preparation (e.g., data pre-processing and cleaning, formatting, and transformation) may or may not be carried out in the data collection function 1605. Examples of input data may include measurements from UEs 302, RAN nodes 314, and/or additional or alternative network entities; feedback from actor 1620; and/or output(s) from AI/ML model(s). The input data fed to the MLTF 1125 is training data, and the input data fed to the model inference function 1145 is inference data.

The collected data is stored in/by the repository 1115, and the stored data can be discovered and extracted by other elements from the data repository 1115. For example, the inference data selection/filter 1150 may retrieve data from the data repository 1115 and provide that data to the inference engine 1145 for generating/determining inferences. In various examples, the MLF 1102 is configured to discover and request data from the data repository 1115 in the MLF 1104, and/or vice versa. In these examples, the data repository 1115 of the MLF 1102 may be communicatively coupled with the data repository 1115 of the MLF 1104 such that the respective data repositories 1115 may share collected data with one another. Additionally or alternatively, the MLF 1102 and/or MLF 1104 is/are configured to discover and request data from one or more external sources and/or data storage systems/devices.

The training data selection/filter 1120 is configured to generate training, validation, and testing datasets for ML training (MLT) (or ML model training). One or more of these datasets may be extracted or otherwise obtained from the data repository 1115. Data may be selected/filtered based on the specific AI/ML model to be trained. Data may optionally be transformed, augmented, and/or pre-processed (e.g., normalized) before being loaded into datasets. The training data selection/filter 1120 may label data in datasets for supervised learning, or the data may remain unlabeled for unsupervised learning. The produced datasets may then be fed into the MLT function (MLTF) 1125.

The MLTF 1125 is responsible for training and updating (e.g., tuning and/or re-training) AI/ML models. A selected model (or set of models) may be trained using the fed-in datasets (including training, validation, testing) from the training data selection/filtering 1120. The MLTF 1125 produces trained and tested AI/ML models that are ready for deployment. The produced trained and tested models can be stored in a model repository 1135. Additionally or alternatively, the MLTF 1125 performs AI/ML model training, validation, and testing. The MLTF 1125 may generate model performance metrics as part of the model testing procedure and/or as part of the model validation procedure. Examples of the model performance metrics are discussed infra. The MLTF 1125 may also be responsible for data preparation (e.g., data pre-processing and cleaning, formatting, and transformation) based on training data delivered by the data collection function and/or the training data selection/filter 1120, if required. The MLTF 1125 performs model deployment/updates, wherein the MLTF 1125 initially deploys a trained, validated, and tested AI/ML model to the model inference function 1145, and/or delivers updated model(s) to the model inference function 1145. Examples of the model deployments and updates are discussed infra.

The model repository 1135 is responsible for AI/ML models' (both trained and un-trained) storage and exposure. Various model data can be stored in the model repository 1135. The model data can include, for example, trained/updated model(s), model parameters, hyperparameters, and/or model metadata, such as model performance metrics, hardware platform/configuration data, model execution parameters/conditions, and/or the like. In some examples, the model data can also include inferences made when operating the ML model. Examples of AI/ML models and other ML model aspects are discussed infra w.r.t Figures 18 and 19. The model data may be discovered and requested by other MLF components (e.g., the training data selection/filter 1120 and/or the MLTF 1125). In some examples, the MLF 1102 can discover and request model data from the model repository 1135 of the MLF 1104. Additionally or alternatively, the MLF 1104 can discover and/or request model data from the model repository 1135 of the MLF 1102. In some examples, the MLF 1104 may configure models, model parameters, hyperparameters, model execution parameters/conditions, and/or other ML model aspects in the model repository 1135 of the MLF 1102.

The model management (mgmt) function 1140 is responsible for mgmt of the AI/ML model produced by the MLTF 1125. Such mgmt functions may include deployment of a trained model, monitoring ML entity performance, reporting ML entity validation and/or performance data, and/or the like. In model deployment, the model mgmt 1140 may allocate and schedule hardware and/or software resources for inference, based on received trained and tested models. For purposes of the present disclosure, the term "inference" refers to the process of using trained AI/ML model(s) to generate statistical inferences, predictions, decisions, probabilities and/or probability distributions, actions, configurations, policies, data analytics, outcomes, optimizations, and/or the like based on new, unseen data (e.g., "input inference data"). In some examples, the inference process can include feeding input inference data into the ML model (e.g., inference engine 1145), forward passing the input inference data through the ML model's architecture/topology wherein the ML model performs computations on the data using its learned parameters (e.g., weights and biases), and predictions output. In some examples, the inference process can include data transformation before the forward pass, wherein the input inference data is preprocessed or transformed to match the format required by the ML model. In performance monitoring, based on model performance KPIs and/or metrics, the model mgmt 1140 may decide to terminate the running model, start model re-training and/or tuning, select another model, and/or the like. In examples, the model mgmt 1140 of the MLF 1104 may be able to configure model mgmt policies in the MLF 1102, and vice versa.

The inference data selection/filter 1150 is responsible for generating datasets for model inference at the inference 1145, as described infra. For example, inference data may be extracted from the data repository 1115. The inference data selection/filter 1150 may select and/or filter the data based on the deployed AI/ML model. Data may be transformed, augmented, and/or pre-processed in a same or similar manner as the transformation, augmentation, and/or pre-processing of the training data selection/filtering as described w.r.t training data selection filter 1120. The produced inference dataset may be fed into the inference engine 1145.

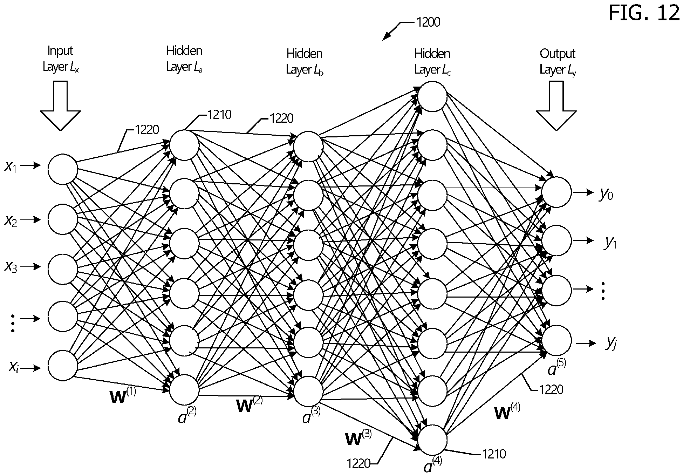

The inference engine 1145 (also referred to as "model inference function 1145" and/or the like) is responsible for executing/generating inferences as described herein. The inference engine 1145 consumes an inference dataset provided by the inference data selection/filter 1150, and generates an AI/ML model inference output, which includes one or more inferences. The inferences may be or include, for example, statistical inferences, predictions, decisions, probabilities and/or probability distributions, actions, configurations, policies, data analytics, outcomes, optimizations, and/or the like. The inference(s)/outcome(s) may be provided to the performance measurement function 1130. The model inference function 1145 may provide model performance feedback to the MLTF 1125 and/or the performance measurement function 1130, when applicable. The model performance feedback may include various performance metrics (e.g., any of those discussed herein) related to producing inferences. The model performance feedback may be used for monitoring the performance of the AI/ML model, when available. The model inference function 1145 may also be responsible for data preparation (e.g., data pre-processing and cleaning, formatting, and transformation) based on inference data delivered by the data collection function and/or the inference data selection/filter 1150, if required. The model inference function 1145 produces an inference output, which is the inferences generated or otherwise produced when the model inference function 1145 operates the AI/ML model using the inference data(set). Details of inference output are use case specific and may be based on the specific type of AI/ML model being used (see e.g., Figures 12-13).

In some examples, the model inference function 1145 provides the inference output to an actor (not shown). The actor is a function, engine, component, device, system, network, and/or other entity that receives an inference output from the model inference function 1145, and triggers or otherwise performs corresponding action(s) based on the inference output. The actor may trigger actions directed to other entities and/or to itself. In some examples, the actor is an network energy savings (NES) function, a mobility robustness optimization (MRO) function, a load balancing optimization (LBO) function, and/or some other self-organizing network (SON) function. Additionally or alternatively, the inference output is related to NES, MRO, and/or LBO, and the actor is one or more RAN nodes 314 that perform various to NES, MRO, and/or LBO operations based on the inferences. The actor may also provide feedback to the performance measurement function 1130 and/or the data collection function/ data repository 1115 for storage. The actor feedback includes information related to the actions performed by the actor. The feedback includes, for example, any information that may be needed to derive training data, testing data, and/or validation data; inference data; and/or data to monitor the performance of the AI/ML model and its impact to the network through updating of KPIs, performance counters, and/or the like.

The performance measurement function 1130 is configured to measure model performance metrics (e.g., accuracy, momentum, precision, quantile, recall/sensitivity, model bias, run-time latency, resource consumption, and/or other suitable metrics/measures, such as any of those discussed herein) of deployed and executing models based on the inference(s) for monitoring purposes. Model performance data may be stored in the data repository 1115 and/or reported according to the validation reporting mechanisms discussed herein.

The performance metrics that may be measured and/or predicted by the performance measurement function 1130 may be based on the particular AI/ML task and the other inputs/parameters of the ML entity. The performance metrics may include model-based metrics and platform-based metrics. The model-based metrics are metrics related to the performance of the model itself and/or without considering the underlying hardware platform. The platform-based metrics are metrics related to the performance of the underlying hardware platform when operating the ML model.

The model-based metrics may be based on the particular type of AI/ML model and/or the AI/ML domain. For example, regression-related metrics may be predicted for regression-based ML models. Examples of regression-related metrics include error value, mean error, mean absolute error (MAE), mean reciprocal rank (MRR), mean squared error (MSE), root MSE (RMSE), correlation coefficient (R), coefficient of determination (R²), Golbraikh and Tropsha criterion, and/or other like regression-related metrics such as those discussed in Naser et al., Insights into Performance Fitness and Error Metrics for Machine Learning, arXiv:2006.00887v1 (17 May 2020) ("[Naser]"), which is hereby incorporated by reference in its entirety.

In another example, correlation-related metrics may be predicted for correlation-related metrics Examples of correlation-related metrics include accuracy, precision (also referred to as positive predictive value (PPV)), mean average precision (mAP), negative predictive value (NPV), recall (also referred to as true positive rate (TPR) or sensitivity), specificity (also referred to as true negative rate (TNR) or selectivity), false positive rate, false negative rate, F score (e.g., F₁ score, F₂ score, F_{β} score, etc.), Matthews Correlation Coefficient (MCC), markedness, receiver operating characteristic (ROC), area under the ROC curve (AUC), distance score, and/or other like correlation-related metrics such as those discussed in [Naser].

Additional or alternative model-based metrics may also be predicted such as, for example, cumulative gain (CG), discounted CG (DCG), normalized DCG (NDCG), signal-to-noise ratio (SNR), peak SNR (PSNR), structural similarity (SSIM), Intersection over Union (IoU), perplexity, bilingual evaluation understudy (BLEU) score, inception score, Wasserstein metric, Fréchet inception distance (FID), string metric, edit distance, Levenshtein distance, Damerau-Levenshtein distance, number of evaluation instances (e.g., iterations, epochs, or episodes), learning rate (e.g., the speed at which the algorithm reaches (converges to) optimal weights), learning rate decay (or weight decay), number and/or type of computations, number and/or type of multiply and accumulates (MACs), number and/or type of multiply adds (MAdds) operations and/or other like performance metrics related to the performance of the ML model.

Examples of the platform-based metrics include latency, response time, throughput (e.g., rate of processing work of a processor or platform/system), availability and/or reliability, power consumption (e.g., performance per Watt, and/or the like), transistor count, execution time (e.g., amount of time to obtain an inference, and/or the like), memory footprint, memory utilization, processor utilization, processor time, number of computations, instructions per second (IPS), floating point operations per second (FLOPS), and/or other like performance metrics related to the performance of the ML model and/or the underlying hardware platform to be used to operate the ML model.

Additionally or alternatively, proxy metrics (e.g., a metric or attribute used as a stand-in or substitute for another metric or attribute) can be used for predicting the ML model performance. For any of the aforementioned performance metrics, the total, mean, and/or some other distribution of such metrics may be predicted and/or measured using any suitable data collection and/or measurement mechanism(s).

FIG. 12 illustrates an example NN 1200, which may be suitable for use by one or more of the computing systems (or subsystems) of the various implementations discussed herein, implemented in part by a HW accelerator, and/or the like. The NN 1200 may be deep neural network (DNN) used as an artificial brain of a compute node or network of compute nodes to handle very large and complicated observation spaces. Additionally or alternatively, the NN 1200 can be some other type of topology (or combination of topologies), such as a convolution NN (CNN), deep CNN (DCN), recurrent NN (RNN), Long Short Term Memory (LSTM) network, a Deconvolutional NN (DNN), gated recurrent unit (GRU), deep belief NN, a feed forward NN (FFN), a deep FNN (DFF), deep stacking network, Markov chain, perception NN, Bayesian Network (BN) or Bayesian NN (BNN), Dynamic BN (DBN), Linear Dynamical System (LDS), Switching LDS (SLDS), Optical NNs (ONNs), an NN for reinforcement learning (RL) and/or deep RL (DRL), and/or the like. NNs are usually used for supervised learning, but can be used for unsupervised learning and/or RL.

The NN 1200 may encompass a variety of ML techniques where a collection of connected artificial neurons 1210 that (loosely) model neurons in a biological brain that transmit signals to other neurons/nodes 1210. The neurons 1210 may also be referred to as nodes 1210, processing elements (PEs) 1210, or the like. The connections 1220 (or edges 1220) between the nodes 1210 are (loosely) modeled on synapses of a biological brain and convey the signals between nodes 1210. Note that not all neurons 1210 and edges 1220 are labeled in FIG. 12 for the sake of clarity.

Each neuron 1210 has one or more inputs and produces an output, which can be sent to one or more other neurons 1210 (the inputs and outputs may be referred to as "signals"). Inputs to the neurons 1210 of the input layer *Lₓ* can be feature values of a sample of external data (e.g., input variables *xᵢ*). The input variables *xᵢ* can be set as a vector containing relevant data (e.g., observations, ML features, and the like). The inputs to hidden units 1210 of the hidden layers *Lₐ*, *L_{b}*, and *L_{c}* may be based on the outputs of other neurons 1210. The outputs of the final output neurons 1210 of the output layer *L_{y}* (e.g., output variables *yⱼ*) include predictions, inferences, and/or accomplish a desired/configured task. The output variables *yⱼ* may be in the form of determinations, inferences, predictions, and/or assessments. Additionally or alternatively, the output variables *yⱼ* can be set as a vector containing the relevant data (e.g., determinations, inferences, predictions, assessments, and/or the like).

In the context of ML, an "ML feature" (or simply "feature") is an individual measureable property or characteristic of a phenomenon being observed. Features are usually represented using numbers/numerals (e.g., integers), strings, variables, ordinals, real-values, categories, and/or the like. Additionally or alternatively, ML features are individual variables, which may be independent variables, based on observable phenomenon that can be quantified and recorded. ML models use one or more features to make predictions or inferences. In some implementations, new features can be derived from old features.

Neurons 1210 may have a threshold such that a signal is sent only if the aggregate signal crosses that threshold. A node 1210 may include an activation function, which defines the output of that node 1210 given an input or set of inputs. Additionally or alternatively, a node 1210 may include a propagation function that computes the input to a neuron 1210 from the outputs of its predecessor neurons 1210 and their connections 1220 as a weighted sum. A bias term can also be added to the result of the propagation function.

The NN 1200 also includes connections 1220, some of which provide the output of at least one neuron 1210 as an input to at least another neuron 1210. Each connection 1220 may be assigned a weight that represents its relative importance. The weights may also be adjusted as learning proceeds. The weight increases or decreases the strength of the signal at a connection 1220.

The neurons 1210 can be aggregated or grouped into one or more layers L where different layers L may perform different transformations on their inputs. In FIG. 12, the NN 1200 comprises an input layer *Lₓ*, one or more hidden layers *Lₐ*, *L_{b}*, and *L_{c},* and an output layer *L_{y}* (where *a*, *b*, *c*, *x*, and *y* may be numbers),where each layer L comprises one or more neurons 1210. Signals travel from the first layer (e.g., the input layer *L*₁), to the last layer (e.g., the output layer *L_{y}*), possibly after traversing the hidden layers *Lₐ*, *L_{b}*, and *L_{c}* multiple times. In FIG. 12, the input layer *Lₐ* receives data of input variables *xᵢ* (where i = 1,...,*p*, where *p* is a number). Hidden layers *Lₐ, L_{b},* and *L_{c}* processes the inputs *xᵢ*, and eventually, output layer *L_{y}* provides output variables *yⱼ* (where *j =* 1,...,*p'*, where *p'* is a number that is the same or different than p). In the example of FIG. 12, for simplicity of illustration, there are only three hidden layers *Lₐ, L_{b},* and *L_{c}* in the NN 1200, however, the NN 1200 may include many more (or fewer) hidden layers *Lₐ*, *L_{b}*, and *L_{c}* than are shown.

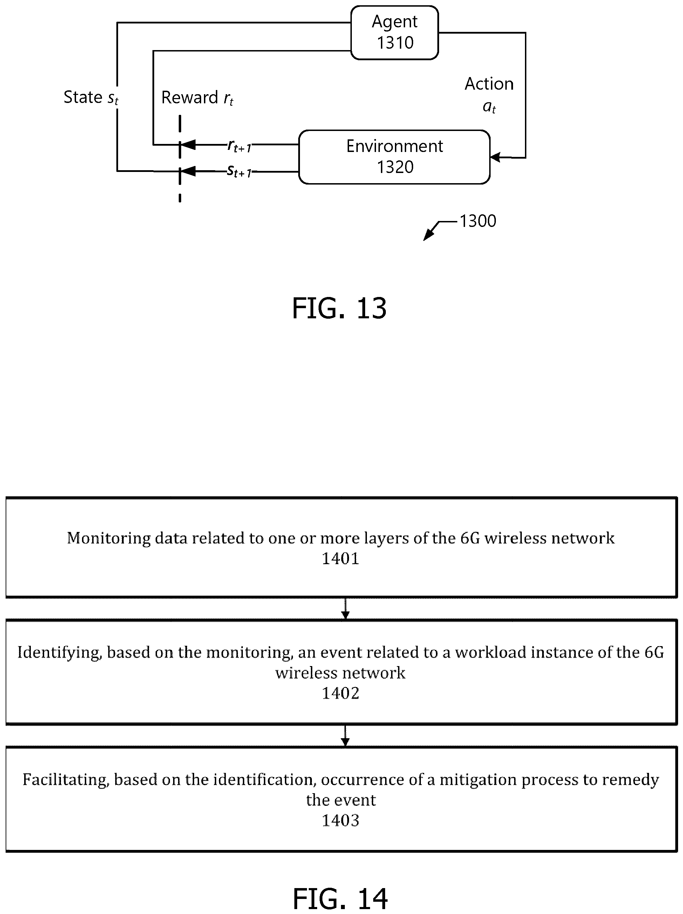

FIG. 13 shows an RL architecture 1300 comprising an agent 1310 and an environment 1320. The agent 1310 (e.g., software agent or AI agent) is the learner and decision maker, and the environment 1320 comprises everything outside the agent 1310 that the agent 1310 interacts with. The environment 1320 is typically stated in the form of a Markov decision process (MDP), which may be described using dynamic programming techniques. An MDP is a discrete-time stochastic control process that provides a mathematical framework for modeling decision making in situations where outcomes are partly random and partly under the control of a decision maker.

RL is a goal-oriented learning based on interaction with environment. RL is an ML paradigm concerned with how software agents (or AI agents) ought to take actions in an environment in order to maximize a numerical reward signal. In general, RL involves an agent taking actions in an environment that is/are interpreted into a reward and a representation of a state, which is then fed back into the agent. In RL, an agent aims to optimize a long-term objective by interacting with the environment based on a trial and error process. In many RL algorithms, the agent receives a reward in the next time step (or epoch) to evaluate its previous action. Examples of RL algorithms include Markov decision process (MDP) and Markov chains, associative RL, inverse RL, safe RL, Q-learning, multi-armed bandit learning, and deep RL.

The agent 1310 and environment 1320 continually interact with one another, wherein the agent 1310 selects actions *A* to be performed and the environment 1320 responds to these Actions and presents new situations (or states S) to the agent 1310. The action A comprises all possible actions, tasks, moves, and/or the like., that the agent 1310 can take for a particular context. The state S is a current situation such as a complete description of a system, a unique configuration of information in a program or machine, a snapshot of a measure of various conditions in a system, and/or the like. In some implementations, the agent 1310 selects an action A to take based on a policy π. The policy π is a strategy that the agent 1310 employs to determine next action *A* based on the current state S. The environment 1320 also gives rise to rewards *R*, which are numerical values that the agent 1310 seeks to maximize over time through its choice of actions.

The environment 1320 starts by sending a state *Sₜ* to the agent 1310. In some implementations, the environment 1320 also sends an initial a reward *Rₜ* to the agent 1310 with the state *St.* The agent 1310, based on its knowledge, takes an action *At* in response to that state *St,* (and reward Rr, if any). The action *Aₜ* is fed back to the environment 1320, and the environment 1320 sends a state-reward pair including a next state *Sₜ₊₁* and reward *Rₜ₊₁* to the agent 1310 based on the action *Aₜ*. The agent 1310 will update its knowledge with the reward *Rₜ₊₁* returned by the environment 1320 to evaluate its previous action(s). The process repeats until the environment 1320 sends a terminal state *S*, which ends the process or episode. Additionally or alternatively, the agent 1310 may take a particular action A to optimize a value *V*. The value *V* an expected long-term return with discount, as opposed to the short-term reward *R. Vπ(S)* is defined as the expected long-term return of the current state S under policy π.

Q-learning is a model-free RL algorithm that learns the value of an action in a particular state. Q-learning does not require a model of an environment 1320, and can handle problems with stochastic transitions and rewards without requiring adaptations. The "Q" in Q-learning refers to the function that the algorithm computes, which is the expected reward(s) for an action *A* taken in a given state *S.* In Q-learning, a Q-value is computed using the state *Sₜ* and the action *Aₜ* time *t* using the function *Q_{π}*(*Sₜ* , *Aₜ*). *Q_{π}*(*Sₜ* , *Aₜ*) is the long-term return of a current state S taking action *A* under policy π. For any finite MDP (FMDP), Q-learning finds an optimal policy π in the sense of maximizing the expected value of the total reward over any and all successive steps, starting from the current state S. Additionally, examples of value-based deep RL include Deep Q-Network (DQN), Double DQN, and Dueling DQN. DQN is formed by substituting the Q-function of the Q-learning by an artificial neural network (ANN) such as a convolutional neural network (CNN).

### 5. EXAMPLE PROCEDURES

In some embodiments, the electronic device(s), network(s), system(s), chip(s) or component(s), or portions or implementations thereof, of Figures 1-13, or some other figure herein, may be configured to perform one or more processes, techniques, or methods as described herein, or portions thereof. One such process is depicted in FIG. 14. The process may include or relate to a method to be performed by a cloud management and orchestration system of a sixth generation (6G) wireless network. The process may include monitoring, at 1401, data related to one or more layers of the 6G wireless network; identifying, at 1402 based on the monitoring, an event related to a workload instance of the 6G wireless network; and facilitating, at 1403 based on the identification, occurrence of a mitigation process to remedy the event.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### 6. EXAMPLE IMPLEMENTATIONS

Example 1 includes an apparatus configured to support cloud management and orchestration of a next-generation system, wherein the apparatus comprises at least one of component with a capability of deploying one or more workloads.

Example 2 includes the apparatus of example 1 and/or some other example(s) herein, wherein the workload is either a network function or an application.

Example 3 includes the apparatus of examples 1-2 and/or some other example(s) herein, wherein the apparatus is configured to: receive a request to register the compute resource; and register the compute resource.

Example 4 includes the apparatus of example 3 and/or some other example(s) herein, wherein the request to register the compute resource contains at least one of the following information: compute resource type, capability, capability, location, energy efficiency level.

Example 5 includes the apparatus of examples 3-4 and/or some other example(s) herein, wherein the apparatus is configured to: verify the information of the registered compute resource, and/or update the information of the registered compute resource.

Example 6 includes the apparatus of examples 1-5 and/or some other example(s) herein, wherein the apparatus is configured to: receive a request from a consumer to deploy the instances for an application for which the image has been already onboarded, analyze the communication and computing requirements for the request, get the available capability of the communication and compute resources, get the performance of the communication and compute resources, select the compute resources for deploying the application instance(s), and deploy the application instances to the selected compute resources.

Example 7 includes the apparatus of example 6 and/or some other example(s) herein, wherein the communication and computing requirements are provided in the request.

Example 8 includes the apparatus of examples 6-7 and/or some other example(s) herein, wherein the communication and computing requirements are generated based on service level agreement (SLA) and/or subscription data.

Example 9 includes the apparatus of examples 6-8 and/or some other example(s) herein, wherein the available capability of the communication and compute resources is obtained by querying, or monitoring.

Example 10 includes the apparatus of examples 6-9 and/or some other example(s) herein, wherein the performance of the communication and compute resources is obtained by monitoring.

Example 11 includes the apparatus of examples 1-10 and/or some other example(s) herein, wherein the apparatus is configured to make the application instances available to the control plane of the 6G system.

Example 12 includes a method of operating a cloud management and orchestration system in a next-generation distributed cloud computing service, wherein the method comprises: identifying a workload type each workload in a set of workloads; identifying or determining a set of resources of the distributed cloud computing service; and deploying respective workloads in the set of workloads to corresponding resources in the set of resources.

Example 13 includes the method of example 12 and/or some other example(s) herein, wherein individual workloads in the set of workloads are network functions (NFs) or applications.

Example 14 includes the method of examples 12-13 and/or some other example(s) herein, wherein the method includes: receiving a registration request to register a resource; and registering the resource based on the registration request, and wherein the registered resource is among the set of resources.

Example 15 includes the method of example 14 and/or some other example(s) herein, wherein the registration request includes one or more of: a resource type of the resource to be registered, a manufacturer or vendor of the resource to be registered, one or more capabilities of the resource to be registered, one or more components or instances of the resource to be registered, a location of the resource to be registered, a resource pool to which the resource to be registered belongs or will belong once registered, and energy efficiency level/metrics of the resource to be registered.

Example 16 includes the method of examples 14-15 and/or some other example(s) herein, wherein the method includes: verifying information of the registered resource, and/or updating the information of the registered resource.

Example 17 includes the method of examples 12-16 and/or some other example(s) herein, wherein the method includes: receiving, from a consumer, a deployment request to deploy one or more workloads to one or more resources; and deploying the one or more workloads based on the deployment request.

Example 18 includes the method of example 17 and/or some other example(s) herein, wherein the deployment request is a request to deploy one or more application instances of an application for which an image has been onboarded, and the method includes: analyzing communication and computing requirements of the deployment request, the application, and/or the one or more application instances; selecting the one or more resources for deploying the one or more application instances based on the analyzing; and deploying the application instances to the selected compute resources.

Example 19 includes the method of example 18 and/or some other example(s) herein, wherein the method includes: obtaining capabilities of available communication resources and compute resources among the set of resources; and obtaining performance metrics of the available communication resources and compute resources.

Example 20 includes the method of example 19 and/or some other example(s) herein, wherein the method includes: analyzing the capabilities and performance metrics of the available communication resources and compute resources; and selecting the one or more resources for deploying the one or more application instances based on the analysis of the communication and computing requirements and the analysis of the capabilities and performance metrics of the available communication resources and compute resources.

Example 21 includes the method of examples 18-20 and/or some other example(s) herein, wherein the communication and computing requirements are provided in the deployment request.

Example 22 includes the method of examples 18-21 and/or some other example(s) herein, wherein the communication and computing requirements are generated based on a service level agreement (SLA) and/or subscription data.

Example 23 includes the method of examples 18-22 and/or some other example(s) herein, wherein the available capability of the communication and compute resources is obtained by querying, or monitoring.

Example 24 includes the method of examples 17-23 and/or some other example(s) herein, wherein the performance metrics of the available communication resources and compute resources is obtained by monitoring the available communication resources and compute resources.

Example 25 includes method of examples 18-24 and/or some other example(s) herein, wherein the method includes: making the one or more application instances available to a control plane of distributed cloud computing service.

Example 26 includes method of examples 12-25 and/or some other example(s) herein, wherein the next-generation distributed cloud computing service is a sixth generation (6G) distributed cloud computing service.

Example 27 includes method of examples 12-26 and/or some other example(s) herein, wherein the next-generation distributed cloud computing service comprises: one or more cell sites, one or more edge clouds, one or more core clouds, and/or at least one central data center, wherein each of the one or more cell sites, the one or more edge clouds, the one or more core clouds, and the at least one central data center includes respective compute infrastructure and virtualization environment(s).

Example 28 includes method of example 27 and/or some other example(s) herein, wherein individual resources of the set of resources are distributed across the one or more cell sites, the one or more edge clouds, the one or more core clouds, and the at least one central data center.

Example Z01 includes one or more computer readable media comprising instructions, wherein execution of the instructions by processor circuitry is to cause the processor circuitry to perform the method of any one of examples 1-28. Example Z02 includes a computer program comprising the instructions of example Z01. Example Z03 includes an Application Programming Interface defining functions, methods, variables, data structures, and/or protocols for the computer program of example Z02. Example Z04 includes an API or specification defining functions, methods, variables, data structures, protocols, and the like, defining or involving use of any of examples 1-28 or portions thereof, or otherwise related to any of examples 1-28 or portions thereof. Example Z05 includes an apparatus comprising circuitry loaded with the instructions of example Z01. Example Z06 includes an apparatus comprising circuitry operable to run the instructions of example Z01. Example Z07 includes an integrated circuit comprising one or more of the processor circuitry of example Z01 and the one or more computer readable media of example Z01. Example Z08 includes a computing system comprising the one or more computer readable media and the processor circuitry of example Z01. Example Z09 includes an apparatus comprising means for executing the instructions of example Z01. Example Z10 includes a signal generated as a result of executing the instructions of example Z01. Example Z11 includes a data unit generated as a result of executing the instructions of example Z01. Example Z12 includes the data unit of example Z11 and/or some other example(s) herein, wherein the data unit is a datagram, network packet, data frame, data segment, a Protocol Data Unit (PDU), a Service Data Unit (SDU), a message, or a database object. Example Z13 includes a signal encoded with the data unit of examples Z11 and/or Z12. Example Z14 includes an electromagnetic signal carrying the instructions of example Z01. Example Z15 includes an apparatus comprising means for performing the method of any one of examples 1-28 and/or some other example(s) herein. Example Z16 includes an edge compute node executing a service as part of one or more edge applications instantiated on virtualization infrastructure, the service being related to any of examples 1-28, portions thereof, and/or some other example(s) herein.

Example 1A may include an apparatus configured to support cloud management and orchestration of a next-generation system, the apparatus comprising at least one of the components with the capability of monitoring the next-generation system.

Example 2A may include the apparatus of example 1A or some other example herein, wherein the cloud management and orchestration system monitors the performance of the next-generation system.

Example 3A may include the apparatus of example 1A or some other example herein, wherein the cloud management and orchestration system monitors the healthiness of the next-generation system.

Example 4A may include the apparatus of example 2A or some other example herein, wherein the cloud management and orchestration system monitors the performance of the next-generation system by collecting the measurements for one or more of the following layers or aspects:
- infrastructure layer/aspect,
- virtualization layer/aspect,
- network function layer/aspect,
- application layer/aspect.

Example 5A may include the apparatus of example 4A or some other example herein, wherein the network function layer measurements and application layer measurements may reflect, or be integrated to reflect, the end-to-end performance for one or more end users.

Example 6A may include the apparatus of examples 4A and 5A or some other example herein, wherein the application layer measurement may reflect the communication performance or computing performance.

Example 7A may include the apparatus of example 4A or some other example herein, wherein the cloud management and orchestration system collects the measurements in real-time or near-real-time.

Example 8A may include the apparatus of example 1A or some other example herein, wherein the cloud management and orchestration system further comprises at least one of the components with the data analytics capability of monitored data.

Example 9A may include the apparatus of example 1A or some other example herein, wherein the cloud management and orchestration system further comprises at least one of the components with the scaling capability for a workload instance.

Example 10A may include the apparatus of example 1A or some other example herein, wherein the cloud management and orchestration system further comprises at least one of the components with the healing capability for a workload instance.

Example 11A may include the apparatus of examples 9A and 10A or some other example herein, wherein the cloud management and orchestration selects the compute node that can meet the combined communication and computing requirements for scaling or healing.

Example 12A may include the apparatus of example 9A or some other example herein, wherein the cloud management and orchestration further comprises of at least one of the components with the capability to receive a policy for scaling from a consumer, and perform the scaling accordingly.

Example 13A may include a method to be performed by a cloud management and orchestration system of a sixth generation (6G) wireless network, wherein the method comprises: monitoring data related to one or more layers of the 6G wireless network; identifying, based on the monitoring, an event related to a workload instance of the 6G wireless network; and facilitating, based on the identification, occurrence of a mitigation process to remedy the event.

Example 14A may include the method of example 13A, and/or some other example herein, wherein the one or more layers include an infrastructure layer, a virtualization layer, a network function layer, or an application layer.

Example 15A may include the method of example 14A, and/or some other example herein, wherein the application layer is related to end-to-end performance for a user.

Example 16A may include the method of any of examples 13A-15A, and/or some other example herein, wherein the event is related to an alert or alarm.

Example 17A may include the method of any of examples 13A-16A, and/or some other example herein, wherein the mitigation process relates to scaling.

Example 18A may include the method of any of examples 13A-17A, and/or some other example herein, wherein the mitigation process relates to healing.

Example Z01A may include an apparatus comprising means to perform one or more elements of a method described in or related to any of examples 1A-18A, or any other method or process described herein.

Example Z02A may include one or more non-transitory computer-readable media comprising instructions to cause an electronic device, upon execution of the instructions by one or more processors of the electronic device, to perform one or more elements of a method described in or related to any of examples 1A-18A, or any other method or process described herein.

Example Z03A may include an apparatus comprising logic, modules, or circuitry to perform one or more elements of a method described in or related to any of examples 1A-18A, or any other method or process described herein.

Example Z04A may include a method, technique, or process as described in or related to any of examples 1A-18A, or portions or parts thereof.

Example Z05A may include an apparatus comprising: one or more processors and one or more computer-readable media comprising instructions that, when executed by the one or more processors, cause the one or more processors to perform the method, techniques, or process as described in or related to any of examples 1A-18A, or portions thereof.

Example Z06A may include a signal as described in or related to any of examples 1A-18A, or portions or parts thereof.

Example Z07A may include a datagram, packet, frame, segment, protocol data unit (PDU), or message as described in or related to any of examples 1A-18A, or portions or parts thereof, or otherwise described in the present disclosure.

Example Z08A may include a signal encoded with data as described in or related to any of examples 1A-18A, or portions or parts thereof, or otherwise described in the present disclosure.

Example Z09A may include a signal encoded with a datagram, packet, frame, segment, protocol data unit (PDU), or message as described in or related to any of examples 1A-18A, or portions or parts thereof, or otherwise described in the present disclosure.

Example Z10A may include an electromagnetic signal carrying computer-readable instructions, wherein execution of the computer-readable instructions by one or more processors is to cause the one or more processors to perform the method, techniques, or process as described in or related to any of examples 1A-18A, or portions thereof.

Example Z11A may include a computer program comprising instructions, wherein execution of the program by a processing element is to cause the processing element to carry out the method, techniques, or process as described in or related to any of examples 1A-18A, or portions thereof.

Example Z12A may include a signal in a wireless network as shown and described herein.

Example Z13A may include a method of communicating in a wireless network as shown and described herein.

Example Z14A may include a system for providing wireless communication as shown and described herein.

Example Z15A may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### 7. TERMINOLOGY

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The phrase "X(s)" means one or more X or a set of X. The description may use the phrases "in an embodiment," "In some embodiments," "in one implementation," "In some implementations," "in some examples", and the like, each of which may refer to one or more of the same or different embodiments, implementations, and/or examples. Furthermore, the terms "comprising," "including," "having," and the like, as used with respect to the present disclosure, are synonymous.

The terms "master" and "slave" at least in some examples refers to a model of asymmetric communication or control where one device, process, element, or entity (the "master") controls one or more other device, process, element, or entity (the "slaves"). The terms "master" and "slave" are used in this disclosure only for their technical meaning. The term "master" or "grandmaster" may be substituted with any of the following terms "main", "source", "primary", "initiator", "requestor", "transmitter", "host", "maestro", "controller", "provider", "producer", "client", "source", "mix", "parent", "chief', "manager", "reference" (e.g., as in "reference clock" or the like), and/or the like. Additionally, the term "slave" may be substituted with any of the following terms "receiver", "secondary", "subordinate", "replica", target", "responder", "device", "performer", "agent", "standby", "consumer", "peripheral", "follower", "server", "child", "helper", "worker", "node", and/or the like.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some examples refers to (partial or in full) acts, tasks, operations, and the like, related to bringing or the readying the bringing of something into existence either actively or passively (e.g., exposing a device identity or entity identity). Additionally or alternatively, the term "establish" or "establishment" at least in some examples refers to (partial or in full) acts, tasks, operations, and the like, related to initiating, starting, or warming communication or initiating, starting, or warming a relationship between two entities or elements (e.g., establish a session, establish a session, and the like). Additionally or alternatively, the term "establish" or "establishment" at least in some examples refers to initiating something to a state of working readiness. The term "established" at least in some examples refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some examples refers to (partial or in full) acts, tasks, operations, and the like, of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive a stream of packets (or the following parameters and templates or template values).

The term "element" at least in some examples refers to a unit that is indivisible at a given level of abstraction and has a clearly defined boundary, wherein an element may be any type of entity including, for example, one or more devices, systems, controllers, network elements, modules, engines, components, and so forth, or combinations thereof. The term "entity" at least in some examples refers to a distinct element of a component, architecture, platform, device, and/or system. Additionally or alternatively, the term "entity" at least in some examples refers to information transferred as a payload.

The term "measurement" at least in some examples refers to the observation and/or quantification of attributes of an object, event, or phenomenon. Additionally or alternatively, the term "measurement" at least in some examples refers to a set of operations having the object of determining a measured value or measurement result, and/or the actual instance or execution of operations leading to a measured value. Additionally or alternatively, the term "measurement" at least in some examples refers to data recorded during testing.

The term "metric" at least in some examples refers to a quantity produced in an assessment of a measured value. Additionally or alternatively, the term "metric" at least in some examples refers to data derived from a set of measurements. Additionally or alternatively, the term "metric" at least in some examples refers to set of events combined or otherwise grouped into one or more values. Additionally or alternatively, the term "metric" at least in some examples refers to a combination of measures or set of collected data points. Additionally or alternatively, the term "metric" at least in some examples refers to a standard definition of a quantity, produced in an assessment of performance and/or reliability of the network, which has an intended utility and is carefully specified to convey the exact meaning of a measured value.

The term "signal" at least in some examples refers to an observable change in a quality and/or quantity. Additionally or alternatively, the term "signal" at least in some examples refers to a function that conveys information about of an object, event, or phenomenon. Additionally or alternatively, the term "signal" at least in some examples refers to any time varying voltage, current, or electromagnetic wave that may or may not carry information. The term "digital signal" at least in some examples refers to a signal that is constructed from a discrete set of waveforms of a physical quantity so as to represent a sequence of discrete values.

The term "identifier" at least in some examples refers to a value, or a set of values, that uniquely identify an identity in a certain scope. Additionally or alternatively, the term "identifier" at least in some examples refers to a sequence of characters that identifies or otherwise indicates the identity of a unique object, element, or entity, or a unique class of objects, elements, or entities. Additionally or alternatively, the term "identifier" at least in some examples refers to a sequence of characters used to identify or refer to an application, program, session, object, element, entity, variable, set of data, and/or the like. The "sequence of characters" mentioned previously at least in some examples refers to one or more names, labels, words, numbers, letters, symbols, and/or any combination thereof. Additionally or alternatively, the term "identifier" at least in some examples refers to a name, address, label, distinguishing index, and/or attribute. Additionally or alternatively, the term "identifier" at least in some examples refers to an instance of identification. The term "persistent identifier" at least in some examples refers to an identifier that is reused by a device or by another device associated with the same person or group of persons for an indefinite period. The term "identification" at least in some examples refers to a process of recognizing an identity as distinct from other identities in a particular scope or context, which may involve processing identifiers to reference an identity in an identity database. The term "application identifier", "application ID", or "app ID" at least in some examples refers to an identifier that can be mapped to a specific application, application instance, or application instance. In the context of 3GPP 5G/NR, an "application identifier" at least in some examples refers to an identifier that can be mapped to a specific application traffic detection rule.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry"

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The terms "machine-readable medium" and "computer-readable medium" refers to tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus includes but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP). A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived includes source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) includes: compiling (e.g., from source code, object code, and/or the like), interpreting, loading, organizing (e.g., dynamically or statically linking), encoding, decoding, encrypting, unencrypting, packaging, unpackaging, or otherwise manipulating the information into the instructions. In an example, the derivation of the instructions includes assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, and/or the like) on one or several remote servers. The source code packages may be encrypted when in transit over a network and decrypted, uncompressed, assembled (e.g., linked) if necessary, and compiled or interpreted (e.g., into a library, stand-alone executable, and/or the like) at a local machine, and executed by the local machine. The terms "machine-readable medium" and "computer-readable medium" may be interchangeable for purposes of the present disclosure. The term "non-transitory computer-readable medium at least in some examples refers to any type of memory, computer readable storage device, and/or storage disk and may exclude propagating signals and transmission media.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "infrastructure processing unit" or "IPU" at least in some examples refers to an advanced networking device with hardened accelerators and network connectivity (e.g., Ethernet or the like) that accelerates and manages infrastructure functions using tightly coupled, dedicated, programmable cores. In some implementations, an IPU offers full infrastructure offload and provides an extra layer of security by serving as a control point of a host for running infrastructure applications. An IPU is capable of offloading the entire infrastructure stack from the host and can control how the host attaches to this infrastructure. This gives service providers an extra layer of security and control, enforced in hardware by the IPU.

The term "device" at least in some examples refers to a physical entity embedded inside, or attached to, another physical entity in its vicinity, with capabilities to convey digital information from or to that physical entity.

The term "controller" at least in some examples refers to an element or entity that has the capability to affect a physical entity, such as by changing its state or causing the physical entity to move.

The term "scheduler" at least in some examples refers to an entity or element that assigns resources (e.g., processor time, network links, memory space, and/or the like) to perform tasks. The term "network scheduler" at least in some examples refers to a node, element, or entity that manages network packets in transmit and/or receive queues of one or more protocol stacks of network access circuitry (e.g., a network interface controller (NIC), baseband processor, and the like). The term "network scheduler" at least in some examples can be used interchangeably with the terms "packet scheduler", "queueing discipline" or "qdisc", and/or "queueing algorithm".

The term "terminal" at least in some examples refers to point at which a conductor from a component, device, or network comes to an end. Additionally or alternatively, the term "terminal" at least in some examples refers to an electrical connector acting as an interface to a conductor and creating a point where external circuits can be connected. In some examples, terminals may include electrical leads, electrical connectors, electrical connectors, solder cups or buckets, and/or the like.

The term "compute node" or "compute device" at least in some examples refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment, end consuming device, appliance, or the like. For purposes of the present disclosure, the term "node" at least in some examples refers to and/or is interchangeable with the terms "device", "component", "sub-system", and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers includes an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

The term "platform" at least in some examples refers to an environment in which instructions, program code, software elements, and the like can be executed or otherwise operate, and examples of such an environment include an architecture (e.g., a motherboard, a computing system, and/or the like), one or more hardware elements (e.g., embedded systems, and the like), a cluster of compute nodes, a set of distributed compute nodes or network, an operating system, a virtual machine (VM), a virtualization container, a software framework, a client application (e.g., web browser or the like) and associated application programming interfaces, a cloud computing service (e.g., platform as a service (PaaS)), or other underlying software executed with instructions, program code, software elements, and the like.

The term "architecture" at least in some examples refers to a computer architecture or a network architecture. The term "computer architecture" at least in some examples refers to a physical and logical design or arrangement of software and/or hardware elements in a computing system or platform including technology standards for interacts therebetween. The term "network architecture" at least in some examples refers to a physical and logical design or arrangement of software and/or hardware elements in a network including communication protocols, interfaces, and media transmission.

The term "appliance," "computer appliance," and the like, at least in some examples refers to a computer device or computer system with program code (e.g., software or firmware) that is specifically designed to provide a specific computing resource. The term "virtual appliance" at least in some examples refers to a virtual machine image to be implemented by a hypervisor-equipped device that virtualizes or emulates a computer appliance or otherwise is dedicated to provide a specific computing resource. The term "security appliance", "firewall", and the like at least in some examples refers to a computer appliance designed to protect computer networks from unwanted traffic and/or malicious attacks. The term "policy appliance" at least in some examples refers to technical control and logging mechanisms to enforce or reconcile policy rules (information use rules) and to ensure accountability in information systems.

The term "gateway" at least in some examples refers to a network appliance that allows data to flow from one network to another network, or a computing system or application configured to perform such tasks. Examples of gateways include IP gateways, Internet-to-Orbit (I2O) gateways, IoT gateways, cloud storage gateways, and/or the like.

The term "user equipment" or "UE" at least in some examples refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, and the like. Furthermore, the term "user equipment" or "UE" includes any type of wireless/wired device or any computing device including a wireless communications interface. Examples of UEs, client devices, and the like, include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmet-mounted display devices, augmented reality (AR) devices, virtual reality (VR) devices, mixed reality (MR) devices, and/or other like systems or devices.

The term "station" or "STA" at least in some examples refers to a logical entity that is a singly addressable instance of a medium access control (MAC) and physical layer (PHY) interface to the wireless medium (WM). The term "wireless medium" or WM" at least in some examples refers to the medium used to implement the transfer of protocol data units (PDUs) between peer physical layer (PHY) entities of a wireless local area network (LAN).

The term "network element" at least in some examples refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network appliance, network function (NF), virtualized NF (VNF), and/or the like.

The term "network controller" at least in some examples refers to a functional block that centralizes some or all of the control and management functionality of a network domain and may provide an abstract view of the network domain to other functional blocks via an interface.

The term "network access node" or "NAN" at least in some examples refers to a network element in a radio access network (RAN) responsible for the transmission and reception of radio signals in one or more cells or coverage areas to or from a UE or station. A "network access node" or "NAN" can have an integrated antenna or may be connected to an antenna array by feeder cables. Additionally or alternatively, a "network access node" or "NAN" includes specialized digital signal processing, network function hardware, and/or compute hardware to operate as a compute node. In some examples, a "network access node" or "NAN" may be split into multiple functional blocks operating in software for flexibility, cost, and performance. In some examples, a "network access node" or "NAN" may be a base station (e.g., an evolved Node B (eNB) or a next generation Node B (gNB)), an access point and/or wireless network access point, router, switch, hub, radio unit or remote radio head, Transmission Reception Point (TRP), a gateway device (e.g., Residential Gateway, Wireline 5G Access Network, Wireline 5G Cable Access Network, Wireline BBF Access Network, and the like), network appliance, and/or some other network access hardware.

The term "access point" or "AP" at least in some examples refers to an entity that contains one station (STA) and provides access to the distribution services, via the wireless medium (WM) for associated STAs. An AP comprises a STA and a distribution system access function (DSAF).

The term "cell" at least in some examples refers to a radio network object that can be uniquely identified by a UE from an identifier (e.g., cell ID) that is broadcasted over a geographical area from a network access node (NAN). Additionally or alternatively, the term "cell" at least in some examples refers to a geographic area covered by a NAN. The term "handover" at least in some examples refers to the transfer of a user's connection from one radio channel to another (can be the same or different cell). Additionally or alternatively, the term "handover" at least in some examples refers to the process in which a radio access network changes the radio transmitters, radio access mode, and/or radio system used to provide the bearer services, while maintaining a defined bearer service QoS

The term "E-UTEAN NodeB", "eNodeB", or "eNB" at least in some examples refers to a RAN node providing E-UTRA user plane (PDCP/RLC/MAC/PHY) and control plane (RRC) protocol terminations towards a UE, and connected via an S1 interface to the Evolved Packet Core (EPC). Two or more eNBs are interconnected with each other (and/or with one or more en-gNBs) by means of an X2 interface.

The term "next generation eNB" or "ng-eNB" at least in some examples refers to a RAN node providing E-UTRA user plane and control plane protocol terminations towards a UE, and connected via the NG interface to the 5GC. Two or more ng-eNBs are interconnected with each other (and/or with one or more gNBs) by means of an Xn interface.

The term "Next Generation NodeB", "gNodeB", or "gNB" at least in some examples refers to a RAN node providing NR user plane and control plane protocol terminations towards a UE, and connected via the NG interface to the 5GC. Two or more gNBs are interconnected with each other (and/or with one or more ng-eNBs) by means of an Xn interface.

The term "E-UTRA-NR gNB" or "en-gNB" at least in some examples refers to a RAN node providing NR user plane and control plane protocol terminations towards a UE, and acting as a Secondary Node in E-UTRA-NR Dual Connectivity (EN-DC) scenarios (see e.g., 3GPP TS 37.340 v17.0.0 (2022-04-15) ("[TS37340]")). Two or more en-gNBs are interconnected with each other (and/or with one or more eNBs) by means of an X2 interface.

The term "Next Generation RAN node" or "NG-RAN node" at least in some examples refers to either a gNB or an ng-eNB.

The term "IAB-node" at least in some examples refers to a RAN node that supports new radio (NR) access links to user equipment (UEs) and NR backhaul links to parent nodes and child nodes. The term "IAB-donor" at least in some examples refers to a RAN node (e.g., a gNB) that provides network access to UEs via a network of backhaul and access links.

The term "Transmission Reception Point" or "TRxP" at least in some examples refers to an antenna array with one or more antenna elements available to a network located at a specific geographical location for a specific area.

The term "Central Unit" or "CU" at least in some examples refers to a logical node hosting radio resource control (RRC), Service Data Adaptation Protocol (SDAP), and/or Packet Data Convergence Protocol (PDCP) protocols/layers of an NG-RAN node, or RRC and PDCP protocols of the en-gNB that controls the operation of one or more DUs; a CU terminates an F1 interface connected with a DU and may be connected with multiple DUs. The term "Distributed Unit" or "DU" at least in some examples refers to a logical node hosting Backhaul Adaptation Protocol (BAP), F1 application protocol (FlAP), radio link control (RLC), medium access control (MAC), and physical (PHY) layers of the NG-RAN node or en-gNB, and its operation is partly controlled by a CU; one DU supports one or multiple cells, and one cell is supported by only one DU; and a DU terminates the F1 interface connected with a CU. The term "Radio Unit" or "RU" at least in some examples refers to a logical node hosting PHY layer or Low-PHY layer and radiofrequency (RF) processing based on a lower layer functional split. The term "split architecture" at least in some examples refers to an architecture in which an CU, DU, and/or RU are physically separated from one another. Additionally or alternatively, the term "split architecture" at least in some examples refers to a RAN architecture such as those discussed in 3GPP TS 38.401 v17.5.0 (2023-06-29) ("[TS38401]"), 3GPP TS 38.410 v 17.1.0 (2022-06-23) ("[TS38410]"), and/or 3GPP TS 38.473 v17.5.0 (2023-06-29) ("[TS38473]"), the contents of each of which are hereby incorporated by reference in their entireties. The term "integrated architecture at least in some examples refers to an architecture in which an RU and DU are implemented on one platform, and/or an architecture in which a DU and a CU are implemented on one platform.

The term "Residential Gateway" or "RG" at least in some examples refers to a device providing, for example, voice, data, broadcast video, video on demand, to other devices in customer premises. The term "Wireline 5G Access Network" or "W-5GAN" at least in some examples refers to a wireline AN that connects to a 5GC via N2 and N3 reference points. The W-5GAN can be either a W-5GBAN or W-5GCAN. The term "Wireline 5G Cable Access Network" or "W-5GCAN" at least in some examples refers to an Access Network defined in/by CableLabs. The term "Wireline BBF Access Network" or "W-5GBAN" at least in some examples refers to an Access Network defined in/by the Broadband Forum (BBF). The term "Wireline Access Gateway Function" or "W-AGF" at least in some examples refers to a Network function in W-5GAN that provides connectivity to a 3GPP 5G Core network (5GC) to 5G-RG and/or FN-RG. The term "5G-RG" at least in some examples refers to an RG capable of connecting to a 5GC playing the role of a user equipment with regard to the 5GC; it supports secure element and exchanges N1 signaling with 5GC. The 5G-RG can be either a 5G-BRG or 5G-CRG.

The term "edge computing" at least in some examples refers to an implementation or arrangement of distributed computing elements that move processing activities and resources (e.g., compute, storage, acceleration, and/or network resources) towards the "edge" of the network in an effort to reduce latency and increase throughput for endpoint users (client devices, user equipment, and the like). Additionally or alternatively, term "edge computing" at least in some examples refers to a set of services hosted relatively close to a client/UE's access point of attachment to a network to achieve relatively efficient service delivery through reduced end-to-end latency and/or load on the transport network. In some examples, edge computing implementations involve the offering of services and/or resources in a cloud-like systems, functions, applications, and subsystems, from one or multiple locations accessible via wireless networks. Additionally or alternatively, term "edge computing" at least in some examples refers to the concept, as described in [TS23501], that enables operator and 3rd party services to be hosted close to a UE's access point of attachment, to achieve an efficient service delivery through the reduced end-to-end latency and load on the transport network.

The term "edge compute node" or "edge compute device" at least in some examples refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Additionally or alternatively, the term "edge compute node" at least in some examples refers to a real-world, logical, or virtualized implementation of a compute-capable element in the form of a device, gateway, bridge, system or subsystem, component, whether operating in a server, client, endpoint, or peer mode, and whether located at an "edge" of an network or at a connected location further within the network. however, references to an "edge computing system" generally refer to a distributed architecture, organization, or collection of multiple nodes and devices, and which is organized to accomplish or offer some aspect of services or resources in an edge computing setting.

The term "edge computing platform" or "edge platform" at least in some examples refers to a collection of functionality that is used to instantiate, execute, or run edge applications on a specific edge compute node (e.g., virtualization infrastructure and/or the like), enable such edge applications to provide and/or consume edge services, and/or otherwise provide one or more edge services.

The term "edge application" or "edge app" at least in some examples refers to an application that can be instantiated on, or executed by, an edge compute node within an edge computing network, system, or framework, and can potentially provide and/or consume edge computing services.

The term "edge service" at least in some examples refers to a service provided via an edge compute node and/or edge platform, either by the edge platform itself and/or by an edge application.

The term "colocated" or "co-located" at least in some examples refers to two or more elements being in the same place or location, or relatively close to one another (e.g., within some predetermined distance from one another). Additionally or alternatively, the term "colocated" or "co-located" at least in some examples refers to the placement or deployment of two or more compute elements or compute nodes together in a secure dedicated storage facility, or within a same enclosure or housing.

The term "central office" or "CO" at least in some examples refers to an aggregation point for telecommunications infrastructure within an accessible or defined geographical area, often where telecommunication service providers have traditionally located switching equipment for one or multiple types of access networks. In some examples, a CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" at least in some examples refers to a paradigm for enabling network access to a scalable and elastic pool of shareable computing resources with self-service provisioning and administration on-demand and without active management by users. In some examples, a cloud provides cloud computing services (or cloud services), which is/are one or more capabilities offered via a cloud computing platform that is/are invoked using a defined interface (e.g., an API or the like). In some examples, the term "cloud computing" refers to computing resources and services offered by a CSP. The term "cloud service provider" or "CSP" at least in some examples refers to an organization that operates or otherwise provides cloud resources including, for example, centralized, regional, and/or edge data centers and/or the like. Additionally or alternatively, the term "cloud" at least in some examples refers to a collection of resources, resource pools, and cloud services (e.g., user and/or deployment plane services, control and/or management plane services, infrastructure management services, deployment management services, application services, and/or the like) at one or more cloud sites including software elements to manage resource provisioning, nodes, clusters, and deployments hosted on them. The term "cloud site" at least in some examples refers to a set of resources (or resource pools) at a geographical location. In some examples, a cloud site is one or more data centers, an edge deployment site, a cell site, and/or any location where cloud resources can be deployed. In some examples, multiple cloud sites can be interconnected into a distributed cloud using bridging, routing, stitching, and/or other networking and/or transport layer functionality in between each cloud site.

The term "resource" at least in some examples refers to a unit of defined capabilities and/or characteristics that can be provisioned and used for providing services. Additionally or alternatively, the term "resource" at least in some examples refers to an object with a type, associated data, a set of methods that operate on it, and, if applicable, relationships to other resources. Additionally or alternatively, the term "resource" at least in some examples refers to any physical or virtual component, or usage of such components, of limited availability within a computer system or network. Examples of resources include compute resources, hardware (HW) acceleration resources, memory and/or storage resources, gateway resources, and networking (e.g., "site network fabric resources"). The term "cloud resource" at least in some examples refers to resource(s) within or provided by a cloud or cloud site that can be provisioned and used for providing services. The term "hardware resource" at least in some examples refers to resources provided by physical hardware element(s). The term "virtualized resource" or "virtual resource" at least in some examples refers to resources provided by virtualization infrastructure to an application, device, system, and the like. The term "network resource" or "communication resource" at least in some examples refers to resources that are accessible by computer devices/systems via a communications network, or resources used for networking and/or communication purposes. The term "system resources" at least in some examples refers to any kind of shared entities to provide services. The term "resource pool" at least in some examples refers to a collection of resources with the same or similar capabilities and/or characteristics within a cloud or otherwise provided by a cloud. In some examples, a resource pool includes a set of resources, one or more interfaces and/or network connections, and/or HW accelerators (see e.g., acceleration circuitry). In some examples, a network fabric is a resource that connects resources (or resource pools) to other resources (or resource pools) within a cloud site or cloud platform.

The term "cluster" at least in some examples refers to a set or grouping of entities as part of a cloud computing service and/or an edge computing system (or systems), in the form of physical entities (e.g., different computing systems, network elements, networks and/or network groups), logical entities (e.g., applications, functions, security constructs, virtual machines, virtualization containers, and the like), and the like. In some examples, a "cluster" is also referred to as a "group" or a "domain". The membership of cluster may be modified or affected based on conditions, parameters, criteria, configurations, functions, and/or other aspects including from dynamic or property-based membership, from network or system management scenarios, and/or the like.

The term "workload" at least in some examples refers to an amount of work performed by a computing system, device, entity, and the like, during a period of time or at a particular instant of time. A workload may be represented as a benchmark, such as a response time, throughput (e.g., how much work is accomplished over a period of time), and/or the like. Additionally or alternatively, the workload may be represented as a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, and the like), and/or the like. Various algorithms may be used to determine a workload and/or workload characteristics, which may be based on any of the aforementioned workload types.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "access edge layer" indicates the sub-layer of infrastructure edge closest to the end user or device. For example, such layer may be fulfilled by an edge data center deployed at a cellular network site. The access edge layer functions as the front line of the infrastructure Edge and may connect to an aggregation Edge layer higher in the hierarchy.

The term "aggregation edge layer" indicates the layer of infrastructure edge one hop away from the access edge layer. This layer can exist as either a medium-scale data center in a single location or may be formed from multiple interconnected micro data centers to form a hierarchical topology with the access Edge to allow for greater collaboration, workload failover, and scalability than access Edge alone.

The term "network function" or "NF" at least in some examples refers to a functional block within a network infrastructure that has one or more external interfaces and a defined functional behavior.

The term "network service" or "NS" at least in some examples refers to a composition or collection of NF(s) and/or network service(s), defined by its functional and behavioral specification(s).

The term "RAN function" or "RANF" at least in some examples refers to a functional block within a RAN architecture that has one or more external interfaces and a defined behavior related to the operation of a RAN or RAN node. Additionally or alternatively, the term "RAN function" or "RANF" at least in some examples refers to a set of functions and/or NFs that are part of a RAN.

The term "Application Function" or "AF" at least in some examples refers to an element or entity that interacts with a 3GPP core network in order to provide services. Additionally or alternatively, the term "Application Function" or "AF" at least in some examples refers to an edge compute node or ECT framework from the perspective of a 5G core network. The term "edge compute function" or "ECF" at least in some examples refers to an element or entity that performs an aspect of an edge computing technology (ECT), an aspect of edge networking technology (ENT), or performs an aspect of one or more edge computing services running over the ECT or ENT. The term "management function" at least in some examples refers to a logical entity playing the roles of a service consumer and/or a service producer. The term "management service" at least in some examples refers to a set of offered management capabilities. The term "network function virtualization" or "NFV" at least in some examples refers to the principle of separating network functions from the hardware they run on by using virtualization techniques and/or virtualization technologies.

The term "virtualized network function" or "VNF" at least in some examples refers to an implementation of an NF that can be deployed on a Network Function Virtualization Infrastructure (NFVI). The term "Network Functions Virtualization Infrastructure Manager" or "NFVI" at least in some examples refers to a totality of all hardware and software components that build up the environment in which VNFs are deployed.

The term "slice" at least in some examples refers to a set of characteristics and behaviors that separate one instance, traffic, data flow, application, application instance, link or connection, RAT, device, system, entity, element, and the like from another instance, traffic, data flow, application, application instance, link or connection, RAT, device, system, entity, element, and the like, or separate one type of instance, and the like, from another instance, and the like.

The term "network slice" at least in some examples refers to a logical network that provides specific network capabilities and network characteristics and/or supports various service properties for network slice service consumers. Additionally or alternatively, the term "network slice" at least in some examples refers to a logical network topology connecting a number of endpoints using a set of shared or dedicated network resources that are used to satisfy specific service level objectives(SLOs) and/or service level agreements (SLAs).

The term "network slicing" at least in some examples refers to methods, processes, techniques, and technologies used to create one or multiple unique logical and virtualized networks over a common multi-domain infrastructure. The term "access network slice", "radio access network slice", or "RAN slice" at least in some examples refers to a part of a network slice that provides resources in a RAN to fulfill one or more application and/or service requirements (e.g., SLAs, and the like). The term "network slice instance" at least in some examples refers to a set of Network Function instances and the required resources (e.g., compute, storage and networking resources) which form a deployed network slice. Additionally or alternatively, the term "network slice instance" at least in some examples refers to a representation of a service view of a network slice. The term "network instance" at least in some examples refers to information identifying a domain.

The term "service consumer" at least in some examples refers to an entity that consumes one or more services. The term "service producer" at least in some examples refers to an entity that offers, serves, or otherwise provides one or more services. The term "service provider" at least in some examples refers to an organization or entity that provides one or more services to at least one service consumer. For purposes of the present disclosure, the terms "service provider" and "service producer" may be used interchangeably even though these terms may refer to difference concepts. Examples of service providers include cloud service provider (CSP), network service provider (NSP), application service provider (ASP) (e.g., Application software service provider in a service-oriented architecture (ASSP)), internet service provider (ISP), telecommunications service provider (TSP), online service provider (OSP), payment service provider (PSP), managed service provider (MSP), storage service providers (SSPs), SAML service provider, and/or the like. At least in some examples, SLAs may specify, for example, particular aspects of the service to be provided including quality, availability, responsibilities, metrics by which service is measured, as well as remedies or penalties should agreed-on service levels not be achieved. The term "SAML service provider" at least in some examples refers to a system and/or entity that receives and accepts authentication assertions in conjunction with a single sign-on (SSO) profile of the Security Assertion Markup Language (SAML) and/or some other security mechanism(s).

The term "Virtualized Infrastructure Manager" or "VIM" at least in some examples refers to a functional block that is responsible for controlling and managing the NFVI compute, storage and network resources, usually within one operator's infrastructure domain.

The term "virtualization container", "execution container", or "container" at least in some examples refers to a partition of a compute node that provides an isolated virtualized computation environment. The term "OS container" at least in some examples refers to a virtualization container utilizing a shared Operating System (OS) kernel of its host, where the host providing the shared OS kernel can be a physical compute node or another virtualization container. Additionally or alternatively, the term "container" at least in some examples refers to a standard unit of software (or a package) including code and its relevant dependencies, and/or an abstraction at the application layer that packages code and dependencies together. Additionally or alternatively, the term "container" or "container image" at least in some examples refers to a lightweight, standalone, executable software package that includes everything needed to run an application such as, for example, code, runtime environment, system tools, system libraries, and settings.

The term "virtual machine" or "VM" at least in some examples refers to a virtualized computation environment that behaves in a same or similar manner as a physical computer and/or a server. The term "hypervisor" at least in some examples refers to a software element that partitions the underlying physical resources of a compute node, creates VMs, manages resources for VMs, and isolates individual VMs from each other.

The term "Data Network" or "DN" at least in some examples refers to a network hosting data-centric services such as, for example, operator services, the internet, third-party services, or enterprise networks. Additionally or alternatively, a DN at least in some examples refers to service networks that belong to an operator or third party, which are offered as a service to a client or user equipment (UE). DNs are sometimes referred to as "Packet Data Networks" or "PDNs". The term "Local Area Data Network" or "LADN" at least in some examples refers to a DN that is accessible by the UE only in specific locations, that provides connectivity to a specific DNN, and whose availability is provided to the UE.

The term "Internet of Things" or "IoT" at least in some examples refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. The term "edge IoT devices" at least in some examples refers to any kind of IoT devices deployed at a network's edge.

The term "protocol" at least in some examples refers to a predefined procedure or method of performing one or more operations. Additionally or alternatively, the term "protocol" at least in some examples refers to a common means for unrelated objects to communicate with each other (sometimes also called interfaces). The term "communication protocol" at least in some examples refers to a set of standardized rules or instructions implemented by a communication device and/or system to communicate with other devices and/or systems, including instructions for packetizing/depacketizing data, modulating/demodulating signals, implementation of protocols stacks, and/or the like. In various implementations, a "protocol" and/or a "communication protocol" may be represented using a protocol stack, a finite state machine (FSM), and/or any other suitable data structure. The term "standard protocol" at least in some examples refers to a protocol whose specification is published and known to the public and is controlled by a standards body. The term "protocol stack" or "network stack" at least in some examples refers to an implementation of a protocol suite or protocol family. In various implementations, a protocol stack includes a set of protocol layers, where the lowest protocol deals with low-level interaction with hardware and/or communications interfaces and each higher layer adds additional capabilities. Additionally or alternatively, the term "protocol" at least in some examples refers to a formal set of procedures that are adopted to ensure communication between two or more functions within the within the same layer of a hierarchy of functions.

The term "application layer" at least in some examples refers to an abstraction layer that specifies shared communications protocols and interfaces used by hosts in a communications network. Additionally or alternatively, the term "application layer" at least in some examples refers to an abstraction layer that interacts with software applications that implement a communicating component, and includes identifying communication partners, determining resource availability, and synchronizing communication. Examples of application layer protocols include HTTP, HTTPs, File Transfer Protocol (FTP), Dynamic Host Configuration Protocol (DHCP), Internet Message Access Protocol (IMAP), Lightweight Directory Access Protocol (LDAP), MQTT (MQ Telemetry Transport), Remote Authentication Dial-In User Service (RADIUS), Diameter protocol, Extensible Authentication Protocol (EAP), RDMA over Converged Ethernet version 2 (RoCEv2), Real-time Transport Protocol (RTP), RTP Control Protocol (RTCP), Real Time Streaming Protocol (RTSP), SBMV Protocol, Skinny Client Control Protocol (SCCP), Session Initiation Protocol (SIP), Session Description Protocol (SDP), Simple Mail Transfer Protocol (SMTP), Simple Network Management Protocol (SNMP), Simple Service Discovery Protocol (SSDP), Small Computer System Interface (SCSI), Internet SCSI (iSCSI), iSCSI Extensions for RDMA (iSER), Transport Layer Security (TLS), voice over IP (VoIP), Virtual Private Network (VPN), Extensible Messaging and Presence Protocol (XMPP), and/or the like.

The term "session layer" at least in some examples refers to an abstraction layer that controls dialogues and/or connections between entities or elements, and may include establishing, managing and terminating the connections between the entities or elements.

The term "transport layer" at least in some examples refers to a protocol layer that provides end-to-end (e2e) communication services such as, for example, connection-oriented communication, reliability, flow control, and multiplexing. Examples of transport layer protocols include datagram congestion control protocol (DCCP), fibre channel protocol (FBC), Generic Routing Encapsulation (GRE), GPRS Tunneling (GTP), Micro Transport Protocol (µTP), Multipath TCP (MPTCP), MultiPath QUIC (MPQUIC), Multipath UDP (MPUDP), Quick UDP Internet Connections (QUIC), Remote Direct Memory Access (RDMA), Resource Reservation Protocol (RSVP), Stream Control Transmission Protocol (SCTP), transmission control protocol (TCP), user datagram protocol (UDP), and/or the like.

The term "network layer" at least in some examples refers to a protocol layer that includes means for transferring network packets from a source to a destination via one or more networks. Additionally or alternatively, the term "network layer" at least in some examples refers to a protocol layer that is responsible for packet forwarding and/or routing through intermediary nodes. Additionally or alternatively, the term "network layer" or "internet layer" at least in some examples refers to a protocol layer that includes interworking methods, protocols, and specifications that are used to transport network packets across a network. As examples, the network layer protocols include internet protocol (IP), IP security (IPsec), Internet Control Message Protocol (ICMP), Internet Group Management Protocol (IGMP), Open Shortest Path First protocol (OSPF), Routing Information Protocol (RIP), RDMA over Converged Ethernet version 2 (RoCEv2), Subnetwork Access Protocol (SNAP), and/or some other internet or network protocol layer.

The term "link layer" or "data link layer" at least in some examples refers to a protocol layer that transfers data between nodes on a network segment across a physical layer. Examples of link layer protocols include logical link control (LLC), medium access control (MAC), Ethernet, RDMA over Converged Ethernet version 1 (RoCEv1), and/or the like.

The term "radio resource control", "RRC layer", or "RRC" at least in some examples refers to a protocol layer or sublayer that performs system information handling; paging; establishment, maintenance, and release of RRC connections; security functions; establishment, configuration, maintenance and release of Signalling Radio Bearers (SRBs) and Data Radio Bearers (DRBs); mobility functions/services; QoS management; and some sidelink specific services and functions over the Uu interface (see e.g., 3GPP TS 36.331 v17.5.0 (2023-07-04) ("[TS36331]") and/or 3GPP TS 38.331 v17.5.0 (2023-07-01) ("[TS38331]")).

The term "Service Data Adaptation Protocol", "SDAP layer", or "SDAP" at least in some examples refers to a protocol layer or sublayer that performs mapping between QoS flows and a data radio bearers (DRBs) and marking QoS flow IDs (QFI) in both DL and UL packets (see e.g., 3GPP TS 37.324 v17.0.0 (2022-04-13) ("[TS37324]").

The term "Packet Data Convergence Protocol", "PDCP layer", or "PDCP" at least in some examples refers to a protocol layer or sublayer that performs transfer user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery (see e.g., 3GPP TS 36.323 v17.2.0 (2023-01-13) and/or 3GPP TS 38.323 v17.5.0 (2023-06-30) ("[TS38323]")).

The term "radio link control layer", "RLC layer", or "RLC" at least in some examples refers to a protocol layer or sublayer that performs transfer of upper layer PDUs; sequence numbering independent of the one in PDCP; error Correction through ARQ; segmentation and/or re-segmentation of RLC SDUs; reassembly of SDUs; duplicate detection; RLC SDU discarding; RLC re-establishment; and/or protocol error detection (see e.g., 3GPP TS 36.322 v17.0.0 (2022-04-15) and 3GPP TS 38.322 v17.3.0 (2023-06-30) ("[TS38322]")).

The term "medium access control protocol", "MAC protocol", or "MAC" at least in some examples refers to a protocol that governs access to the transmission medium in a network, to enable the exchange of data between stations in a network. Additionally or alternatively, the term "medium access control layer", "MAC layer", or "MAC" at least in some examples refers to a protocol layer or sublayer that performs functions to provide frame-based, connectionless-mode (e.g., datagram style) data transfer between stations or devices. Additionally or alternatively, the term "medium access control layer", "MAC layer", or "MAC" at least in some examples refers to a protocol layer or sublayer that performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding (see e.g., [IEEE802], 3GPP TS 36.321 v17.5.0 (2023-06-30), and 3GPP TS 38.321 v17.5.0 (2023-06-30) ("[TS38321]").

The term "physical layer", "PHY layer", or "PHY" at least in some examples refers to a protocol layer or sublayer that includes capabilities to transmit and receive modulated signals for communicating in a communications network (see e.g., [IEEE802], 3GPP TS 36.201 v17.0.0 (2022-03-31), and 3GPP TS 38.201 v17.0.0 (2022-01-05) ("[TS38201]")

The term "access technology" at least in some examples refers to the technology used for the underlying physical connection to a communication network. The term "radio access technology" or "RAT" at least in some examples refers to the technology used for the underlying physical connection to a radio based communication network. The term "radio technology" at least in some examples refers to technology for wireless transmission and/or reception of electromagnetic radiation for information transfer. The term "RAT type" at least in some examples may identify a transmission technology and/or communication protocol used in an access network. Examples of access technologies include wireless access technologies/RATs, wireline, wireline-cable, wireline broadband forum (wireline-BBF), Ethernet (see e.g., IEEE Standard for Ethernet, IEEE Std 802.3-2018 (31 Aug. 2018) ("[IEEE8023]")) and variants thereof, fiber optics networks (e.g., ITU-T G.651, ITU-T G.652, Optical Transport Network (OTN), Synchronous optical networking (SONET) and synchronous digital hierarchy (SDH), and the like), digital subscriber line (DSL) and variants thereof, Data Over Cable Service Interface Specification (DOCSIS) technologies, hybrid fiber-coaxial (HFC) technologies, and/or the like. Examples of RATs (or RAT types) and/or communications protocols include Advanced Mobile Phone System (AMPS) technologies (e.g., Digital AMPS (D-AMPS), Total Access Communication System (TACS) and variants thereof, such as Extended TACS (ETACS), and the like); Global System for Mobile Communications (GSM) technologies (e.g., Circuit Switched Data (CSD), High-Speed CSD (HSCSD), General Packet Radio Service (GPRS), and Enhanced Data Rates for GSM Evolution (EDGE)); Third Generation Partnership Project (3GPP) technologies (e.g., Universal Mobile Telecommunications System (UMTS) and variants thereof (e.g., UMTS Terrestrial Radio Access (UTRA), Wideband Code Division Multiple Access (W-CDMA), Freedom of Multimedia Access (FOMA), Time Division-Code Division Multiple Access (TD-CDMA), Time Division-Synchronous Code Division Multiple Access (TD-SCDMA), and the like), Generic Access Network (GAN) / Unlicensed Mobile Access (UMA), High Speed Packet Access (HSPA) and variants thereof (e.g., HSPA Plus (HSPA+)), Long Term Evolution (LTE) and variants thereof (e.g., LTE-Advanced (LTE-A), Evolved UTRA (E-UTRA), LTE Extra, LTE-A Pro, LTE LAA, MuLTEfire, and the like), Fifth Generation (5G) or New Radio (NR), narrowband IoT (NB-IOT), 3GPP Proximity Services (ProSe), and/or the like); ETSI RATs (e.g., High Performance Radio Metropolitan Area Network (HiperMAN), Intelligent Transport Systems (ITS) (e.g., ITS-G5, ITS-G5B, ITS-G5C, and the like), and the like); Institute of Electrical and Electronics Engineers (IEEE) technologies and/or WiFi (e.g., IEEE Standard for Local and Metropolitan Area Networks: Overview and Architecture, IEEE Std 802-2014, pp.1-74 (30 Jun. 2014) ("[IEEE802]"), IEEE Standard for Information TechnologyTelecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), IEEE 802.15 technologies (e.g., IEEE Standard for Low-Rate Wireless Networks, IEEE Std 802.15.4-2020, pp.1-800 (23 July 2020) ("[IEEE802154]") and variants thereof (e.g., ZigBee, WirelessHART, MiWi, ISA100.1 1a, Thread, IPv6 over Low power WPAN (6LoWPAN), and the like), IEEE Standard for Local and metropolitan area networks - Part 15.6: Wireless Body Area Networks, IEEE Std 802.15.6-2012, pp. 1-271 (29 Feb. 2012), and the like), WLAN V2X RATs (e.g., *I*EEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments, IEEE Std 802.11p-2010, pp.1-51 (15 July 2010) ("[IEEE80211p]") (which is now part of [IEEE80211]), IEEE Guide for Wireless Access in Vehicular Environments (WAVE) Architecture, IEEE STANDARDS ASSOCIATION, IEEE 1609.0-2019 (10 Apr. 2019) ("[IEEE16090]"), IEEE 802.11bd, Dedicated Short Range Communications (DSRC), and/or the like), Worldwide Interoperability for Microwave Access (WiMAX) (e.g., IEEE Standard for Air Interface for Broadband Wireless Access Systems, IEEE Std 802.16-2017, pp.1-2726 (02 Mar. 2018) ("[WiMAX]")), Mobile Broadband Wireless Access (MBWA)/iBurst (e.g., IEEE 802.20 and variants thereof), Wireless Gigabit Alliance (WiGig) standards (e.g., IEEE 802.11ad, IEEE 802.11ay, and the like), and so forth); Integrated Digital Enhanced Network (iDEN) and variants thereof (e.g., Wideband Integrated Digital Enhanced Network (WiDEN)); millimeter wave (mmWave) technologies/standards (e.g., wireless systems operating at 10-300 GHz and above 3GPP 5G); short-range and/or wireless personal area network (WPAN) technologies/standards (e.g., IEEE 802.15 technologies (e.g., as mentioned previously); Bluetooth and variants thereof (e.g., Bluetooth 5.3, Bluetooth Low Energy (BLE), and the like), WiFi-direct, Miracast, ANT/ANT+, Z-Wave, Universal Plug and Play (UPnP), low power Wide Area Networks (LPWANs), Long Range Wide Area Network (LoRA or LoRaWAN^{™}), and the like); optical and/or visible light communication (VLC) technologies/standards (e.g., IEEE Standard for Local and metropolitan area networks--Part 15.7: Short Range Optical Wireless Communications, IEEE Std 802.15.7-2018, pp.1-407 (23 Apr. 2019), and the like); Sigfox; Mobitex; 3GPP2 technologies (e.g., cdmaOne (2G), Code Division Multiple Access 2000 (CDMA 2000), and Evolution-Data Optimized or Evolution-Data Only (EV-DO); Push-to-talk (PTT), Mobile Telephone System (MTS) and variants thereof (e.g., Improved MTS (IMTS), Advanced MTS (AMTS), and the like); Personal Digital Cellular (PDC); Personal Handy-phone System (PHS), Cellular Digital Packet Data (CDPD); Cellular Digital Packet Data (CDPD); DataTAC; Digital Enhanced Cordless Telecommunications (DECT) and variants thereof (e.g., DECT Ultra Low Energy (DECT ULE), DECT-2020, DECT-5G, and the like); Ultra High Frequency (UHF) communication; Very High Frequency (VHF) communication; and/or any other suitable RAT or protocol. In addition to the aforementioned RATs/standards, any number of satellite uplink technologies may be used for purposes of the present disclosure including, for example, radios compliant with standards issued by the International Telecommunication Union (ITU), or the ETSI, among others. The examples provided herein are thus understood as being applicable to various other communication technologies, both existing and not yet formulated.

The term "Ethernet" at least in some examples refers to a term that is used to refer either to the IEEE 802.3 media access method or to the frame format discussed in [IEEE8023].

The term "V2X" at least in some examples refers to vehicle to vehicle (V2V), vehicle to infrastructure (V2I), infrastructure to vehicle (I2V), vehicle to network (V2N), and/or network to vehicle (N2V) communications and associated radio access technologies.

The term "channel" at least in some examples refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" at least in some examples refers to a connection between two devices through a RAT for the purpose of transmitting and receiving information.

The term "carrier" at least in some examples refers to a modulated waveform conveying one or more physical channels (e.g., 5G/NR, E-UTRA, UTRA, and/or GSM/EDGE physical channels). The term "carrier frequency" at least in some examples refers to the center frequency of a cell.

The term "bearer" at least in some examples refers to an information transmission path of defined capacity, delay, bit error rate, and/or the like. The term "radio bearer" at least in some examples refers to the service provided by Layer 2 (L2) for transfer of user data between user equipment (UE) and a radio access network (RAN). The term "radio access bearer" at least in some examples refers to the service that the access stratum provides to the non-access stratum for transfer of user data between a UE and a CN.

The terms "beamforming" and "beam steering" at least in some examples refer to a spatial filtering mechanism used at a transmitter (Tx) to improve the received signal power, signal-to-noise ratio (SNR), or some other signaling metric at an intended receiver (Rx). The term "beamformer" at least in some examples refers to a STA that transmits a physical layer PDU (PPDU) using a beamforming steering matrix. The term "beamforming steering matrix" at least in some examples refers to a matrix determined using knowledge of the channel between a Tx and an intended Rx that maps from space-time streams to transmit antennas with the goal of improving the signal power, SNR, and/or some other signaling metric at the intended Rx.

The term "subframe" at least in some examples at least in some examples refers to a time interval during which a signal is signaled. In some implementations, a subframe is equal to 1 millisecond (ms). The term "time slot" at least in some examples at least in some examples refers to an integer multiple of consecutive subframes. The term "superframe" at least in some examples at least in some examples refers to a time interval comprising two time slots.

The term "interoperability" at least in some examples refers to the ability of STAs utilizing one communication system or RAT to communicate with other STAs utilizing another communication system or RAT. The term "Coexistence" at least in some examples refers to sharing or allocating radiofrequency resources among STAs using either communication system or RAT.

The term "reliability" at least in some examples refers to the ability of a computer-related component (e.g., software, hardware, or network element/entity) to consistently perform a desired function and/or operate according to a specification. Reliability in the context of network communications (e.g., "network reliability") at least in some examples refers to the ability of a network to carry out communication. The term "network reliability" at least in some examples refers to a probability or measure of delivering a specified amount of data from a source to a destination (or sink).

The term "local area network" or "LAN" at least in some examples refers to a network of devices, whether indoors or outdoors, covering a limited area or a relatively small geographic area (e.g., within a building or a campus). The term "wireless local area network", "wireless LAN", or "WLAN" at least in some examples refers to a LAN that involves wireless communications.

The term "wide area network" or "WAN" at least in some examples refers to a network of devices that extends over a relatively large geographic area (e.g., a telecommunications network). Additionally or alternatively, the term "wide area network" or "WAN" at least in some examples refers to a computer network spanning regions, countries, or even an entire planet.

The term "backbone network", "backbone", or "core network" at least in some examples refers to a computer network which interconnects networks, providing a path for the exchange of information between different subnetworks such as LANs or WANs.

The term "interworking" at least in some examples refers to the use of interconnected stations in a network for the exchange of data, by means of protocols operating over one or more underlying data transmission paths.

The term "flow" at least in some examples refers to a sequence of data and/or data units (e.g., datagrams, packets, or the like) from a source entity/element to a destination entity/element. Additionally or alternatively, the terms "flow" or "traffic flow" at least in some examples refer to an artificial and/or logical equivalent to a call, connection, or link. Additionally or alternatively, the terms "flow" or "traffic flow" at least in some examples refer to a sequence of packets sent from a particular source to a particular unicast, anycast, or multicast destination that the source desires to label as a flow; from an upper-layer viewpoint, a flow may include of all packets in a specific transport connection or a media stream, however, a flow is not necessarily 1:1 mapped to a transport connection. Additionally or alternatively, the terms "flow" or "traffic flow" at least in some examples refer to a set of data and/or data units (e.g., datagrams, packets, or the like) passing an observation point in a network during a certain time interval. Additionally or alternatively, the term "flow" at least in some examples refers to a user plane data link that is attached to an association. Examples are circuit switched phone call, voice over IP call, reception of an SMS, sending of a contact card, PDP context for internet access, demultiplexing a TV channel from a channel multiplex, calculation of position coordinates from geopositioning satellite signals, and the like. For purposes of the present disclosure, the terms "traffic flow", "data flow", "dataflow", "packet flow", "network flow", and/or "flow" may be used interchangeably even though these terms at least in some examples refers to different concepts.

The term "dataflow" or "data flow" at least in some examples refers to the movement of data through a system including software elements, hardware elements, or a combination of both software and hardware elements. Additionally or alternatively, the term "dataflow" or "data flow" at least in some examples refers to a path taken by a set of data from an origination or source to destination that includes all nodes through which the set of data travels.

The term "stream" or "data stream" at least in some examples refers to a sequence of data elements made available over time. Additionally or alternatively, the term "stream", "data stream", or "streaming" refers to a unidirectional flow of data. Additionally or alternatively, the term "stream", "data stream", or "streaming" refers to a manner of processing in which an object is not represented by a complete data structure of nodes occupying memory proportional to a size of that object, but are processed "on the fly" as a sequence of events. At least in some examples, functions that operate on a stream, which may produce another stream, are referred to as "filters," and can be connected in pipelines, analogously to function composition; filters may operate on one item of a stream at a time, or may base an item of output on multiple input items, such as a moving average or the like.

The term "distributed computing" at least in some examples refers to computation resources that are geographically distributed within the vicinity of one or more localized networks' terminations. The term "distributed computations" at least in some examples refers to a model in which components located on networked computers communicate and coordinate their actions by passing messages interacting with each other in order to achieve a common goal.

The term "service" at least in some examples refers to the provision of a discrete function within a system and/or environment. Additionally or alternatively, the term "service" at least in some examples refers to a functionality or a set of functionalities that can be reused. The term "microservice" at least in some examples refers to one or more processes that communicate over a network to fulfil a goal using technology-agnostic protocols (e.g., HTTP or the like). Additionally or alternatively, the term "microservice" at least in some examples refers to services that are relatively small in size, messaging-enabled, bounded by contexts, autonomously developed, independently deployable, decentralized, and/or built and released with automated processes. Additionally or alternatively, the term "microservice" at least in some examples refers to a self-contained piece of functionality with clear interfaces, and may implement a layered architecture through its own internal components. Additionally or alternatively, the term "microservice architecture" at least in some examples refers to a variant of the service-oriented architecture (SOA) structural style wherein applications are arranged as a collection of loosely-coupled services (e.g., fine-grained services) and may use lightweight protocols. The term "network service" at least in some examples refers to a composition of Network Function(s) and/or Network Service(s), defined by its functional and behavioral specification.

The term "session" at least in some examples refers to a temporary and interactive information interchange between two or more communicating devices, two or more application instances, between a computer and user, and/or between any two or more entities or elements. Additionally or alternatively, the term "session" at least in some examples refers to a connectivity service or other service that provides or enables the exchange of data between two entities or elements. The term "network session" at least in some examples refers to a session between two or more communicating devices over a network. The term "web session" at least in some examples refers to session between two or more communicating devices over the Internet or some other network. The term "session identifier," "session ID," or "session token" at least in some examples refers to a piece of data that is used in network communications to identify a session and/or a series of message exchanges.

The term "quality" at least in some examples refers to a property, character, attribute, or feature of something as being affirmative or negative, and/or a degree of excellence of something. Additionally or alternatively, the term "quality" at least in some examples, in the context of data processing, refers to a state of qualitative and/or quantitative aspects of data, processes, and/or some other aspects of data processing systems.

The term "Quality of Service" or "QoS' at least in some examples refers to a description or measurement of the overall performance of a service (e.g., telephony and/or cellular service, network service, wireless communication/connectivity service, cloud computing service, and the like). In some cases, the QoS may be described or measured from the perspective of the users of that service, and as such, QoS may be the collective effect of service performance that determine the degree of satisfaction of a user of that service. In other cases, QoS at least in some examples refers to traffic prioritization and resource reservation control mechanisms rather than the achieved perception of service quality. In these cases, QoS is the ability to provide different priorities to different applications, users, or flows, or to guarantee a certain level of performance to a flow. In either case, QoS is characterized by the combined aspects of performance factors applicable to one or more services such as, for example, service operability performance, service accessibility performance; service retain ability performance; service reliability performance, service integrity performance, and other factors specific to each service. Several related aspects of the service may be considered when quantifying the QoS, including packet loss rates, bit rates, throughput, transmission delay, availability, reliability, jitter, signal strength and/or quality measurements, and/or other measurements such as those discussed herein. Additionally or alternatively, the term "Quality of Service" or "QoS' at least in some examples refers to mechanisms that provide traffic-forwarding treatment based on flow-specific traffic classification. In some examples, Additionally or alternatively, the term "Quality of Service" or "QoS' at least in some examples is based on the definitions provided by *SERIES E: OVERALL NETWORK OPERATION, TELEPHONE SER VICE, SERVICE OPERATION AND HUMAN FACTORS Quality of telecommunication services: concepts, models, objectives and dependability planning* - *Terms and definitions related to the quality of telecommunication services, Definitions of terms related to quality of service,* ITU-T Recommendation E.800 (09/2008) ("[ITUE800]"), the contents of which is hereby incorporated by reference in its entirety. Additionally or alternatively, the term "Quality of Service" or "QoS' at least in some examples refers to the collective effect of service performances which determine the degree of satisfaction of a user of a service. In some examples, QoS is characterized by the combined aspects of performance factors applicable to all services, such as service operability performance; service accessibility performance; service retainability performance; service integrity performance; and/or other factors specific to each service. In some implementations, the term "Quality of Service" or "QoS" can be used interchangeably with the term "Class of Service" or "CoS". The term "Class of Service" or "CoS' at least in some examples refers to mechanisms that provide traffic-forwarding treatment based on non-flow-specific traffic classification. In some implementations, the term "Class of Service" or "CoS" can be used interchangeably with the term "Quality of Service" or "QoS".

The term "QoS flow" at least in some examples refers to the finest granularity for QoS forwarding treatment in a network. The term "5G QoS flow' at least in some examples refers to the finest granularity for QoS forwarding treatment in a 5G System (5GS). Traffic mapped to the same QoS flow (or 5G QoS flow) receive the same forwarding treatment. The term "QoS Identifier" at least in some examples refers to a scalar that is used as a reference to a specific QoS forwarding behavior (e.g., packet loss rate, packet delay budget, and the like) to be provided to a QoS flow. This may be implemented in an access network by referencing node specific parameters that control the QoS forwarding treatment (e.g., scheduling weights, admission thresholds, queue management thresholds, link layer protocol configuration, and the like). The term "QoS profile" at least in some examples refers to a QoS profile comprises a number of QoS parameters. A QoS profile is associated with each QoS session. The QoS profile defines the performance expectations placed on the bearer network. The term "QoS session" at least in some examples refers to a lifetime of PDP context. Additionally or alternatively, the term "QoS session" at least in some examples refers to a period between the opening and closing of a network connection whose characteristics are defined by a QoS profile. In some examples, multiple QoS sessions may exist, each with a different QoS profile.

The term "data buffer" or "buffer" at least in some examples refers to a region of a physical or virtual memory used to temporarily store data, for example, when data is being moved from one storage location or memory space to another storage location or memory space, data being moved between processes within a computer, allowing for timing corrections made to a data stream, reordering received data packets, delaying the transmission of data packets, and the like. At least in some examples, a "data buffer" or "buffer" may implement a queue. The term "circular buffer", "circular queue", "cyclic buffer", or "ring buffer" at least in some examples refers to a data structure that uses a single fixed-size buffer or other area of memory as if it were connected end-to-end or as if it has a circular or elliptical shape.

The term "piggyback" or "piggybacking", in the context of computer communications and/or networking, refers to attaching, appending, or hooking a first data unit to a second data unit that is to be transmitted next or sometime before the first data unit; in this way, the first data unit gets a "free ride" in the data packet or frame carrying the second data unit.

The term "channel coding" at least in some examples refers to processes and/or techniques to add redundancy to messages or packets in order to make those messages or packets more robust against noise, channel interference, limited channel bandwidth, and/or other errors. For purposes of the present disclosure, the term "channel coding" can be used interchangeably with the terms "forward error correction" or "FEC"; "error correction coding", "error correction code", or "ECC"; and/or "network coding" or "NC". The term "network coding" at least in some examples refers to processes and/or techniques in which transmitted data is encoded and decoded to improve network performance. The term "code rate" at least in some examples refers to the proportion of a data stream or flow that is useful or non-redundant (e.g., for a code rate of k/n, for every k bits of useful information, the (en)coder generates a total of n bits of data, of which n - k are redundant). The term "systematic code" at least in some examples refers to any error correction code in which the input data is embedded in the encoded output. The term "non-systematic code" at least in some examples refers to any error correction code in which the input data is not embedded in the encoded output. The term "interleaving" at least in some examples refers to a process to rearrange code symbols so as to spread bursts of errors over multiple codewords that can be corrected by ECCs. The term "code word" or "codeword" at least in some examples refers to an element of a code or protocol, which is assembled in accordance with specific rules of the code or protocol.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain of NFs and/or nodes, along with policies associated to the list.

The term "PDU Connectivity Service" at least in some examples refers to a service that provides exchange of protocol data units (PDUs) between a UE and a data network (DN). The term "PDU Session" at least in some examples refers to an association between a UE and a DN that provides a PDU connectivity service (see e.g., 3GPP TS 38.415 v17.0.0 (2022-04-06) ("[TS38415]") and 3GPP TS 38.413 v17.3.0 (2023-01-06) ("[TS38413]"), the contents of each of which are hereby incorporated by reference in their entireties); a PDU Session type can be IPv4, IPv6, IPv4v6, Ethernet), Unstructured, or any other network/connection type, such as those discussed herein. The term "PDU Session Resource" at least in some examples refers to an NG-RAN interface (e.g., NG, Xn, and/or E1 interfaces) and radio resources provided to support a PDU Session. The term "multi-access PDU session" or "MA PDU Session" at least in some examples refers to a PDU Session that provides a PDU connectivity service, which can use one access network at a time or multiple access networks simultaneously.

The term "traffic shaping" at least in some examples refers to a bandwidth management technique that manages data transmission to comply with a desired traffic profile or class of service. Traffic shaping ensures sufficient network bandwidth for time-sensitive, critical applications using policy rules, data classification, queuing, QoS, and other techniques. The term "throttling" at least in some examples refers to the regulation of flows into or out of a network, or into or out of a specific device or element. The term "access traffic steering" or "traffic steering" at least in some examples refers to a procedure that selects an access network for a new data flow and transfers the traffic of one or more data flows over the selected access network. Access traffic steering is applicable between one 3GPP access and one non-3GPP access. The term "access traffic switching" or "traffic switching" at least in some examples refers to a procedure that moves some or all traffic of an ongoing data flow from at least one access network to at least one other access network in a way that maintains the continuity of the data flow. The term "access traffic splitting" or "traffic splitting" at least in some examples refers to a procedure that splits the traffic of at least one data flow across multiple access networks. When traffic splitting is applied to a data flow, some traffic of the data flow is transferred via at least one access channel, link, or path, and some other traffic of the same data flow is transferred via another access channel, link, or path.

The term "network address" at least in some examples refers to an identifier for a node or host in a computer network, and may be a unique identifier across a network and/or may be unique to a locally administered portion of the network. Examples of identifiers and/or network addresses can include am application identifier, Bluetooth hardware device address (BD_ADDR), a cellular network address (e.g., Absolute Radio-Frequency Channel Number (ARFCN), Access Point Name (APN), AMF name and/or AMF identifier (ID), AF-Service-Identifier, Cell Global Identifier (CGI) (e.g., NR CGI (NCGI), CGI NG-RAN, CGI EUTRA, and/or the like), Closed Access Group Identifier (CAG-ID), Edge Application Server (EAS) ID, Data Network Access Identifier (DNAI), Data Network Name (DNN), Evolved Cell Global Identifier (ECGI), EPS Bearer Identity (EBI), Equipment Identity Register (EIR) and/or 5G-EIR, Extended Unique Identifier (EUI), Group ID for Network Selection (GIN), Generic Public Subscription Identifier (GPSI), Globally Unique AMF Identifier (GUAMI), Globally Unique Temporary Identifier (GUTI) and/or 5G-GUTI, gNB Identifier (gNB ID), Global gNB ID, International Mobile Equipment Identity (IMEI), IMEI Type Allocation Code (IMEA/TAC), International Mobile Subscriber Identity (IMSI), IMSI software version (IMSISV), permanent equipment identifier (PEI), Local Area Data Network (LADN) DNN, Local NG-RAN Node Identifier, Mobile Subscriber Identification Number (MSIN), Mobile Subscriber/Station ISDN Number (MSISDN), Network identifier (NID), Network Slice Instance (NSI) ID, Network Slice AS Group (NSAG), Permanent Equipment Identifier (PEI), Public Land Mobile Network (PLMN) identity (ID), Physical Cell Identifier (PCI), QoS Flow ID (QFI) and/or 5G QoS Identifier (5QI), RAN ID, Routing Indicator, Radio Network Temporary Identifier (RNTI) and variants thereof (e.g., any of those discussed in clause 8 of 3GPP TS 38.300 v17.5.0 (2023-06-30) ("[TS38300]"), the contents of which are hereby incorporated by reference in its entirety), SMS Function (SMSF) ID, Stand-alone Non-Public Network (SNPN) ID, Single Network Slice Selection Assistance information (S-NSSAI), sidelink identities (e.g., Source Layer-2 ID, Destination Layer-2 ID, PC5 Link Identifier, and the like), Subscription Concealed Identifier (SUCI), Subscription Permanent Identifier (SUPI), Temporary Mobile Subscriber Identity (TMSI) and variants thereof, Tracking Area identity (TAI), UE Access Category and Identity, and/or other cellular network related identifiers), CAG-ID, driver's license number, Global Trade Item Number (GTIN) (e.g., Australian Product Number (APN), EPC, European Article Number (EAN), Universal Product Code (UPC), and the like), email address, Enterprise Application Server (EAS) ID, an endpoint address, an Electronic Product Code (EPC) as defined by the EPCglobal Tag Data Standard, Fully Qualified Domain Name (FQDN), flow ID and/or flow hash, hash value, index, internet protocol (IP) address in an IP network (e.g., IP version 4 (IPv4), IP version 6 (IPv6), and the like), an internet packet exchange (IPX) address, LAN ID, a MAC address, personal area network (PAN) ID, port number (e.g., TCP port number, UDP port number, and the like), price lookup code (PLC), product key, QUIC connection ID, RFID tag, sequence number, service set identifier (SSID) and variants thereof, screen name, serial number, stock keeping unit (SKU), socket address, social security number (SSN), telephone number (e.g., in a public switched telephone network (PTSN)), unique identifier (UID) (e.g., including globally UID, universally unique identifier (UUID) (e.g., as specified in ISO/IEC 11578:1996), and the like), a Universal Resource Locator (URL) and/or Universal Resource Identifier (URI), user name (e.g., ID for logging into a service provider platform, such as a social network and/or some other service), vehicle identification number (VIN), Virtual LAN (VLAN) ID, X.21 address, an X.25 address, Zigbee^{®} ID, Zigbee^{®} Device Network ID, and/or any other suitable network address and components thereof.

The term "universally unique identifier" or "UUID" at least in some examples refers to a number used to identify information in computer systems. In some examples, a UUID includes 128-bit numbers and/or are represented as 32 hexadecimal digits displayed in five groups separated by hyphens in the following format: "xxxxxxxx-xxxx-Mxxx-Nxxx-xxxxxxxxxxxx" where the four-bit M and the 1 to 3 bit N fields code the format of the UUID itself. Additionally or alternatively, the term "universally unique identifier" or "UUID" at least in some examples refers to a "globally unique identifier" and/or a "GUID". The term "endpoint address" at least in some examples refers to an address used to determine the host/authority part of a target URI, where the target URI is used to access an NF service (e.g., to invoke service operations) of an NF service producer or for notifications to an NF service consumer.

The term "port" in the context of computer networks, at least in some examples refers to a communication endpoint, a virtual data connection between two or more entities, and/or a virtual point where network connections start and end. Additionally or alternatively, a "port" at least in some examples is associated with a specific process or service. Additionally or alternatively, the term "port" at least in some examples refers to a particular interface of the specified equipment (apparatus) with an electromagnetic environment (e.g., any connection point on an equipment intended for connection of cables to or from that equipment is considered as a port).

The term "subnetwork" or "subnet" at least in some examples refers to a logical subdivision of a network, such as an IP network. The practice of dividing a network into two or more networks is called "subnetting."

The term "delay" at least in some examples refers to a time interval between two events. Additionally or alternatively, the term "delay" at least in some examples refers to a time interval between the propagation of a signal and its reception. The term "delay bound" at least in some examples refers to a predetermined or configured amount of acceptable delay. The term "per-packet delay bound" at least in some examples refers to a predetermined or configured amount of acceptable packet delay where packets that are not processed and/or transmitted within the delay bound are considered to be delivery failures and are discarded or dropped. The term "goodput" at least in some examples refers to a number of useful information bits delivered by the network to a certain destination per unit of time. The term "jitter" at least in some examples refers to a deviation from a predefined ("true") periodicity of a presumably periodic signal in relation to a reference clock signal. The term "latency" at least in some examples refers to the amount of time it takes to transfer a first/initial data unit in a data burst from one point to another. Additionally or alternatively, the term "latency" at least in some examples refers to the delay experienced by a data unit (e.g., frame) in the course of its propagation between two points in a network, measured from the time that a known reference point in the frame passes the first point to the time that the reference point in the data unit passes the second point. The term "network delay" at least in some examples refers to the delay of an a data unit within a network (e.g., an IP packet within an IP network). The term "packet delay" at least in some examples refers to the time it takes to transfer any packet from one point to another. Additionally or alternatively, the term "packet delay" or "per packet delay" at least in some examples refers to the difference between a packet reception time and packet transmission time. Additionally or alternatively, the "packet delay" or "per packet delay" can be measured by subtracting the packet sending time from the packet receiving time where the transmitter and receiver are at least somewhat synchronized. The term "packet drop rate" at least in some examples refers to a share of packets that were not sent to the target due to high traffic load or traffic management and should be seen as a part of the packet loss rate. The term "packet loss rate" at least in some examples refers to a share of packets that could not be received by the target, including packets dropped, packets lost in transmission and packets received in wrong format. The term "performance indicator" at least in some examples refers to performance data aggregated over a group of network functions (NFs), which is derived from performance measurements collected at the NFs that belong to the group, according to the aggregation method identified in a Performance Indicator definition. The term "physical rate" or "PHY rate" at least in some examples refers to a speed at which one or more bits are actually sent over a transmission medium. Additionally or alternatively, the term "physical rate" or "PHY rate" at least in some examples refers to a speed at which data can move across a wireless link between a transmitter and a receiver. The term "processing delay" at least in some examples refers to an amount of time taken to process a packet in a network node. The term "propagation delay" at least in some examples refers to amount of time it takes a signal's header to travel from a sender to a receiver. The term "queuing delay" at least in some examples refers to an amount of time a job waits in a queue until that job can be executed. Additionally or alternatively, the term "queuing delay" at least in some examples refers to an amount of time a packet waits in a queue until it can be processed and/or transmitted. The term "throughput" or "network throughput" at least in some examples refers to a rate of production or the rate at which something is processed. Additionally or alternatively, the term "throughput" or "network throughput" at least in some examples refers to a rate of successful message (date) delivery over a communication channel. The term "transmission delay" at least in some examples refers to an amount of time needed (or necessary) to push a packet (or all bits of a packet) into a transmission medium.

The term "application" or "app" at least in some examples refers to a computer program designed to carry out a specific task other than one relating to the operation of the computer itself. Additionally or alternatively, term "application" or "app" at least in some examples refers to a complete and deployable package, environment to achieve a certain function in an operational environment.

The term "process" at least in some examples refers to an instance of a computer program that is being executed by one or more threads. In some implementations, a process may be made up of multiple threads of execution that execute instructions concurrently.

The term "algorithm" at least in some examples refers to an unambiguous specification of how to solve a problem or a class of problems by performing calculations, input/output operations, data processing, automated reasoning tasks, and/or the like.

The term "analytics" at least in some examples refers to the discovery, interpretation, and communication of meaningful patterns in data.

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The terms "instantiate," "instantiation," and the like at least in some examples refers to the creation of an instance. In some examples, an "instance" also at least in some examples refers to a concrete occurrence of an object, which may occur, for example, during execution of program code.

The term "reference point" at least in some examples refers to a conceptual point at the conjunction of two non-overlapping functional groups, elements, or entities.

The term "reference" at least in some examples refers to data useable to locate other data and may be implemented a variety of ways (e.g., a pointer, an index, a handle, a key, an identifier, a hyperlink, and/or the like).

The term "use case" at least in some examples refers to a description of a system from a user's perspective. Use cases sometimes treat a system as a black box, and the interactions with the system, including system responses, are perceived as from outside the system. In some examples, use cases avoid technical jargon, preferring instead the language of the end user or domain expert. The term "user" at least in some examples refers to an abstract representation of any entity issuing commands, requests, and/or data to a compute node or system, and/or otherwise consumes or uses services. Additionally or alternative, the term "user" at least in some examples refers to an entity, not part of a 3GPP system, which uses 3GPP system services (e.g., a person using a 3GPP system mobile station as a portable telephone). The term "user profile" at least in some examples refers to a set of information used to provide a user with a consistent, personalized service environment, irrespective of the user's location or the terminal used (within the limitations of the terminal and the serving network).

The terms "configuration", "policy", "ruleset", and/or "operational parameters", at least in some examples refer to a machine-readable information object that contains instructions, conditions, parameters, and/or criteria that are relevant to a device, system, or other element/entity.

The term "data set" or "dataset" at least in some examples refers to a collection of data; a "data set" or "dataset" may be formed or arranged in any type of data structure. In some examples, one or more characteristics can define or influence the structure and/or properties of a dataset such as the number and types of attributes and/or variables, and various statistical measures (e.g., standard deviation, kurtosis, and/or the like). The term "data structure" at least in some examples refers to a data organization, management, and/or storage format. Additionally or alternatively, the term "data structure" at least in some examples refers to a collection of data values, the relationships among those data values, and/or the functions, operations, tasks, and the like, that can be applied to the data. Examples of data structures include primitives (e.g., Boolean, character, floating-point numbers, fixed-point numbers, integers, reference or pointers, enumerated type, and/or the like), composites (e.g., arrays, records, strings, union, tagged union, and/or the like), abstract data types (e.g., data container, list, tuple, associative array, map, dictionary, set (or dataset), multiset or bag, stack, queue, graph (e.g., tree, heap, and the like), and/or the like), routing table, symbol table, quad-edge, blockchain, purely-functional data structures (e.g., stack, queue, (multi)set, random access list, hash consing, zipper data structure, and/or the like).

The term "association" at least in some examples refers to a model of relationships between Managed Objects. Associations can be implemented in several ways, such as: (1) name bindings, (2) reference attributes, and (3) association objects.

The term "Information Object Class" or "IOC" at least in some examples refers to a representation of the management aspect of a network resource. Additionally or alternatively, the term "Information Object Class" or "IOC" at least in some examples refers to a description of the information that can be passed/used in management interfaces. Their representations are technology agnostic software objects. IOC has attributes that represents the various properties of the class of objects. Furthermore, IOC can support operations providing network management services invocable on demand for that class of objects. An IOC may support notifications that report event occurrences relevant for that class of objects. It is modelled using the stereotype "Class" in the UML meta-model.

The term "Managed Object" or "MO" at least in some examples refers to an instance of a Managed Object Class (MOC) representing the management aspects of a network resource. Its representation is a technology specific software object. In some examples, an MO is called an "MO instance" or "MOI". Additionally or alternatively, the term "Managed Object" or "MO" at least in some examples refers to a class of technology specific software objects. In some examples, an MOC is the same as an IOC except that the former is defined in technology specific terms and the latter is defined in technology agnostic terms. MOCs are used/defined in SS level specifications. In some examples, IOCs are used/defined in IS level specifications.

The term "Management Information Base" or "MIB" at least in some examples refers to an instance of an NRM and has some values on the defined attributes and associations specific for that instance. In some examples, an MIB includes a name space (describing the MO containment hierarchy in the MIB through Distinguished Names), a number of MOs with their attributes, and a number of associations between the MOs.

The term "name space" at least in some examples refers to a collection of names. In some examples, a name space is restricted to a hierarchical containment structure, including its simplest form - the one-level, flat name space. In some examples, all MOs in an MIB are included in the corresponding name space and the MIB/name space shall only support a strict hierarchical containment structure (with one root object). An MO that contains another is said to be the superior (parent); the contained MO is referred to as the subordinate (child). The parent of all MOs in a single name space is called a Local Root. The ultimate parent of all MOs of all managed systems is called the Global Root.

The term "network resource" at least in some examples refers to a discrete entity represented by an IOC for the purpose of network and service management. In some examples, a network resource may represent intelligence, information, hardware and/or software of a telecommunication network.

The term "Network Resource Model" or "NRM" at least in some examples refers to a collection of IOCs, inclusive of their associations, attributes and operations, representing a set of network resources under management.

The term "self-organizing network" or "SON" at least in some examples refers to a type of network architecture or system that is designed to automate the planning, configuration, optimization, and/or healing processes of a wireless network with little or no direct human intervention (see e.g., 3GPP TS 32.500 v17.0.0 (2022-04-04) ("[TS32500]"), 3GPP TS 28.313 v18.2.0 (2023-06-22) ("[TS28310]"), and 3GPP TS 28.313 v17.8.0 (2023-03-30) ("[TS28313]"), the contents of each of which are hereby incorporated by reference in their entireties.

Referring to TS 32.500 v17.0.0, which refers to TS 32.541, TS 32.541 V.17.0.0 describes the healing process as self-healing as a functionality. The purpose of Self-healing is to solve or mitigate the faults which could be solved automatically by triggering appropriate recovery actions. From the point of view of fault management, for each detected fault, appropriate alarms shall be generated by the faulty network entity, regardless of whether it is an ADAC (Automatically Detected and Automatically Cleared) or an ADMC (Automatically Detected and Manually Cleared) fault. The trigger of Self-healing can be an alarm. In this case, the Self-healing functionality monitors the alarms, and when it finds alarm/s which could be solved automatically, it gathers more necessary information (e.g. measurements, testing result, etc) and does deep analysis, and then according to the analysis result, if necessary, it triggers appropriate recovery actions to solve the fault automatically. For some Self-healing functions which are located in NEs and require more rapid response, the trigger of Self-healing can be the detection of a fault. Hence, when a fault is detected, an appropriate Self-healing Process will be triggered to try to heal the fault automatically. The Self-healing functionality also monitors the execution of the recovery action/s and decides the next step accordingly. After a Self-healing procedure ended, the Self-healing functionality shall generate and forward appropriate notifications to inform the IRPManager about the Self-healing result and all the information of the performed recovery actions may be logged. Self-healing Process is describes as: When a TCoSH is reached, particular action(s) will be triggered to solve or mitigate the particular fault. Self-healing Function is described as a Self-healing Function to monitor a particular TCoSH and then, if necessary, to trigger a Self-healing Process to solve or mitigate the particular fault. Trigger Condition of Self-Healing (TCoSH) is described as the condition which is used to judge whether a Self-healing Process needs to be started. This condition could be an alarm or the detection of a fault.

In more detail from TS 32.541 V.17.0.0, the general Self-healing procedure includes following steps: [Monitoring part:] having SH01 and SH02, which [SH01] is the Self-healing Function monitors the TCoSHs continuously and [SH02] is when a TCoSH is reached, then an appropriate Self-healing Process shall be triggered. [Healing process part:] is described as including SH03 to SH10. In [SH03] the Self-healing Function gathers more necessary information (e.g. measurements, CM data, testing result, etc). In [SH04] based on the TCoSH and gathered information, the Self-healing Function does deep analysis and diagnosis, and gives the result. If the result includes recovery action/s, then go to next step, if not, go to End. In [SH05] the configuration data prior to the executing of the recovery action/s is backed up if needed. In [SH06] if necessary, the Self-healing Function triggers the executing of the recovery action/s. In [SH07] the Self-healing Function evaluates the result of the self-healing recovery action/s: If the fault hasn't been solved and the stop condition/s is not reached, then the self-healing runs again, i.e. go to SH03. If the fault has been solved, then go to [SH09]. If the stop condition/s is reached, then: In [SH08] if necessary, fallback is executed. Go to [SH09]. In [SH09] the Self-healing Function emits a notification to report the result of the Self-healing Process. In [SH10] if necessary, the Self-healing Function logs the information of the performed recovery actions and the occurrence of important events during the self-healing process. Remark: The detailed healing process part of the individual self-healing use cases may differ from this general description, for example: The order of the bullet points in the list does not imply any statement on the order of execution. In [SH05], whether the backup of the configuration data is needed and which configuration data should be backed up shall be decided on a use case by use case basis. In [SH08], whether a fallback is needed shall be decided on a use case by use case basis. In [SH10], whether log is needed and the detail of the logged information shall be decided on a use case by use case basis. Correspondingly, the term healing may include any process or action to solve or mitigate faults, such a recover, repair, restore, etc.

The term "performance indicator" at least in some examples refers to performance data aggregated over a group of NFs that is derived from performance measurements collected at the NFs that belong to the group. In some examples, performance indicators are derived, collected or aggregated according to an aggregation method identified in a performance indicator definition.

The term "datagram" at least in some examples at least in some examples refers to a basic transfer unit associated with a packet-switched network; a datagram may be structured to have header and payload sections. The term "datagram" at least in some examples may be synonymous with any of the following terms, even though they may refer to different aspects: "data unit", a "protocol data unit" or "PDU", a "service data unit" or "SDU", "frame", "packet", a "network packet", "segment", "block", "cell", "chunk", "Type Length Value" or "TLV", and/or the like. Examples of datagrams, network packets, and the like, include internet protocol (IP) packet, Internet Control Message Protocol (ICMP) packet, UDP packet, TCP packet, SCTP packet, ICMP packet, Ethernet frame, RRC messages/packets, SDAP PDU, SDAP SDU, PDCP PDU, PDCP SDU, MAC PDU, MAC SDU, BAP PDU. BAP SDU, RLC PDU, RLC SDU, WiFi frames as discussed in a [IEEE802] protocol/standard (e.g., [IEEE80211] or the like), Type Length Value (TLV), and/or other like data structures. The term "packet" at least in some examples refers to an information unit identified by a label at layer 3 of the OSI reference model. In some examples, a "packet" may also be referred to as a "network protocol data unit" or "NPDU". The term "protocol data unit" at least in some examples refers to a unit of data specified in an (N)-protocol layer and consisting of (N)-protocol control information and possibly (N)-user data.

The term "information element" or "IE" at least in some examples refers to a structural element containing one or more fields. Additionally or alternatively, the term "information element" or "IE" at least in some examples refers to a field or set of fields defined in a standard or specification that is used to convey data and/or protocol information. The term "field" at least in some examples refers to individual contents of an information element, or a data element that contains content. The term "data frame", "data field", or "DF" at least in some examples refers to a data type that contains more than one data element in a predefined order. The term "data element" or "DE" at least in some examples refers to a data type that contains one single data. Additionally or alternatively, the term "data element" at least in some examples refers to an atomic state of a particular object with at least one specific property at a certain point in time, and may include one or more of a data element name or identifier, a data element definition, one or more representation terms, enumerated values or codes (e.g., metadata), and/or a list of synonyms to data elements in other metadata registries. Additionally or alternatively, a "data element" at least in some examples refers to a data type that contains one single data. Data elements may store data, which may be referred to as the data element's content (or "content items"). Content items may include text content, attributes, properties, and/or other elements referred to as "child elements." Additionally or alternatively, data elements may include zero or more properties and/or zero or more attributes, each of which may be defined as database objects (e.g., fields, records, and the like), object instances, and/or other data elements. An "attribute" at least in some examples refers to a markup construct including a name-value pair that exists within a start tag or empty element tag. Attributes contain data related to its element and/or control the element's behavior. The term "type length value", "tag length value", or "TLV" at least in some examples refers to an encoding scheme used for informational elements in a protocol; TLVs are sometimes used to encode additional or optional information elements in a protocol. In some examples, a TLV-encoded data stream contains code related to the type of value, the length of the value, and the value itself. In some examples, the type in a TLV includes a binary and/or alphanumeric code, which indicates the kind of field that this part of the message represents; the length in a TLV includes a size of the value field (e.g., in bytes); and the value in a TLV includes a variable-sized series of bytes which contains data for this part of the message.

The term "authorization" at least in some examples refers to a prescription that a particular behavior shall not be prevented.

The term "authentication" at least in some embodiments refers to a process of proving or verifying an identity. Additionally or alternatively, the term "authentication" at least in some embodiments refers to a mechanism by which a computer system checks or verifies that a user or entity is really the user or entity being claimed. Examples of the authentication and/or authorization techniques include using API keys, basic access authentication ("Basic Auth"), Open Authorization (OAuth), hash-based message authentication codes (HMAC), Kerberos protocol, OpenID, WebID, and/or other authentication and/or authorization techniques.

The term "cryptographic mechanism" at least in some examples refers to any cryptographic protocol and/or cryptographic algorithm. Examples of cryptographic mechanisms include a cryptographic hash algorithm, such as a function in the Secure Hash Algorithm (SHA) 2 set of cryptographic hash algorithms (e.g., SHA-226, SHA-256, SHA-512, and the like), SHA 3, and so forth, or any type of keyed or unkeyed cryptographic hash function and/or any other function discussed herein; an elliptic curve cryptographic (ECC) algorithm (e.g., Elliptic Curve cryptography Key Agreement algorithm (ECKA) algorithm, Elliptic Curve cryptography Digital Signature Algorithm (ECDSA), Lenstra elliptic-curve factorization or elliptic-curve factorization method (ECM), Menezes-Qu-Vanstone (MQV) or elliptic curve MQV (ECMQV), Elliptic Curve Diffie-Hellman (ECDH) key agreement, Elliptic Curve Integrated Encryption Scheme (ECIES) or Elliptic Curve Augmented Encryption Scheme, Edwards-curve Digital Signature Algorithm (EdDSA), and/or the like); Rivest-Shamir-Adleman (RSA) cryptography; Merkle signature scheme, advanced encryption system (AES) algorithm; a triple data encryption algorithm (3DES); Quantum cryptography algorithms; and/or the like. Additionally or alternatively, the term "cryptographic protocol" at least in some examples refers to a sequence of steps precisely specifying the actions required of two or more entities to achieve specific security objectives (e.g., cryptographic protocol for key agreement). Additionally or alternatively, the term "cryptographic algorithm" at least in some examples refers to an algorithm specifying the steps followed by a single entity to achieve specific security objectives (e.g., cryptographic algorithm for symmetric key encryption).

The term "cryptographic hash function", "hash function", or "hash") at least in some examples refers to a mathematical algorithm that maps data of arbitrary size (sometimes referred to as a "message") to a bit array of a fixed size (sometimes referred to as a "hash value", "hash", or "message digest"). A cryptographic hash function is usually a one-way function, which is a function that is practically infeasible to invert.

The term "cryptographic key" or "key" at least in some examples refers to a piece of information, usually a string of numbers or letters that are stored in a file, which, when processed through a cryptographic algorithm can encode or decode cryptographic data. The term "symmetric-key algorithm" at least in some examples refers to a cryptographic algorithm that uses the same cryptographic key for both the encryption of plaintext and the decryption of ciphertext; the keys may be identical, or there may be a simple transformation to go between the two keys.

The term "encryption" at least in some examples refers to a process of encoding information wherein the original representation of information (referred to as "plaintext") into an alternative form (referred to as "ciphertext"). In some examples, an encryption scheme includes use of a pseudo-random encryption key generated by a cryptographic mechanism or some other algorithm to generate an encryption key, which can be used to encrypt and/or decrypt the plaintext.

The term "accuracy" at least in some examples refers to the closeness of one or more measurements to a specific value.

The term "artificial intelligence" or "AI" at least in some examples refers to any intelligence demonstrated by machines, in contrast to the natural intelligence displayed by humans and other animals. Additionally or alternatively, the term "artificial intelligence" or "AI" at least in some examples refers to the study of "intelligent agents" and/or any device that perceives its environment and takes actions that maximize its chance of successfully achieving a goal.

The terms "artificial neural network", "neural network", or "NN" refer to an ML technique comprising a collection of connected artificial neurons or nodes that (loosely) model neurons in a biological brain that can transmit signals to other arterial neurons or nodes, where connections (or edges) between the artificial neurons or nodes are (loosely) modeled on synapses of a biological brain. The artificial neurons and edges typically have a weight that adjusts as learning proceeds. The weight increases or decreases the strength of the signal at a connection. Neurons may have a threshold such that a signal is sent only if the aggregate signal crosses that threshold. The artificial neurons can be aggregated or grouped into one or more layers where different layers may perform different transformations on their inputs. Signals travel from the first layer (the input layer), to the last layer (the output layer), possibly after traversing the layers multiple times. NNs are usually used for supervised learning, but can be used for unsupervised learning as well. Examples of NNs include deep NN (DNN), feed forward NN (FFN), deep FNN (DFF), convolutional NN (CNN), deep CNN (DCN), deconvolutional NN (DNN), a deep belief NN, a perception NN, recurrent NN (RNN) (e.g., including Long Short Term Memory (LSTM) algorithm, gated recurrent unit (GRU), echo state network (ESN), and the like), spiking NN (SNN), deep stacking network (DSN), Markov chain, perception NN, generative adversarial network (GAN), transformers, stochastic NNs (e.g., Bayesian Network (BN), Bayesian belief network (BBN), a Bayesian NN (BNN), Deep BNN (DBNN), Dynamic BN (DBN), probabilistic graphical model (PGM), Boltzmann machine, restricted Boltzmann machine (RBM), Hopfield network or Hopfield NN, convolutional deep belief network (CDBN), and the like), Linear Dynamical System (LDS), Switching LDS (SLDS), Optical NNs (ONNs), an NN for reinforcement learning (RL) and/or deep RL (DRL), and/or the like.

The term "attention" in the context of machine learning and/or neural networks, at least in some examples refers to a technique that mimics cognitive attention, which enhances important parts of a dataset where the important parts of the dataset may be determined using training data by gradient descent. The term "dot-product attention" at least in some examples refers to an attention technique that uses the dot product between vectors to determine attention. The term "multi-head attention" at least in some examples refers to an attention technique that combines several different attention mechanisms to direct the overall attention of a network or subnetwork.

The term "attention model" or "attention mechanism" at least in some examples refers to input processing techniques for neural networks that allow the neural network to focus on specific aspects of a complex input, one at a time until the entire dataset is categorized. The goal is to break down complicated tasks into smaller areas of attention that are processed sequentially. Similar to how the human mind solves a new problem by dividing it into simpler tasks and solving them one by one. The term "attention network" at least in some examples refers to an artificial neural networks used for attention in machine learning.

The term "backpropagation" at least in some examples refers to a method used in NNs to calculate a gradient that is needed in the calculation of weights to be used in the NN; "backpropagation" is shorthand for "the backward propagation of errors." Additionally or alternatively, the term "backpropagation" at least in some examples refers to a method of calculating the gradient of neural network parameters. Additionally or alternatively, the term "backpropagation" or "back pass" at least in some examples refers to a method of traversing a neural network in reverse order, from the output to the input layer.

The term "Bayesian optimization" at least in some examples refers to a sequential design strategy for global optimization of black-box functions that does not assume any functional forms. Additionally or alternatively, the term "Bayesian optimization" at least in some examples refers to an optimization technique based upon the minimization of an expected deviation from an extremum. At least in some examples, Bayesian optimization minimizes an objective function by building a probability model based on past evaluation results of the objective.

The term "classification" in the context of machine learning at least in some examples refers to an ML technique for determining the classes to which various data points belong. Here, the term "class" or "classes" at least in some examples refers to categories, and are sometimes called "targets" or "labels." Classification is used when the outputs are restricted to a limited set of quantifiable properties. Classification algorithms may describe an individual (data) instance whose category is to be predicted using a feature vector. As an example, when the instance includes a collection (corpus) of text, each feature in a feature vector may be the frequency that specific words appear in the corpus of text. In ML classification, labels are assigned to instances, and models are trained to correctly predict the pre-assigned labels of from the training examples. ML algorithms for classification may be referred to as a "classifier." Examples of classifiers include linear classifiers, k-nearest neighbor (kNN), decision trees, random forests, support vector machines (SVMs), Bayesian classifiers, convolutional neural networks (CNNs), among many others (note that some of these algorithms can be used for other ML tasks as well).

The term "computational graph" at least in some examples refers to a data structure that describes how an output is produced from one or more inputs.

The term "converge" or "convergence" at least in some examples refers to the stable point found at the end of a sequence of solutions via an iterative optimization algorithm. Additionally or alternatively, the term "converge" or "convergence" at least in some examples refers to the output of a function or algorithm getting closer to a specific value over multiple iterations of the function or algorithm.

The term "convolution" at least in some examples refers to a convolutional operation or a convolutional layer of a CNN.

The term "convolutional filter" at least in some examples refers to a matrix having the same rank as an input matrix, but a smaller shape. In machine learning, a convolutional filter is mixed with an input matrix in order to train weights.

The term "convolutional layer" at least in some examples refers to a layer of a DNN in which a convolutional filter passes along an input matrix (e.g., a CNN). Additionally or alternatively, the term "convolutional layer" at least in some examples refers to a layer that includes a series of convolutional operations, each acting on a different slice of an input matrix

The term "convolutional neural network" or "CNN" at least in some examples refers to a neural network including at least one convolutional layer. Additionally or alternatively, the term "convolutional neural network" or "CNN" at least in some examples refers to a DNN designed to process structured arrays of data such as images.

The term "convolutional operation" at least in some examples refers to a mathematical operation on two functions (e.g., *f* and *g*) that produces a third function (*f* * *g*) that expresses how the shape of one is modified by the other where the term "convolution" may refer to both the result function and to the process of computing it. Additionally or alternatively, term "convolutional" at least in some examples refers to the integral of the product of the two functions after one is reversed and shifted, where the integral is evaluated for all values of shift, producing the convolution function. Additionally or alternatively, term "convolutional" at least in some examples refers to a two-step mathematical operation includes element-wise multiplication of the convolutional filter and a slice of an input matrix (the slice of the input matrix has the same rank and size as the convolutional filter); and (2) summation of all the values in the resulting product matrix

The term "covariance" at least in some examples refers to a measure of the joint variability of two random variables, wherein the covariance is positive if the greater values of one variable mainly correspond with the greater values of the other variable (and the same holds for the lesser values such that the variables tend to show similar behavior), and the covariance is negative when the greater values of one variable mainly correspond to the lesser values of the other.

The term "ensemble averaging" at least in some examples refers to the process of creating multiple models and combining them to produce a desired output, as opposed to creating just one model.

The term "ensemble learning" or "ensemble method" at least in some examples refers to using multiple learning algorithms to obtain better predictive performance than could be obtained from any of the constituent learning algorithms alone.

The term "epoch" at least in some examples refers to one cycle through a full training dataset. Additionally or alternatively, the term "epoch" at least in some examples refers to a full training pass over an entire training dataset such that each training example has been seen once; here, an epoch represents N/batch size training iterations, where N is the total number of examples.

The term "event", in probability theory, at least in some examples refers to a set of outcomes of an experiment (e.g., a subset of a sample space) to which a probability is assigned. Additionally or alternatively, the term "event" at least in some examples refers to a software message indicating that something has happened. Additionally or alternatively, the term "event" at least in some examples refers to an object in time, or an instantiation of a property in an object. Additionally or alternatively, the term "event" at least in some examples refers to a point in space at an instant in time (e.g., a location in spacetime). Additionally or alternatively, the term "event" at least in some examples refers to a notable occurrence at a particular point in time.

The term "experiment" in probability theory, at least in some examples refers to any procedure that can be repeated and has a well-defined set of outcomes, known as a sample space.

The term "F score" or "F measure" at least in some examples refers to a measure of a test's accuracy that may be calculated from the precision and recall of a test or model. The term "F1 score" at least in some examples refers to the harmonic mean of the precision and recall, and the term "Fβ score" at least in some examples refers to an F-score having additional weights that emphasize or value one of precision or recall more than the other.

The term "feature" at least in some examples refers to an individual measureable property, quantifiable property, or characteristic of a phenomenon being observed. Additionally or alternatively, the term "feature" at least in some examples refers to an input variable used in making predictions. At least in some examples, features may be represented using numbers/numerals (e.g., integers), strings, variables, ordinals, real-values, categories, and/or the like.

The term "feature engineering" at least in some examples refers to a process of determining which features might be useful in training an ML model, and then converting raw data into the determined features. Feature engineering is sometimes referred to as "feature extraction."

The term "feature extraction" at least in some examples refers to a process of dimensionality reduction by which an initial set of raw data is reduced to more manageable groups for processing. Additionally or alternatively, the term "feature extraction" at least in some examples refers to retrieving intermediate feature representations calculated by an unsupervised model or a pretrained model for use in another model as an input. Feature extraction is sometimes used as a synonym of "feature engineering"

The term "feature map" at least in some examples refers to a function that takes feature vectors (or feature tensors) in one space and transforms them into feature vectors (or feature tensors) in another space. Additionally or alternatively, the term "feature map" at least in some examples refers to a function that maps a data vector (or tensor) to feature space. Additionally or alternatively, the term "feature map" at least in some examples refers to a function that applies the output of one filter applied to a previous layer. In some embodiments, the term "feature map" may also be referred to as an "activation map".

The term "feature vector" at least in some examples, in the context of ML, refers to a set of features and/or a list of feature values representing an example passed into a model. Additionally or alternatively, the term "feature vector" at least in some examples, in the context of ML, refers to a vector that includes a tuple of one or more features.

The term "forward propagation" or "forward pass" at least in some examples, in the context of ML, refers to the calculation and storage of intermediate variables (including outputs) for a neural network in order from the input layer to the output layer.

The term "hidden layer", in the context of ML and NNs, at least in some examples refers to an internal layer of neurons in an ANN that is not dedicated to input or output. The term "hidden unit" refers to a neuron in a hidden layer in an ANN.

The term "hyperparameter" at least in some examples refers to characteristics, properties, and/or parameters for an ML process that cannot be learnt during a training process. Hyperparameter are usually set before training takes place, and may be used in processes to help estimate model parameters. Examples of hyperparameters include model size (e.g., in terms of memory space, bytes, number of layers, and the like); training data shuffling (e.g., whether to do so and by how much); number of evaluation instances, iterations, epochs (e.g., a number of iterations or passes over the training data), or episodes; number of passes over training data; regularization; learning rate (e.g., the speed at which the algorithm reaches (converges to) optimal weights); learning rate decay (or weight decay); momentum; number of hidden layers; size of individual hidden layers; weight initialization scheme; dropout and gradient clipping thresholds; the C value and sigma value for SVMs; the k in k-nearest neighbors; number of branches in a decision tree; number of clusters in a clustering algorithm; vector size; word vector size for NLP and NLU; and/or the like.

The term "inference engine" at least in some examples refers to a component of a computing system that applies logical rules to a knowledge base to deduce new information.

The terms "instance-based learning" or "memory-based learning" in the context of ML at least in some examples refers to a family of learning algorithms that, instead of performing explicit generalization, compares new problem instances with instances seen in training, which have been stored in memory. Examples of instance-based algorithms include k-nearest neighbor, and the like), decision tree Algorithms (e.g., Classification And Regression Tree (CART), Iterative Dichotomiser 3 (ID3), C4.5, chi-square automatic interaction detection (CHAID), and the like), Fuzzy Decision Tree (FDT), and the like), Support Vector Machines (SVM), Bayesian Algorithms (e.g., Bayesian network (BN), a dynamic BN (DBN), Naive Bayes, and the like), and ensemble algorithms (e.g., Extreme Gradient Boosting, voting ensemble, bootstrap aggregating ("bagging"), Random Forest and the like.

The term "intelligent agent" at least in some examples refers to an a software agent or other autonomous entity which acts, directing its activity towards achieving goals upon an environment using observation through sensors and consequent actuators (e.g. it is intelligent). Intelligent agents may also learn or use knowledge to achieve their goals.

The term "iteration" at least in some examples refers to the repetition of a process in order to generate a sequence of outcomes, wherein each repetition of the process is a single iteration, and the outcome of each iteration is the starting point of the next iteration. Additionally or alternatively, the term "iteration" at least in some examples refers to a single update of a model's weights during training.

The term "Kullback-Leibler divergence" at least in some examples refers to a measure of how one probability distribution is different from a reference probability distribution. The "Kullback-Leibler divergence" may be a useful distance measure for continuous distributions and is often useful when performing direct regression over the space of (discretely sampled) continuous output distributions. The term "Kullback-Leibler divergence" may also be referred to as "relative entropy".

The term "knowledge base" at least in some examples refers to any technology used to store complex structured and/or unstructured information used by a computing system.

The term "knowledge distillation" in machine learning, at least in some examples refers to the process of transferring knowledge from a large model to a smaller one.

The term "logit" at least in some examples refers to a set of raw predictions (e.g., non-normalized predictions) that a classification model generates, which is ordinarily then passed to a normalization function such as a softmax function for models solving a multi-class classification problem. Additionally or alternatively, the term "logit" at least in some examples refers to a logarithm of a probability. Additionally or alternatively, the term "logit" at least in some examples refers to the output of a logit function. Additionally or alternatively, the term "logit" or "logit function" at least in some examples refers to a quantile function associated with a standard logistic distribution. Additionally or alternatively, the term "logit" at least in some examples refers to the inverse of a standard logistic function. Additionally or alternatively, the term "logit" at least in some examples refers to the element-wise inverse of the sigmoid function. Additionally or alternatively, the term "logit" or "logit function" at least in some examples refers to a function that represents probability values from 0 to 1, and negative infinity to infinity. Additionally or alternatively, the term "logit" or "logit function" at least in some examples refers to a function that takes a probability and produces a real number between negative and positive infinity.

The term "loss function" or "cost function" at least in some examples refers to an event or values of one or more variables onto a real number that represents some "cost" associated with the event. A value calculated by a loss function may be referred to as a "loss" or "error". Additionally or alternatively, the term "loss function" or "cost function" at least in some examples refers to a function used to determine the error or loss between the output of an algorithm and a target value. Additionally or alternatively, the term "loss function" or "cost function" at least in some examples refers to a function are used in optimization problems with the goal of minimizing a loss or error.

The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process.

The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data).

The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/ML model", and the like may be used interchangeably.

The term "machine learning algorithm" or "ML algorithm" at least in some examples refers to an application, program, process, algorithm, and/or function that builds or estimates an ML model based on sample data or training data. Additionally or alternatively, the term "machine learning algorithm" or "ML algorithm" at least in some examples refers to a program, process, algorithm, and/or function that learns from experience w.r.t some task(s) and some performance measure(s)/metric(s), and an ML model is an object or data structure created after an ML algorithm is trained with training data. For purposes of the present disclosure, the terms "ML algorithm", "AI algorithm", "AI/ML algorithm", and the like may be used interchangeably. Additionally, although the term "ML algorithm" may refer to different concepts than the term "ML model," these terms may be used interchangeably for the purposes of the present disclosure.

The term "machine learning application" or "ML application" at least in some examples refers to an application, program, process, algorithm, and/or function that contains some AI/ML model(s) and application-level descriptions. Additionally or alternatively, the term "machine learning application" or "ML application" at least in some examples refers to a complete and deployable application and/or package that includes at least one ML model and/or other data capable of achieving a certain function and/or performing a set of actions or tasks in an operational environment. For purposes of the present disclosure, the terms "ML application", "AI application", "AI/ML application", and the like may be used interchangeably.

The term "machine learning entity" or "ML entity" at least in some examples refers to an entity that is either an ML model or contains an ML model and ML model-related metadata that can be managed as a single composite entity (in some examples, metadata may include, for example, the applicable runtime context for the ML model). For purposes of the present disclosure, the term "AI/ML entity" or "ML entity" at least in some examples refers to an entity that is either an AI/ML model and/or contains an AI/ML model and that can be managed as a single composite entity. Additionally, the term "ML entity training" at least in some examples refers to ML model training associated with an ML entity. Moreover, the term "AI/ML" may be used interchangeably with the terms "AI" and "ML" throughout the present disclosure.

The term "AI decision entity", "machine learning decision entity", or "ML decision entity" at least in some examples refers to an entity that applies a non-AI and/or non-ML based logic for making decisions that can be managed as a single composite entity.

The term "machine learning training", "ML training", or "MLT" at least in some examples refers to capabilities and associated end-to-end (e2e) processes to enable an ML training function to perform ML entity (or ML model) training (e.g., as defined herein). In some examples, ML training capabilities include interaction with other parties/entities to collect and/or format the data required for ML model training. Additionally or alternatively, "training an ML entity" refers to training one or more ML model(s) associated with an ML entity internally by an MLT function.

The term "machine learning model training" or "ML model training" at least in some examples refers to capabilities of an ML training function to take data, run the data through an ML model, derive associated loss, optimization, and/or objective/goal, and adjust the parameterization of the ML model based on the computed loss, optimization, and/or objective/goal.

The term "ML initial training" at least in some examples refers to ML entity training that generates an initial version of a trained ML entity.

The term "ML re-training" at least in some examples refers to MLT that generates a new version of a trained ML entity using the same type, but different values or distributions, of training data as that used to train the previous version of the ML entity. This new version of the trained ML entity (e.g., the re-trained ML entity) supports the same type of inference as the previous version of the ML entity, e.g., the data type of inference input and data type of inference output remain unchanged between the two versions of the ML entity

The term "machine learning training function", "ML training function", or "MLT function" at least in some examples refers to a (logical) function with MLT capabilities.

The term "AI/ML inference function" or "ML inference function" at least in some examples refers to a (logical) function (or set of functions) that employs an ML model and/or AI decision entity to conduct inference. Additionally or alternatively, the term "AI/ML inference function" or "ML inference function" at least in some examples refers to an inference framework used to run a compiled model in the inference host. In some examples, an "AIZML inference function" or "ML inference function" may also be referred to an "model inference engine", "ML inference engine", or "inference engine".

The term "machine learning workflow" or "ML workflow" at least in some examples refers to a process including data collection and preparation, AI/ML model building/generation; ML model training and testing; ML model deployment, ML model execution, ML model validation and/or verification; continuous, periodic and/or asynchronous ML model monitoring; ML model tuning, learning, and/or retraining. In some examples, the ML model monitoring includes self-monitoring or autonomous monitoring). In some examples, the ML model tuning, learning, and/or retraining includes self-tuning (or autonomous tuning), self-learning (or autonomous learning), and/or self-retraining (or autonomous retraining). The term "machine learning lifecycle" or "ML lifecycle" at least in some examples refers to process(es) of planning and/or managing the development, deployment, instantiation, and/or termination of an ML model and/or individual ML model components.

The term "matrix" at least in some examples refers to a rectangular array of numbers, symbols, or expressions, arranged in rows and columns, which may be used to represent an object or a property of such an object.

The terms "model parameter" and/or "parameter" in the context of ML, at least in some examples refer to values, characteristics, and/or properties that are learnt during training. Additionally or alternatively, "model parameter" and/or "parameter" in the context of ML, at least in some examples refer to a configuration variable that is internal to the model and whose value can be estimated from the given data. Model parameters are usually required by a model when making predictions, and their values define the skill of the model on a particular problem. Examples of such model parameters / parameters include weights (e.g., in an ANN); constraints; support vectors in a support vector machine (SVM); coefficients in a linear regression and/or logistic regression; word frequency, sentence length, noun or verb distribution per sentence, the number of specific character n-grams per word, lexical diversity, and the like, for natural language processing (NLP) and/or natural language understanding (NLU); and/or the like.

The term "momentum" at least in some examples refers to an aggregate of gradients in gradient descent. Additionally or alternatively, the term "momentum" at least in some examples refers to a variant of the stochastic gradient descent algorithm where a current gradient is replaced with m (momentum), which is an aggregate of gradients.

The term "objective function" at least in some examples refers to a function to be maximized or minimized for a specific optimization problem. In some cases, an objective function is defined by its decision variables and an objective. The objective is the value, target, or goal to be optimized, such as maximizing profit or minimizing usage of a particular resource. The specific objective function chosen depends on the specific problem to be solved and the objectives to be optimized. Constraints may also be defined to restrict the values the decision variables can assume thereby influencing the objective value (output) that can be achieved. During an optimization process, an objective function's decision variables are often changed or manipulated within the bounds of the constraints to improve the objective function's values. In general, the difficulty in solving an objective function increases as the number of decision variables included in that objective function increases. The term "decision variable" refers to a variable that represents a decision to be made.

The term "optimization" at least in some examples refers to an act, process, or methodology of making something (e.g., a design, system, or decision) as fully perfect, functional, or effective as possible. Optimization usually includes mathematical procedures such as finding the maximum or minimum of a function. The term "optimal" at least in some examples refers to a most desirable or satisfactory end, outcome, or output. The term "optimum" at least in some examples refers to an amount or degree of something that is most favorable to some end. The term "optima" at least in some examples refers to a condition, degree, amount, or compromise that produces a best possible result. Additionally or alternatively, the term "optima" at least in some examples refers to a most favorable or advantageous outcome or result.

The term "probability" at least in some examples refers to a numerical description of how likely an event is to occur and/or how likely it is that a proposition is true. The term "probability distribution" at least in some examples refers to a mathematical function that gives the probabilities of occurrence of different possible outcomes for an experiment or event.

The term "probability distribution" at least in some examples refers to a function that gives the probabilities of occurrence of different possible outcomes for an experiment or event. Additionally or alternatively, the term "probability distribution" at least in some examples refers to a statistical function that describes all possible values and likelihoods that a random variable can take within a given range (e.g., a bound between minimum and maximum possible values). A probability distribution may have one or more factors or attributes such as, for example, a mean or average, mode, support, tail, head, median, variance, standard deviation, quantile, symmetry, skewness, kurtosis, and the like. A probability distribution may be a description of a random phenomenon in terms of a sample space and the probabilities of events (subsets of the sample space). Example probability distributions include discrete distributions (e.g., Bernoulli distribution, discrete uniform, binomial, Dirac measure, Gauss-Kuzmin distribution, geometric, hypergeometric, negative binomial, negative hypergeometric, Poisson, Poisson binomial, Rademacher distribution, Yule-Simon distribution, zeta distribution, Zipf distribution, and the like), continuous distributions (e.g., Bates distribution, beta, continuous uniform, normal distribution, Gaussian distribution, bell curve, joint normal, gamma, chi-squared, non-central chi-squared, exponential, Cauchy, lognormal, logit-normal, F distribution, t distribution, Dirac delta function, Pareto distribution, Lomax distribution, Wishart distribution, Weibull distribution, Gumbel distribution, Irwin-Hall distribution, Gompertz distribution, inverse Gaussian distribution (or Wald distribution), Chernoffs distribution, Laplace distribution, Polya-Gamma distribution, and the like), and/or joint distributions (e.g., Dirichlet distribution, Ewens's sampling formula, multinomial distribution, multivariate normal distribution, multivariate t-distribution, Wishart distribution, matrix normal distribution, matrix t distribution, and the like).

The term "probability density function" or "PDF" at least in some examples refers to a function whose value at any given sample (or point) in a sample space can be interpreted as providing a relative likelihood that the value of the random variable would be close to that sample. Additionally or alternatively, the term "probability density function" or "PDF" at least in some examples refers to a probability of a random variable falling within a particular range of values. Additionally or alternatively, the term "probability density function" or "PDF" at least in some examples refers to a value at two different samples can be used to infer, in any particular draw of the random variable, how much more likely it is that the random variable would be close to one sample compared to the other sample.

The term "precision" at least in some examples refers to the closeness of the two or more measurements to each other. The term "precision" may also be referred to as "positive predictive value".

The term "predictive service" at least in some examples refers to a service model which provides reliable performance, but allowing a specified variance in the measured performance criteria.

The term "quantile" at least in some examples refers to a cut point(s) dividing a range of a probability distribution into continuous intervals with equal probabilities, or dividing the observations in a sample in the same way. The term "quantile function" at least in some examples refers to a function that is associated with a probability distribution of a random variable, and the specifies the value of the random variable such that the probability of the variable being less than or equal to that value equals the given probability. The term "quantile function" may also be referred to as a percentile function, percent-point function, or inverse cumulative distribution function.

The term "recall" at least in some examples refers to the fraction of relevant instances that were retrieved, or he number of true positive predictions or inferences divided by the number of true positives plus false negative predictions or inferences. The term "recall" may also be referred to as "sensitivity".

The terms "regression algorithm" and/or "regression analysis" in the context of ML at least in some examples refers to a set of statistical processes for estimating the relationships between a dependent variable (often referred to as the "outcome variable") and one or more independent variables (often referred to as "predictors", "covariates", or "features"). Examples of regression algorithms/models include logistic regression, linear regression, gradient descent (GD), stochastic GD (SGD), and the like.

The term "reinforcement learning" or "RL" at least in some examples refers to a goal-oriented learning technique based on interaction with an environment. In RL, an agent aims to optimize a long-term objective by interacting with the environment based on a trial and error process. Examples of RL algorithms include Markov decision process, Markov chain, Q-learning, multi-armed bandit learning, temporal difference learning, and deep RL. The term "multi-armed bandit problem", "K-armed bandit problem", "N-armed bandit problem", or "contextual bandit" at least in some examples refers to a problem in which a fixed limited set of resources must be allocated between competing (alternative) choices in a way that maximizes their expected gain, when each choice's properties are only partially known at the time of allocation, and may become better understood as time passes or by allocating resources to the choice. The term "contextual multi-armed bandit problem" or "contextual bandit" at least in some examples refers to a version of multi-armed bandit where, in each iteration, an agent has to choose between arms; before making the choice, the agent sees a d-dimensional feature vector (context vector) associated with a current iteration, the learner uses these context vectors along with the rewards of the arms played in the past to make the choice of the arm to play in the current iteration, and over time the learner's aim is to collect enough information about how the context vectors and rewards relate to each other, so that it can predict the next best arm to play by looking at the feature vectors.

The term "reward function", in the context of RL, at least in some examples refers to a function that outputs a reward value based on one or more reward variables; the reward value provides feedback for an RL policy so that an RL agent can learn a desirable behavior. The term "reward shaping", in the context of RL, at least in some examples refers to a adjusting or altering a reward function to output a positive reward for desirable behavior and a negative reward for undesirable behavior.

The term "sample space" in probability theory (also referred to as a "sample description space" or "possibility space") of an experiment or random trial at least in some examples refers to a set of all possible outcomes or results of that experiment.

The term "search space", in the context of optimization, at least in some examples refers to an a domain of a function to be optimized. Additionally or alternatively, the term "search space", in the context of search algorithms, at least in some examples refers to a feasible region defining a set of all possible solutions. Additionally or alternatively, the term "search space" at least in some examples refers to a subset of all hypotheses that are consistent with the observed training examples. Additionally or alternatively, the term "search space" at least in some examples refers to a version space, which may be developed via machine learning.

The term "self-attention" at least in some examples refers to an attention mechanism relating different positions of a single sequence in order to compute a representation of the sequence. Additionally or alternatively, the term "self-attention" at least in some examples refers to an attention mechanism applied to a single context instead of across multiple contexts wherein queries, keys, and values are extracted from the same context.

The term "softmax" or "softmax function" at least in some examples refers to a generalization of the logistic function to multiple dimensions; the "softmax function" is used in multinomial logistic regression and is often used as the last activation function of a neural network to normalize the output of a network to a probability distribution over predicted output classes.

The term "supervised learning" at least in some examples refers to an ML technique that aims to learn a function or generate an ML model that produces an output given a labeled data set. Supervised learning algorithms build models from a set of data that contains both the inputs and the desired outputs. For example, supervised learning involves learning a function or model that maps an input to an output based on example input-output pairs or some other form of labeled training data including a set of training examples. Each input-output pair includes an input object (e.g., a vector) and a desired output object or value (referred to as a "supervisory signal"). Supervised learning can be grouped into classification algorithms, regression algorithms, and instance-based algorithms.

The term "standard deviation" at least in some examples refers to a measure of the amount of variation or dispersion of a set of values. Additionally or alternatively, the term "standard deviation" at least in some examples refers to the square root of a variance of a random variable, a sample, a statistical population, a dataset, or a probability distribution.

The term "stochastic" at least in some examples refers to a property of being described by a random probability distribution. Although the terms "stochasticity" and "randomness" are distinct in that the former refers to a modeling approach and the latter refers to phenomena themselves, for purposes of the present disclosure these two terms may be used synonymously unless the context indicates otherwise.

The term "tensor" at least in some examples refers to an object or other data structure represented by an array of components that describe functions relevant to coordinates of a space. Additionally or alternatively, the term "tensor" at least in some examples refers to a generalization of vectors and matrices and/or may be understood to be a multidimensional array. Additionally or alternatively, the term "tensor" at least in some examples refers to an array of numbers arranged on a regular grid with a variable number of axes. At least in some examples, a tensor can be defined as a single point, a collection of isolated points, or a continuum of points in which elements of the tensor are functions of position, and the Tensor forms a "tensor field". At least in some examples, a vector may be considered as a one dimensional (1D) or first order tensor, and a matrix may be considered as a two dimensional (2D) or second order tensor. Tensor notation may be the same or similar as matrix notation with a capital letter representing the tensor and lowercase letters with subscript integers representing scalar values within the tensor.

The term "tuning" or "tune" at least in some examples refers to a process of adjusting model parameters or hyperparameters of an ML model in order to improve its performance. Additionally or alternatively, the term "tuning" or "tune" at least in some examples refers to a optimizing an ML model's model parameters and/or hyperparameters. In some examples, the particular model parameters and/or hyperparameters that are selected for adjustment, and the optimal values for the model parameters and/or hyperparameters vary depending on various aspects of the ML model, the training data, ML application and/or use cases, and/or other parameters, conditions, or criteria.

The term "unsupervised learning" at least in some examples refers to an ML technique that aims to learn a function to describe a hidden structure from unlabeled data. Unsupervised learning algorithms build models from a set of data that contains only inputs and no desired output labels. Unsupervised learning algorithms are used to find structure in the data, like grouping or clustering of data points. Examples of unsupervised learning are K-means clustering, principal component analysis (PCA), and topic modeling, among many others. The term "semi-supervised learning at least in some examples refers to ML algorithms that develop ML models from incomplete training data, where a portion of the sample input does not include labels.

The term "vector" at least in some examples refers to a one-dimensional array data structure. Additionally or alternatively, the term "vector" at least in some examples refers to a tuple of one or more values called scalars.

The terms "sparse vector", "sparse matrix", and "sparse array" at least in some examples refer to an input vector, matrix, or array including both non-zero elements and zero elements.

The terms "dense vector", "dense matrix", and "dense array" at least in some examples refer to an input vector, matrix, or array including all non-zero elements.

The term "ZVC data vector" at least in some examples refers to a vector that includes all non-zero elements of a vector in the same order as a sparse vector, but excludes all zero elements. The term "ZVC matrix" at least in some examples refers to a matrix that includes all non-zero elements of a matrix in the same order as a sparse matrix, but excludes all zero elements. The term "ZVC array" at least in some examples refers to an array that includes all non-zero elements of an array in the same order as a sparse array, but excludes all zero elements.

The term "instrumentation" at least in some examples refers to measuring instruments used for indicating, measuring, and/or recording physical quantities and/or physical events. Additionally or alternatively, the term "instrumentation" at least in some examples refers to the measure of performance (e.g., of SW and/or HW (sub)systems) in order to diagnose errors and/or to write trace information. The term "trace" or "tracing" at least in some examples refers to logging or otherwise recording information about a program's execution and/or information about the operation of a component, subsystem, device, system, and/or other entity; in some examples, "tracing" is used for debugging and/or analysis purposes.

The term "telemetry" at least in some examples refers to the in situ collection of measurements, metrics, or other data (often referred to as "telemetry data" or the like) and their conveyance to another device or equipment. Additionally or alternatively, the term "telemetry" at least in some examples refers to the automatic recording and transmission of data from a remote or inaccessible source to a system for monitoring and/or analysis.

The term "telemetry data" at least in some examples refers to the measurements, metrics, or other data collected via instrumentation and/or collected by a telemeter, a telemetry system, and/or telemetry pipeline. Examples of telemetry data can include system-based metrics such as for example, assists (e.g., floating point (FP) assists, MS assists, and the like), available core time, average bandwidth (BW), core frequency, core usage, frame time, latency, logical core utilization, physical core utilization, effective CPU utilization, effective physical core utilization, effective time, elapsed time, execution stalls, task time, back-end bound, memory BW, contested accesses (e.g., intra-compute tile, intra-core, and/or the like), cache metrics/measurements for individual cache devices/elements (e.g., cache hits, cache misses, cache hit rate, cache bound, stall cycles, cache pressure, and the like), pressure metrics (e.g., memory pressure, cache pressure, register pressure, and the like), translation lookaside buffer (TLB) overhead (e.g., average miss penalty, memory accesses per miss, and so forth), input/output TLB (IOTLB) overhead, first-level TLB (UTLB) overhead, port utilization for individual ports, BACLEARS (e.g., fraction of cycles lost due to the Branch Target Buffer (BTB) prediction corrected by a later branch predictor), bad speculation (e.g., cancelled pipeline slots, back-end bound pipeline slots), FP metrics (e.g., FP arithmetic, FP assists, FP scalars, FP vector, FP x87, and the like), microarchitecture usage, microcode sequencer (MS) metrics, GPU metrics, OpenCL^{™} kernel analysis metrics, energy analysis metrics, user interface metrics, and/or any other metrics such as those discussed herein and/or those discussed in Intel^{®} VTune^{™} Profiler User Guide, Intel Corp., version 2023.1 (31 Mar. 2023) ("[VTune]"), the contents of which are hereby incorporated by reference in its entirety. Additionally or alternatively, "telemetry data" can include performance measurements (see e.g., [TS28552]), key performance indicators (KPIs) (see e.g., [TS28554]), performance threshold monitoring events (see e.g., [TS28532]), and/or fault supervision events (see e.g., [TS28532]). Additionally or alternatively, "telemetry data" can include any of the measurements/metrics discussed herein; network identifiers (IDs), session IDs, application instance IDs, and/or the like (including any of those discussed herein); and/or any other type of data such as any of those discussed herein.

The term "telemeter" at least in some examples refers to a device used in telemetry, and at least in some examples, includes sensor(s), a communication path, and a control device.

The term "telemetry pipeline" at least in some examples refers to a set of elements/entities/components in a telemetry system through which telemetry data flows, is routed, or otherwise passes through the telemetry system. Additionally or alternatively, the term "telemetry pipeline" at least in some examples refers to a system, mechanism, and/or set of elements/entities/components that takes collected data from an agent and leads to the generation of insights via analytics. Examples of entities/elements/components of a telemetry pipeline include a collector or collection agent, analytics function, data upload and transport (e.g., to the cloud or the like), data ingestion (e.g., Extract Transform and Load (ETL)), storage, and analysis functions.

The term "telemetry system" at least in some examples refers to a set of physical and/or virtual components that interconnect to provide telemetry services and/or to provide for the collection, communication, and analysis of data

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, and/or the like). Furthermore, various standards (e.g, 3GPP, ETSI, and/or the like) may define various message formats, PDUs, containers, frames, and/or the like, as comprising a sequence of optional or mandatory data elements (DEs), data frames (DFs), information elements (IEs), and/or the like. However, it should be understood that the requirements of any particular standard should not limit the examples discussed herein, and as such, any combination of containers, frames, DFs, DEs, IEs, values, actions, and/or features are possible in various examples, including any combination of containers, DFs, DEs, values, actions, and/or features that are strictly required to be followed in order to conform to such standards or any combination of containers, frames, DFs, DEs, IEs, values, actions, and/or features strongly recommended and/or used with or in the presence/absence of optional elements.

Aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. A computer-readable medium comprising instructions to cause an electronic device of a distributed cloud and communication system, upon execution of the instructions by one or more processors of the electronic device, to:
monitor a performance of communication and computing aspects of the distributed cloud and communication system;
perform, based on the performance of communication and computing aspects of the distributed cloud and communication system, at least one of a scaling of resources for the communication and computing aspects for a workload instance and/or a healing of the workload instance.

2. The computer-readable medium of claim 1, wherein the instructions further cause the electronic device to collect measurements and/or healthiness data for one or more of the following layers or aspects:
an infrastructure layer;
a virtualization layer;
a network function layer; and/or
an application layer.

3. The computer-readable medium of claim 2, wherein the measurements and/or the healthiness data for the network function layer and the application layer are representative of an end-to-end performance for one or more end users.

4. The computer-readable medium of any one of claims 2 or 3, wherein the measurements and/or healthiness data are collected in real-time or near-real time.

5. The computer-readable medium of any one of claims 1 to 4, wherein the instructions further cause the electronic device to conduct analytics for data used to monitor the performance of communication and computing aspects of the distributed cloud and communication system to obtain an analytics report and provide the analytics report to a consumer.

6. The computer-readable medium of any one of claims 1 to 5, wherein the instructions further cause the electronic device to select a compute node of the distributed cloud and communication system that meets combined communication and computing requirements of the workload instance.

7. The computer-readable medium of any one of claims 1 to 6, wherein the scaling comprises one of the following:
allocating more resources for the workload instance by scaling out or scaling up;
reducing the resources for the workload instance by scaling in or scaling down.

8. The computer-readable medium of any one of claims 1 to 7, wherein the scaling is within a compute node or across multiple compute nodes.

9. The computer-readable medium of any one of claims 1 to 8, wherein the scaling is triggered automatically or by a consumer on demand.

10. The computer-readable medium of claim 9, wherein the scaling is triggered automatically based on a policy for the scaling provided by the consumer.

11. The computer-readable medium of claim 10, wherein the policy comprises at least one of load thresholds and/or energy efficiency goals.

12. The computer-readable medium of any one of claims 1 to 11, wherein the instructions further cause the electronic device to detect that the workload instance is not running in a healthy status.

13. The computer-readable medium of any one of claims 1 to 12, wherein the performance of communication and computing aspects comprise at least one of a latency representative of a communication performance or a response time representative of a computing performance.

14. A method for a distributed cloud and communication system, the method comprising:
monitoring a performance of communication and computing aspects of the distributed cloud and communication system;
performing, based on the performance of communication and computing aspects of the distributed cloud and communication system, at least one of a scaling of resources for the communication and computing aspects for a workload instance and/or a healing of the workload instance.

15. An apparatus of a distributed cloud and communication system, the apparatus comprising a memory, and processor circuitry configured to:
monitor a performance of communication and computing aspects of the distributed cloud and communication system;
perform, based on the performance of communication and computing aspects of the distributed cloud and communication system, at least one of a scaling of resources for the communication and computing aspects for a workload instance and/or a healing of the workload instance.
